(19) **Europäisches Patentamt**

**European Patent Office**

**Office européen des brevets**

(11) **EP 0 625 276 B1**

(12) **EUROPEAN PATENT SPECIFICATION**

(45) Date of publication and mention
of the grant of the patent:
**22.08.2001 Bulletin 2001/34**

(51) Int Cl.⁷: $G09G\ 3/02$, $H04N\ 3/14$,
$G06F\ 3/033$, $G06K\ 11/08$

(21) Application number: **93904791.6**

(22) Date of filing: **02.02.1993**

(86) International application number:
**PCT/US93/00874**

(87) International publication number:
**WO 93/15496 (05.08.1993 Gazette 1993/19)**

(54) **OPTICAL SYSTEM AUXILIARY INPUT CALIBRATION ARRANGEMENT AND METHOD OF USING SAME**

EICHSYSTEM FUER ZUSAETZLICHE EINGANGSIGNALE IN EINEM OPTISCHEN SYSTEM UND VERWENDUNGSVERFAHREN

EQUIPEMENT D'ETALONNAGE DE SIGNAUX D'ENTREE AUXILIAIRES A SYSTEME OPTIQUE ET PROCEDE D'UTILISATION CORRESPONDANT

(84) Designated Contracting States:
**DE ES FR GB IT NL**

(30) Priority: **03.02.1992 US 829880**
**03.02.1992 US 829916**
**12.01.1993 US 3304**

(43) Date of publication of application:
**23.11.1994 Bulletin 1994/47**

(73) Proprietor: **PROXIMA CORPORATION**
**San Diego, CA 92121 (US)**

(72) Inventors:
• **MARSCHALL, Roger**
**Solana Beach, CA 92075 (US)**
• **BUSCH, Jeffrey, W.**
**San Diego, CA 92102 (US)**

• **SHAPIRO, Leonid**
**Lakeside, CA 92040 (US)**
• **LIZON, Richard, M.**
**Escondido, CA 92025 (US)**
• **HAUCK, Lane, T.**
**San Diego, CA 92122 (US)**

(74) Representative: **Spall, Christopher John**
**Barker Brettell,**
**138 Hagley Road**
**Edgbaston, Birmingham B16 9PW (GB)**

(56) References cited:
US-A- 3 885 096      US-A- 4 280 135
US-A- 4 523 231      US-A- 4 745 402
US-A- 4 846 694      US-A- 5 138 304
US-A- 5 146 049

**Description**

**Cross-Reference to Related Applications**

This application is a continuation-in-part of U.S. patent application filed February 14, 1991 entitled "METHOD AND APPARATUS FOR CALIBRATING GEOMETRICALLY AN OPTICAL COMPUTER INPUT SYSTEM," and a continuation-in-part application of U.S. patent application Serial No. 07/955,831 filed October 2, 1992, now issued US Patent N° 5489923, entitled "METHOD AND APPARATUS FOR CALIBRATING AN OPTICAL COMPUTER INPUT SYSTEM," which is a division of U.S. patent application Serial No. 07/611,416, filed November 11, 1990, now issued US Patent N° 5181015, entitled "METHOD AND APPARATUS FOR CALIBRATING AN OPTICAL COMPUTER INPUT SYSTEM," both of which are continuation-in-part applications of U.S. patent application Serial No. 07/433,029 filed November 7, 1989, entitled "COMPUTER INPUT SYSTEM AND METHOD OF USING SAME," now abandoned.

**Technical Field**

This invention relates to the general field of an optical input arrangement and a method of using such an arrangement. More particularly, the present invention relates to an optical calibration technique for use with an optical system auxiliary input for facilitating accurate communication of user generated optical information utilized for display purposes. The present invention also relates to an auxiliary optical computer input system to facilitate recognition of an auxiliary optical input in a more precise and accurate manner. The present invention further relates to an optical auxiliary input technique for a system, which projects a computer generated image onto a viewing surface.

Background Art

In one type of optical information system computer generated images are projected onto a screen for viewing by a large number of people simultaneously. An important aspect of such a system is to enable a user to enter information interactively into the system to modify images, or generate additional images during presentation.

In one successful arrangement, a user points a light generating device, such as a flashlight or laser pointer, at a projected image to provide auxiliary information for the system. In this regard, such a system generally includes a video information source, such as a computer, and a display projection arrangement, such as an overhead projector, for projecting images of the video information onto a viewing surface. An image processing arrangement detects and processes the displayed image reflecting from the viewing surface. Such a system detects the high intensity light images produced by the hand-held light generating device, and discriminates them from background ambient light as well as the light produced by the video information source. In this manner, light signals from the hand-held light generating device can be detected on the viewing surface, and then used by the system for modifying subsequently the projected video information. Such an optical auxiliary input system is described in greater detail in the above-mentioned U.S. patent application Serial No. 07/433,029, now abandoned.

While such an optical system and method of using it has proven highly satisfactory, such a system must be calibrated to assure the accurate communication of the user generated high intensity light information. Such calibration includes using a calibration arrangement to align properly an optical sensing device associated with the image processing arrangement relative to the viewing surface and the projected images. Such a calibration arrangement and method of using it, are described in greater detail in the above-mentioned copending U.S. patent application Serial No. 07/611,416, now U.S. Patent N° 5 981 015.

While such a calibration arrangement and calibration method has proven highly satisfactory under low ambient lighting conditions, such as in a darkened room, it would be desirable to facilitate calibration of such an optical system under a wide variety of ambient lighting conditions, even bright ambient lighting conditions. Moreover, such a calibration technique should be able to be employed with many different types and kinds of optical systems generating images with substantially different luminance levels, as well as contrast levels between bright and dark images.

Such a calibration technique includes the proper alignment of the system, so that the viewing area of the system light sensing device is positioned properly to capture the entire computer generated projected image. Such alignment is desirable, because the viewing surface or screen of the system may be positioned at various distances and angular positions relative to the system light sensing device.

Also, the calibration of such a system entails sensitivity adjustments. Such adjustments are frequently necessary to accommodate for various projector light source intensities, different optical arrangements employed in conventional overhead projectors, and different optical characteristics exhibited by various liquid crystal display units employed in such systems. In this regard, calibration adjustments must be made to distinguish between the luminance levels of the various images reflecting from the viewing surface. Such adjustments however, are dependent upon several factors: the optical characteristics of the overhead projector including the power rating of projector lamps, the optical characteristics of the liquid crystal display unit employed, the distance the overhead projector is positioned from the viewing surface, and the intensity level of the user generated auxiliary images reflecting from the viewing surface.

Each of the above-mentioned factors directly affect the ability of the light sensing device to receive properly a reflected image, whether produced via the light generating pointing device or the projection display arrangement. In this regard, for example, if the overhead projector utilized in the projection display arrangement, is positioned a substantial distance from a viewing surface, the resulting image is large in size, but its overall luminance level is substantially reduced. Similarly, if an overhead projector employs a low intensity bulb, the projected image produced by the projector results in only a low luminance level.

Therefore, it would be highly desirable to have a new and improved calibration arrangement and method to calibrate the alignment, and improve the light sensitivity of an optical information system. Such an arrangement and method should enable a user to align conveniently the system optical sensing device to capture substantially the entire viewing area of a projected image. The arrangement and method should also enable the light sensitivity of the system to be adjusted so that it can be utilized with different types and kinds of liquid crystal display projection systems, employing different liquid crystal display panels and projection system.

Another form of light sensitivity calibration necessary for such an optical input information system, is a calibration adjustment to distinguish between ambient background light, light from the high intensity user controlled light generating device and the light produced from the video image reflecting from the viewing surface. In this regard, because of variations in ambient background lighting, as well as various different intensity levels of both the high intensity auxiliary control light image, and light produced by the projection system, it is, of course, desirable to distinguish properly the auxiliary light image on the viewing surface or screen, from the other light being reflected therefrom.

While the system has operated highly successful for many applications, it has been difficult, in some situations, to distinguish properly between the various light sources. For example, a light sensing device, such as a charge couple camera, must be positioned, not only in alignment to capture substantially the entire image reflecting from the viewing surface, but also it must be positioned in relatively close proximity to the viewing surface to produce a signal of sufficient potential to be processed for information extraction purposes.

Therefore, it would be highly desirable to have a new and improved calibration arrangement and method to calibrate the alignment and light sensitivity of an optical auxiliary input information system so that an adjustment can be made conveniently so the system produces a sufficient amount of light for information processing purposes.

Conventional charge couple cameras, by the nature of their sensitivity to different levels of light intensities, typically produce a "haystack" shaped waveform signal in response to sensing an image produced by a projection system, such as an overhead projector. The haystack signal is the resulting response developed because the scattered light source of the overhead projector typically emanates from a light bulb centrally disposed beneath the stage of the projector. Such a response thus, makes it difficult to accurately detect auxiliary light information reflecting at or near the boundaries of a reflected image.

Therefore, it would be highly desirable to have a new and improved calibration arrangement and method for discriminating accurately and reliably between various intensities of light reflecting from a viewing surface under a wide variety of conditions. Such arrangement and method should also discriminate between different beam intensities produced by an auxiliary input light generating device over a wide variety of distances.

While such an optical system and method of using it as disclosed in U.S. patent application Serial No. 07/433,029, now abandoned has proved highly satisfactory, the light generating device of such a system must be held in a very steady manner to assure the accurate communication of the user generated optical information. To help facilitate the accurate communication of such information, the light generating device generally includes a dual beam mode of operation. In this regard, the light generating device is activated by the user manually to generate a low intensity light beam to help the user position the auxiliary light beam on a desired location on the viewing screen without being sensed by the auxiliary input system. Once the low intensity beam is properly positioned in response to the actuation of a switch, the light generating device is then activated manually by the user to produce a high intensity light beam indicative of the auxiliary light information to interact with the computer. In this manner, the high intensity light signal from the hand held light generating device can generate auxiliary information for emulating a mouse. Such a dual beam light generating device and method of using it is described in greater detail in the above-mentioned U.S. patent application Serial No. 07/433,029.

While such a light generating input device and input method has proven highly satisfactory for many applications, it would be desirable to provide a new and improved optical input arrangement and method that would more closely emulate both the single click and double click mouse features of a mouse device in a more convenient manner. More particularly, while the dual beam feature greatly facilitates the single click feature, it has been difficult for a user to use such a device for the double click feature.

The optical auxiliary input system can perform various different control functions, including those performed by conventional computer mouse input device. In this regard, the optical input system can perform such operations as a "single click" a "double click" and a tracking operation as is well known in the art. It is very important that the optical



**EP 0 625 276 B1**

input device be able to function in a similar manner as a conventional computer mouse, since many application computer programs used today, are able to interface with a conventional mouse device for control purposes. In this manner, the optical input system should be compatible, more completely, with conventional application computer programs.

In this regard, the user must hold the light generating input device in such a steady manner, that the same location on the viewing screen is illuminated while the user turns the auxiliary light beam on and off in a repeated sequence. Thus, if the beam is not held at the same location on the viewing surface during the double click operation, the signal processing unit of the optical system can under certain circumstances misinterpret the auxiliary light information. For example, such a double actuation of the light could be interpreted as two, separate single click operations at two different locations on the screen.

One manner of overcoming this problem is to have a much larger area on the screen to be hit by the high intensity light beam so that if the hand of the user should move inadvertently, the double click would still be interpreted correctly. However, this would require undue and unwanted restrictions on application computer programs. It would be far more desirable to have the optical auxiliary input device be more fully compatible with the existing computer program formats.

Therefore, it would be highly desirable to have a new and improved optical auxiliary input arrangement and input method to more closely emulate a computer mouse type input device for use with an optical system. Such an arrangement and method should enable a user to emulate the mouse without the need of holding the auxiliary light image so steady that the auxiliary light information is projected precisely on the same location on the viewing screen during a double click operation.

The arrangement and method should also respond to the user in a fast and reliable manner to more completely emulate the functional features of a mouse input device. In this regard, such an arrangement should enable either a conventional computer mouse or the optical auxiliary input device, a light generating device, to communicate with the same video information source, whenever desired by the user, for modifying or changing displayed images in a simple and reliable manner.

In the past, projecting images onto a projection screen or other surface for viewing by a large number of people simultaneously, such as with transparencies and an overhead projector, provided a method for disseminating information in an efficient manner. However, because such transparencies were a fixed media, the user making the presentation was extremely limited in changing the form of the presentation except by using a large number of additional transparencies.

The ability of a user to change the form of a given presentation has been expanded significantly. In this regard, with the advancements in liquid crystal technology fixed media transparencies have evolved into dynamic images which are produced under the control of a computer or other video signal producing device. Thus, liquid crystal display panels have replaced the fixed transparencies to permit images, such as computer generated or video images, to be projected onto a screen or other surface for viewing purposes.

The capability of the presentation was expanded again when the user was given the ability to enter information interactively into the system in order to modify images, or generate additional images during the presentation, by simply directing a user controlled auxiliary beam of light onto specific areas of the projected image. In this manner, the user could interact with the computer or other device generating the projected image, in a manner similar to using a computer mouse control.

United States Patent No. 3,885,096 discloses a display control system where an operator sits at a control console having a rear projection screen and a keyboard. Using a pointing device, the user makes certain selections for retrieving microfiche or computer information. Specifically, the user utilizes the pointing device to provide coordinate data to the system for retrieving pre-stored images. Thereby the pointing device only accomplishes a selection function and does not address the wide range of functionality necessary for the successful use of a mouse. For example, the difficulty of using pointing devices to emulate a mouse double click is not addressed.

U.S. Patent No. 4,280,135 discloses an initializing procedure to synchronize a local pointer spot to a remote pointer spot. Such initialization is only to coordinate pointer movements at a local location to pointer movements at a remote location. Such coordination of movements does not address calibrating optical systems to adjust for a wide variety of light conditions and implementing fully functional mouse functions in an optical display system.

One such successful optical auxiliary input system is described in greater detail in the above-mentioned U. S. patent application Serial No. 07/901,253, now abandoned. The optical auxiliary input system described therein includes an arrangement wherein a user directs a high intensity light from a light generating device, such as a flashlight or a laser pointer, onto a relatively lower intensity projected image on a viewing area, such as a screen to provide auxiliary information for the system.

The system includes a video information source, such as a computer, and a display projection arrangement, such as an overhead projector, for projecting images of the video information onto the viewing surface. An image processing arrangement, including an optical sensing device, detects and processes the displayed image reflecting from the viewing surface. Such a system detects the high intensity light images produced by the hand-held light generating device, and discriminates the high intensity light images from background ambient light and light produced by the video information source. In this manner, light signals from the hand-held light generating device can be detected on the viewing surface, and then used by the system for modifying subsequently the projected video information.

The optical input light directed onto the viewing surface is detected by determining that the light intensity reflecting from the viewing surface has exceeded a predetermined reference level. In this regard, the high intensity auxiliary light source produces a brighter intensity light than the intensity of the projected image. While such a technique is satisfactory for most applications, under certain conditions, the high intensity input light shining on the viewing surface can go undetected. In this regard, if the input light is directed onto a portion of the projected image which is of a low intensity, the total light being reflected from the viewing surface will not exceed the predetermined reference, and thus the input light will not be detected. Thus, it would be highly desirable to have an even more precise and accurate detection technique for discriminating the auxiliary input signal from the projected image and the ambient light.

In order to function properly, such an auxiliary optical input system includes an optical sensing device, in the form of a video camera, associated with the image processing arrangement which must be properly aligned with the projected image. In this regard, the image must be completely within the area sensed by the optical sensing device.

Therefore, it would be desirable to have a new and improved technique which would enable a user to quickly and easily align the sensing device, such as the video camera, with the projected image on the viewing surface. In this regard, it would be highly desirable to have a technique whereby the user can align the sensing device in a manner of seconds, with little or no effort.

### Disclosure of Invention

Therefore, it is the principal object of the present invention to provide a new and improved arrangement and method for calibrating an optical system auxiliary input arrangement for proper alignment and light sensitivity for a wide variety of conditions.

Another object of the present invention is to provide such a new and improved optical system auxiliary input calibration arrangement and method to adjust the alignment and light sensitivity of an optical auxiliary input arrangement in a convenient manner so that the arrangement receives a sufficient amount of light for information processing purposes.

A further object of the present invention is to provide such a new and improved optical system auxiliary input calibration arrangement and method for discriminating accurately and reliably between various types of light sources associated with optical information systems.

Briefly, the above and further objects of the present invention are realized by providing a new and improved auxiliary input calibration arrangement and method for improved alignment and light sensitivity.

A method and optical system auxiliary input calibration arrangement accurately and reliably discriminate between a user generated image and a video source generated image, such as one produced by a computer. The calibration arrangement includes amplifier devices for increasing the strength of a video information signal indicative of the video generated image, and a user generated auxiliary input signal indicative of an auxiliary input light image, without increasing spurious ambient light signals. A discrimination circuit generates a detection signal whenever the amplified information signals are greater than a predetermined reference level signal. A microprocessor calculates the appropriate predetermined reference level signal based upon ambient lighting conditions, the strength of that portion of the information signal indicative of the video image, the type of optical system and the distance the optical system is disposed away from a viewing surface.

The microprocessor controls the exposure time of the light sensing device and selects an appropriate level of amplification for the output signal from the sensing device to increase light sensitivity between the video source generated light images as compared to the user generated auxiliary light images.

A dual beam light generating device produces both a low intensity laser beam for helping a user locate a desire portion of the video generated image and a high intensity laser beam for providing auxiliary input light of the desired position of the image illuminated by the low intensity beam.

Therefore, it is the principal object of the present invention to provide a new and improved optical auxiliary input arrangement and method for more closely emulating a mouse input device.

Another object of the present invention is to provide such a new and improved optical auxiliary input arrangement for emulating more closely a mouse double click feature, without requiring the user to hold the auxiliary light beam so steady that it must be projected precisely on the same position of a viewing screen during the double click operation.

A further object of the present invention is to provide such a new and improved optical auxiliary input arrangement and method, which enables either a conventional mouse or the inventive light generating device to communicate with the video information source for modifying or changing displayed images, whenever desired by the user, in a simple and reliable manner.

Briefly, the above and further objects of the present invention are realized by providing a new and improved optical input arrangement and input method for emulating the functional features of a mouse input device in a more accurate and facile manner.

The optical auxiliary input arrangement for an optical system projecting computer generated images includes an image processing unit and communication interface for detecting the speed at which two high intensity auxiliary light images flash onto the projected computer image, to interpret the images as a mouse double click feature.

The optical auxiliary input arrangement accurately and reliably discriminates between user generated double click information without the need of the user being so steady of hand as to cause the auxiliary light information beam to illuminate the same precise location on the viewing surface during the double click operation. The image processing unit and communication interface cooperate together to permit both a low speed mouse and the high speed light generating device to communicate with the system.

Therefore, it is the principal object of the present invention to provide a new and improved arrangement and method for detecting an optical input signal projected onto a projected image.

Another object of the present invention is to provide such a new and improved optical input arrangement and method for alignment adjustment in an even more convenient manner.

Briefly, the above and further objects of the present invention are realized by providing a new and improved optical input arrangement and method for improved detection of a high intensity auxiliary optical input signal image reflecting from a viewing surface.

An optical input arrangement and method includes an optical device for sensing a projected image and for detecting the presence of a high intensity optical input signal light by discriminating it from the entire projected image and the ambient light reflecting from a viewing surface. A determination is made as to when the differences in intensity of sequentially measured pixel intensity values of the light reflected from the viewing surface exceed a positive threshold amount and substantially immediately thereafter decreases more than a negative threshold amount, to facilitate an even more precise discrimination between the input signal image and the overall projected image. An alignment device generates an optical signal for facilitating the alignment of the arrangement to capture the entire image reflecting from the viewing surface.

### Brief Description of Drawings

The above mentioned and other objects and features of this invention and the manner of attaining them will become apparent, and the invention itself will be best understood by reference to the following description of the embodiment of the invention in conjunction with the accompanying drawings, wherein:

FIG. 1A is a pictorial view of a calibration arrangement, which is constructed according to the present invention, illustrating its use with an optical auxiliary input system;

FIG. 1B is a pictorial view of an optical input arrangement which is constructed according to the present invention, illustrating its use with an optical system;

FIG. 1C is a diagrammatic view of an optical input arrangement, which is constructed according to the present invention;

FIG. 2A is a symbolic block diagram of the calibration arrangement of FIG. 1A illustrating it coupled to an image processing apparatus forming part of the optical auxiliary input system of FIG. 1A;

FIG. 2B is a symbolic block diagram of an image processing arrangement forming part of the optical input arrangement of FIG. 1B;

FIG. 2C is a front elevational view of an optical sensing device of the optical input arrangement of FIG. 1C;

FIG. 3A is a symbolic block diagram of an amplifier device of the calibration arrangement of FIG. 2A;

FIGS. 3B to 10B are flow diagrams of the program of a microprocessor forming part of the image processing arrangement of FIG. 2B;

FIG. 3C is a schematic diagram of an alignment generating device of the optical input arrangement of FIG. 1C;

FIG. 4A is a symbolic block diagram of another calibration arrangement, which is constructed in accordance with the present invention;

FIGS. 4C-5C are firmware flow chart diagrams for a signal processing unit of the arrangement of FIG. 1C;

FIG. 5A is a symbolic block diagram of still yet another calibration arrangement, which is constructed in accordance with the present invention;

FIG. 6A is a symbolic block diagram of still yet another calibration arrangement, which is constructed in accordance with the present invention;

FIGS. 6C-7C are intensity level versus time graphs depicting a typical detecting operation of the signal processing unit of the arrangement of FIG. 1C.

FIG. 7A is graphical representation of the reflected light information signal generated by the light sensing device of FIG. 1A, illustrating the ambient background noise;

FIG. 8A is a graphical representation of the reflected light information signal of FIG. 1A, illustrating an insufficient black level signal voltage setting;

FIG. 9A is a graphical representation of the reflected light information signal of FIG. 7A, illustrating a properly adjusted black level signal voltage setting;

FIG. 10A is a graphical representation of the reflected light information signal generated by a light sensing device of FIG. 1A illustrating primary video information image;

FIG. 11A is a graphical representation of the reflected light information signal generated by the light sensing device of FIG. 1A illustrating both primary video image information and auxiliary image information;

FIG. 11B is a symbolic block diagram of a communication interface of FIG. 1B;

FIG. 12A is a graphical representation of the reflected light information signal of FIG. 11A, illustrating a discriminating reference level voltage;

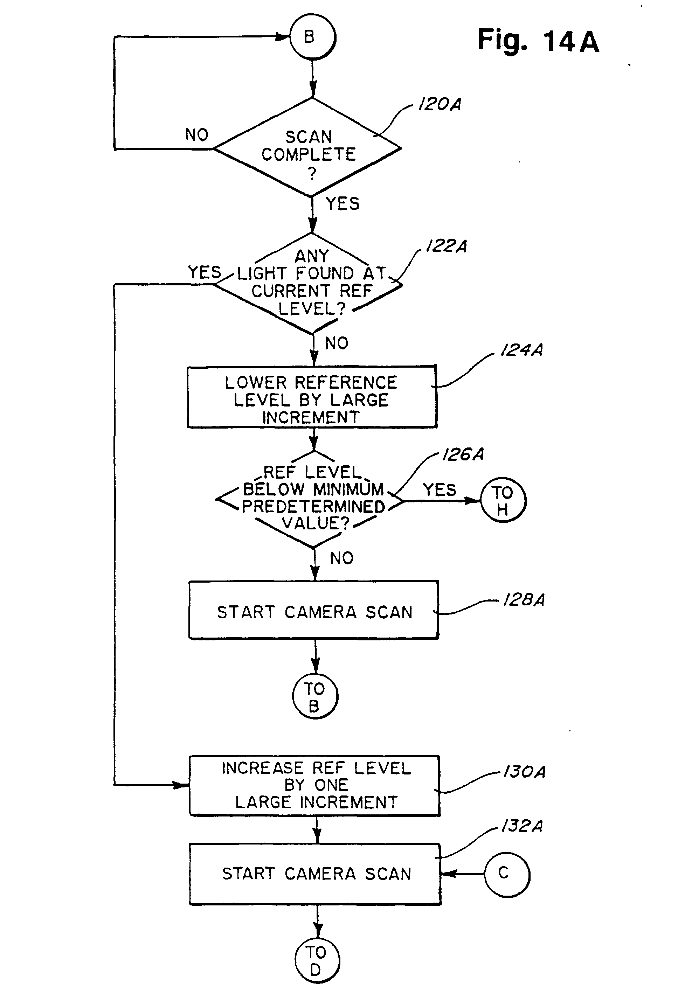

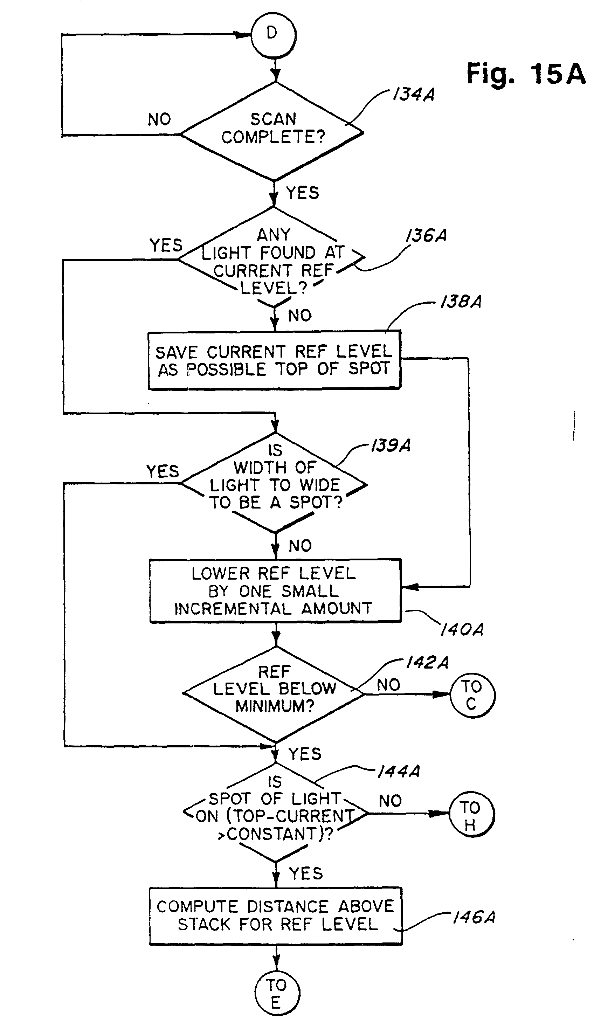

FIGS. 13A to 32A are flow diagrams of a program for a signal processing unit of FIG. 2A;

FIG. 33A is a graphical representation of reference level voltages for different contrast levels relative to given types of display device as a function of distance from a viewing screen of FIG. 1A;

FIG. 34A is a graphical representation of the reflected light information signal generated by a light sensing device of FIG. 1A; and

FIG. 35A is a schematic diagram of the dual beam light generating device of FIG. 1A.

## Best Mode for Carrying out the Invention

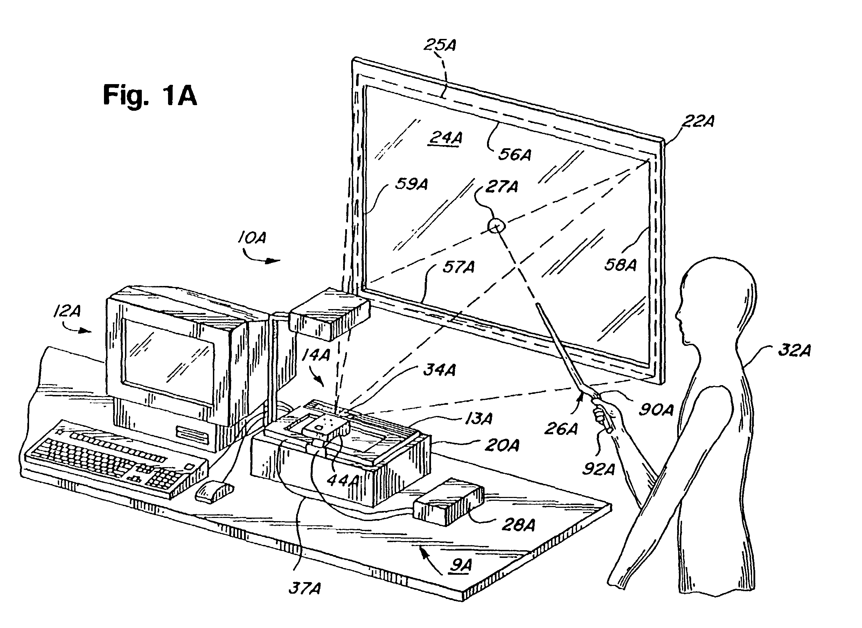

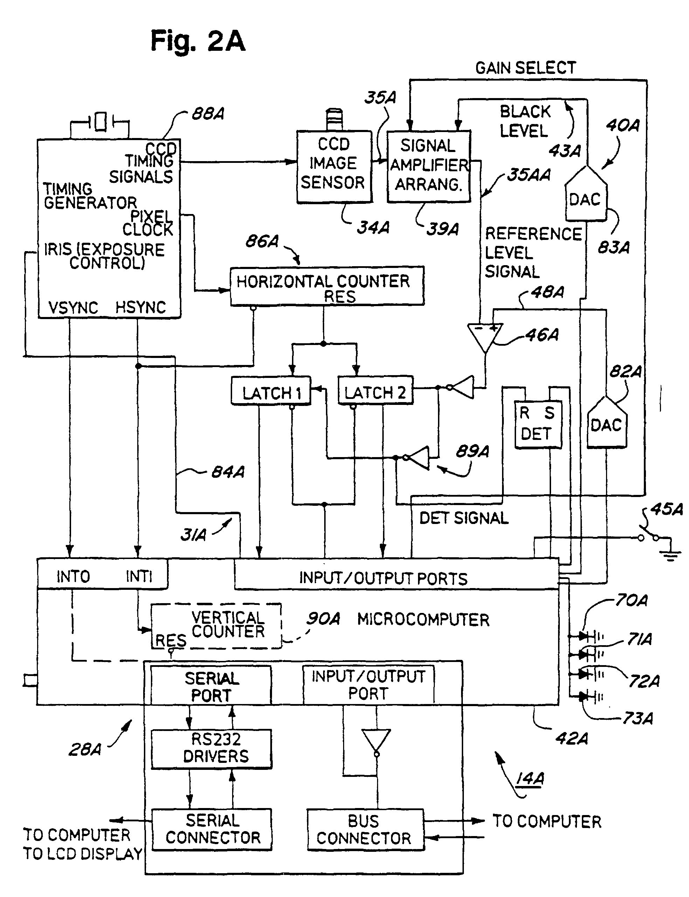

Referring now to the drawings, and more particularly to FIGS. 1A and 2A, there is illustrated a calibration arrangement generally indicated at 9A, for calibrating an optical auxiliary input system generally indicated at 10A, and which is constructed in accordance to the present invention.

The optical auxiliary input system 10A, is more fully described in the above mentioned U.S. patent application Serial No. 07,433,029, now abandoned, and includes a video information source, such as a personal computer 12A, and a liquid crystal display unit 13A for displaying a primary image 24A indicative of the primary image information generated by the computer 12A. The liquid crystal display unit 13A is positioned on the stage of a projector, such as an overhead projector 20A, for enabling the displayed primary image information to be projected onto a viewing surface, such as a screen 22A.

The optical auxiliary input system 10A also includes an image processing apparatus 14A and a dual beam light generating device 26A for generating auxiliary light information, such as a spot of reflected light 27A for facilitating the modifying or changing of the primary image information displayed by the liquid crystal display unit 13A.

The image processing apparatus 14A generally includes a light sensing device, such as a raster scan charge coupled device or camera 34A for generating a reflected light information signal 35A indicative of the luminance levels of the video images and other light reflecting from the surface of the screen 22A, and a signal processing unit 28A (FIG. 2A) coupled between the light sensing device 34A and the computer 12A by means (not shown) for converting the auxiliary light information generated by the device 26A into coordinate information to modify or change the displayed primary image information.

The light sensing device 34A as best seen in FIG. 1A, has a field of view, indicated generally at 25A, that is substantially larger than the primary image 24A. In this regard, the calibration arrangement 9A helps a user 32A align the light sensing device 34A relative to the viewing screen 22A, so that the field of view 25A of the device 34A is able to capture all of the displayed primary image 24A reflecting from the screen 22A. The calibration arrangement 9A, also helps facilitate adjusting the light sensitivity of image processing apparatus 14A, so that the signal processing unit 28A can accurately and reliably process the auxiliary light information for use by the computer 12A.

As best seen in FIG. 2A, the calibration arrangement 9A generally includes a signal amplifier circuit, generally indicated at 39A, for increasing the strength of the reflected light information signal 35A generated by the light sensing device 34A and a signal discrimination arrangement, generally indicated at 40A, for discriminating auxiliary light information from the other information components in the reflected light information signal 35A.

The signal discrimination arrangement 40A includes a comparator 46A, for facilitating discriminating between signals indicative of the various sources of light reflecting from the viewing surface 22A and a microprocessor 42A (FIG. 2A) for controlling a reference level signal 48A utilized by the comparator 46A for discrimination purposes. In this regard, for discrimination purposes, it should be understood that the light reflecting from the viewing surface 22A, has a plurality of luminance levels generally including background ambient light, primary image light, such as the image 24A, indicative of primary image information, and user 32A generated auxiliary image light, such as the spot of light 27A, indicative of auxiliary light information.

The microprocessor 42A also controls the exposure time of the light sensing device 34A, gain selection for the amplifier arrangement 39A, and an offset black level signal 43A that will be described hereinafter in greater detail.

The calibration arrangement 9A further includes an interactive position device 44A having a set of light emitting diodes 70A-73A for helping a user 32A to align the device 34A so that its field of view 25A captures the entire image 24A reflecting from the viewing surface 22A. The positioning device 44A is more fully described in copending U.S. patent application Serial No. 07/611,416, now U.S. Patent 5 818 015, and will not be described in further detail.

For the purpose of calibration and alignment, the firmware of the microprocessor 42A includes a set of calibration algorithms to facilitate the alignment of the light sensing device 34A relative to the optical auxiliary input system 10A. The calibration algorithms include a field of view alignment algorithm 100A for user interactive alignment of the light sensing device 34A under normal ambient and harsh ambient lighting conditions, and a light sensitivity algorithm 300A for adjusting the light sensitivity of the signal discrimination arrangement 40A for facilitating detection and tracking of auxiliary light images. Each of the above mentioned algorithms will be described hereinafter in greater detail.

Considering now the operation of the calibration arrangement 9A, when the computer 12A commences generating video information, the liquid crystal display unit 13A generates an initiation signal that is coupled to calibration arrangement 9A via a control cable 37A. The calibration arrangement 9A, in response to the initiation signal, generates an audible sound by means not shown to notify the user 32A that he or she may now initiate the calibration process.

To start the calibration process, the user 32A depresses a calibration button 45A located on the positioning device 44A. When the user 32A depresses the button 45A the calibration 9A apparatus via its program automatically instruct the user 32A through visual prompts via the light emitting diodes 70A-73A, how to position the device 44A so that the field of view 25A of the charge couple device 34A captures the entire image 24A reflecting from the viewing surface 22A. In this regard, the field of view alignment algorithm 100A includes a normal alignment subroutine 150A that utilizes the edge portions of the reflected video image to align the device 34A, and an alternative alignment subroutine 200A if the background ambient lighting condition are sufficiently harsh or if the luminance level of the reflected video image is sufficiently attenuated to prevent the normal alignment subroutine 150A to effectively align the device 34A.

In the event the device 34A can not be aligned via the normal alignment subroutine 150A, the calibration arrangement 9A generates a distinguishable audible sound to notify the user 32A that he or she must use the alternative method of alignment. In this regard, the user 32A must depress the button 45A again and then activate the light generating device 26A to cause a high intensity auxiliary light image, such as the light spot 27A, to be reflected from the center of the projected image. The calibration arrangement 9A responds to the user via the alternative field of view alignment subroutine 200A by using the auxiliary light image 27A for aligning the light sensing device 34A.

Regardless of which of the subroutines 150A, 200A is utilized, both subroutines 150A and 200A cause the light emitting diodes 70A-73A to turn on and off in various configurations to provide the user 32A with visual prompts for aligning the light sensing device 34A via the positioning device 44A. Once the field of view 25A of the device 34A capture the center portion of image 24A, all of the diodes 70A-73A are de-energized to notify the user 32A that the device 34A is properly aligned.

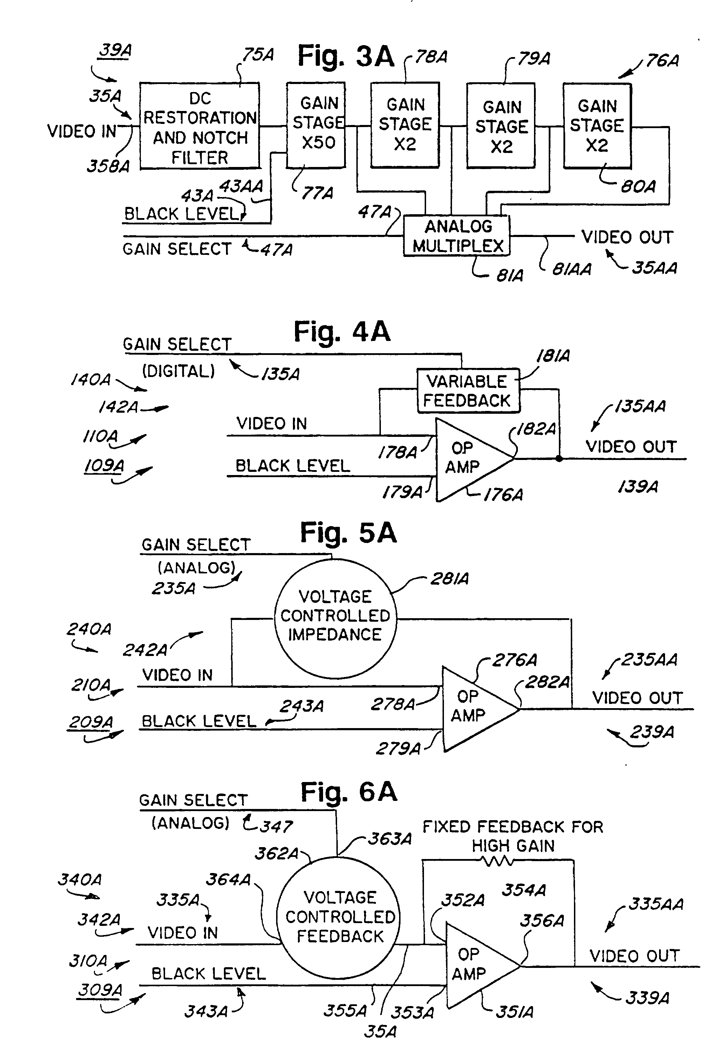

Once the device 34A has been properly aligned to capture the entire video image 24A, the program initiates the light sensitivity procedures to set up the internal light sensitivity factors for the arrangement 40A. Such internal light sensitivity factors include a black level factor determined by the voltage potential of the black level signal 43A, a reference level factor determined by the voltage potential of the reference level signal 48A, and a gain factor determined by the voltage potential of a gain select signal 47A (FIG. 3A). Each of these factors will be described in greater detail hereinafter.

Once the sensitivity factors have been set up the user 32A causes a spot of light to be reflected on and off at each respective corner of the image 24A, so the optical auxiliary input system 10A will be able to generate accurate and reliable coordinate information in response to detecting a spot of light produced by the device 26A. This latter process is more fully described in copending U.S. patent application Serial No. 07/611,416 and will not be described in further detail.

It should be understood however, that the above described technique enables the microprocessor 42A to be informed of the raster scan coordinate locations of the charge couple device 34A that correspond to the corner coordinate locations of the projected image. The microprocessor 42A then utilizes this acquired information to compute the conversion of the charge coupled coordinate location information into displayed image coordinate information that corresponds to pixel locations in the projected image 24A. The method of computation is more fully described in copending U.S. patent application 07/656,803, now abandoned.

From the foregoing discussion, one skilled in the art, will understand that once the processing unit 28A has acquired the above mentioned calibration information, the optical auxiliary input system 10A via user generated auxiliary light images can supply auxiliary video information to the computer 12A, which in turn, can generate primary video information that corresponds to the exact location of the auxiliary light image., Thus, prior to any video image being displayed by the display unit 13A, via computer generated video information, the optical auxiliary input system 10A can generate in a completely asynchronous manner, independent auxiliary video information.

To align the charge couple device 34A so that its field of view captures the entire primary image 24A, the microprocessor 42A generates an exposure rate or time signal 31A that causes the charge couple device 34A to produce the reflected light information signal 35A. In this regard, if the exposure time selected for the charge coupled device 34A is not sufficient to enable the device 34A to generate an output signal of sufficient magnitude, the microprocessor 42A will increase the gain of the signal amplifier circuit 39A relative to the exposure time. The microprocessor 42A repeats this adjustment until proper gain and exposure time levels are determined.

The microprocessor 42A also causes the reference level signal to be set near zero to enable the output signal from the charge coupled device 34A to be passed by the comparator 46A. In this regard, the signal passed by the comparator 46A is coupled to the microprocessor 42A in the form of coordinate information that enables the microprocessor 42A to determine the size of a captured image relative to certain prestored expected maximum and minimum coordinate value.

After comparing the coordinate information with the maximum and minimum values, the microprocessor 42A determines the direction the field of view 25A of device 34A needs to be adjusted to capture the entire image 24A. After determining the correction factors, the microprocessor generates a set of signals which cause the light emitting diodes 70A-73A to be turned on or off in a particular configuration thus, providing the user 32A with a visual indication of how to adjust the positioning device 44A so the field of view 25A will capture a greater portion of the image 24A. This process is repeated iteratively until the entire image 24A is captured within the field of view 25A of device 34A.

After the field of view 25A has been properly aligned, the microprocessor 42A adjusts light sensitivity. In this regard, the microprocessor 42A computes a reference level voltage that is sufficiently large to prevent low intensity auxiliary light information to be passed by the comparator 46A, but that is not so large as to prevent high intensity auxiliary light information to be passed by the comparator 46A.

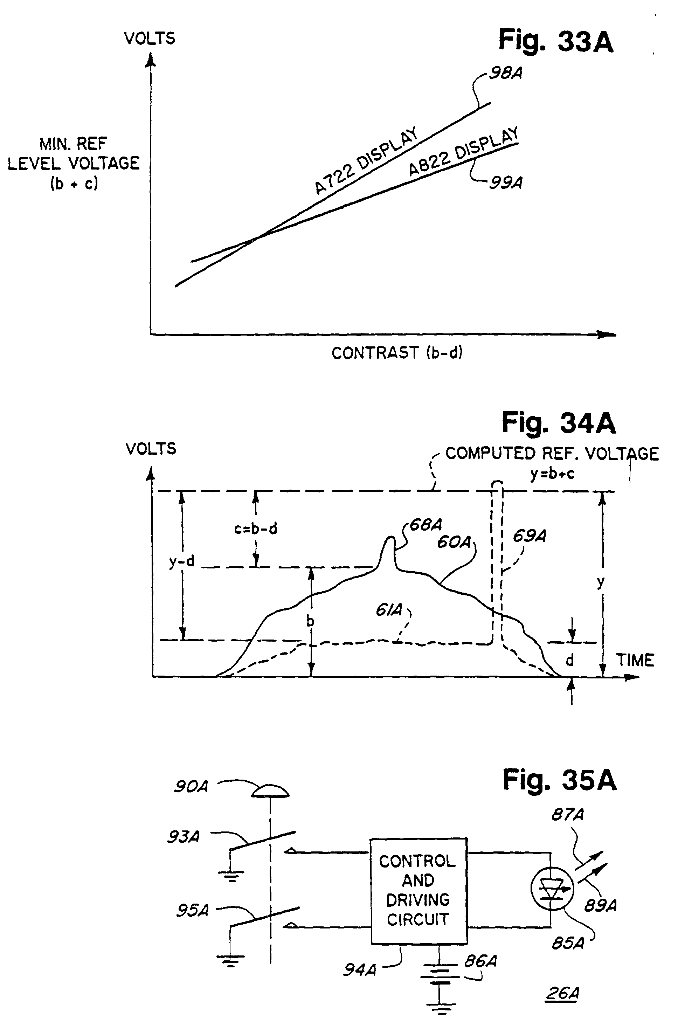

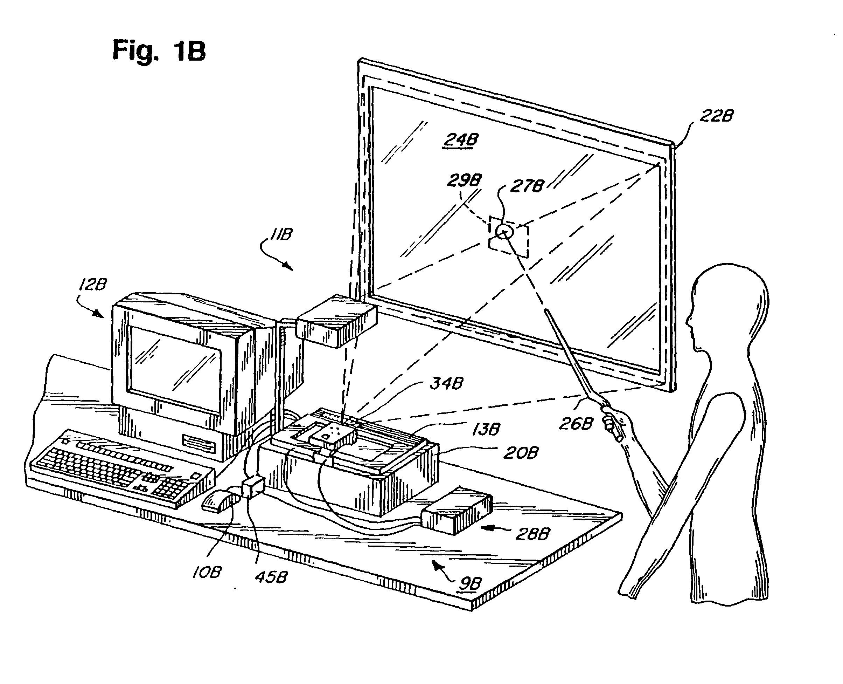

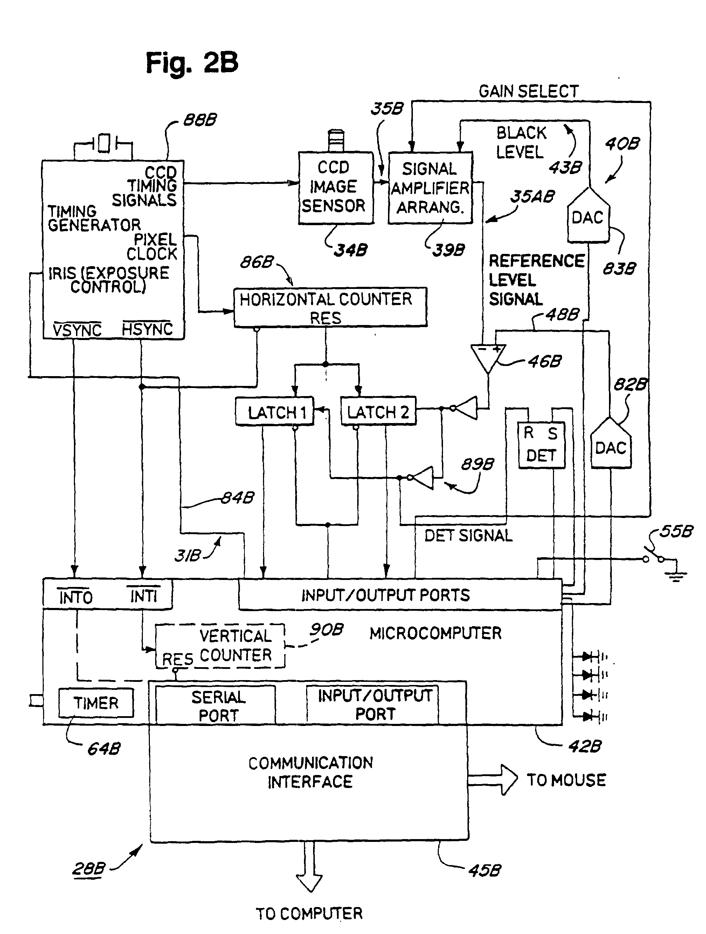

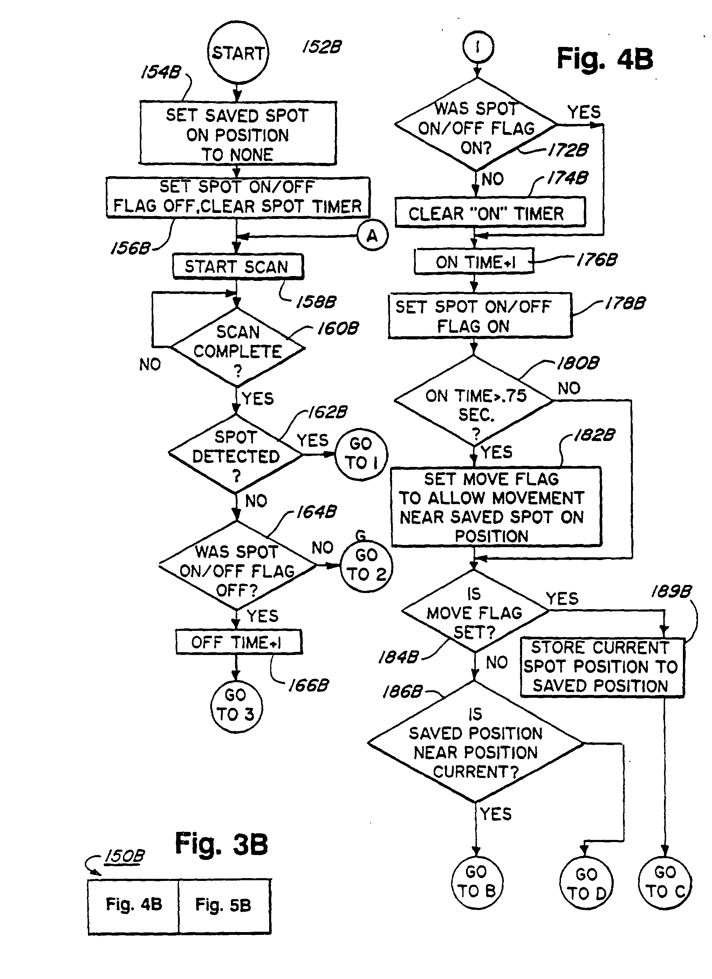

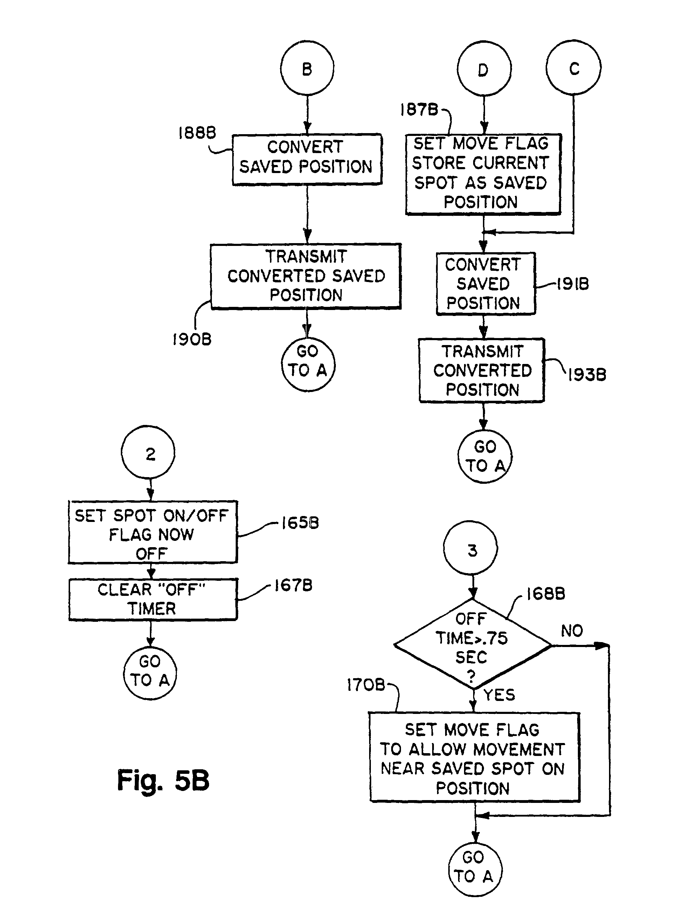

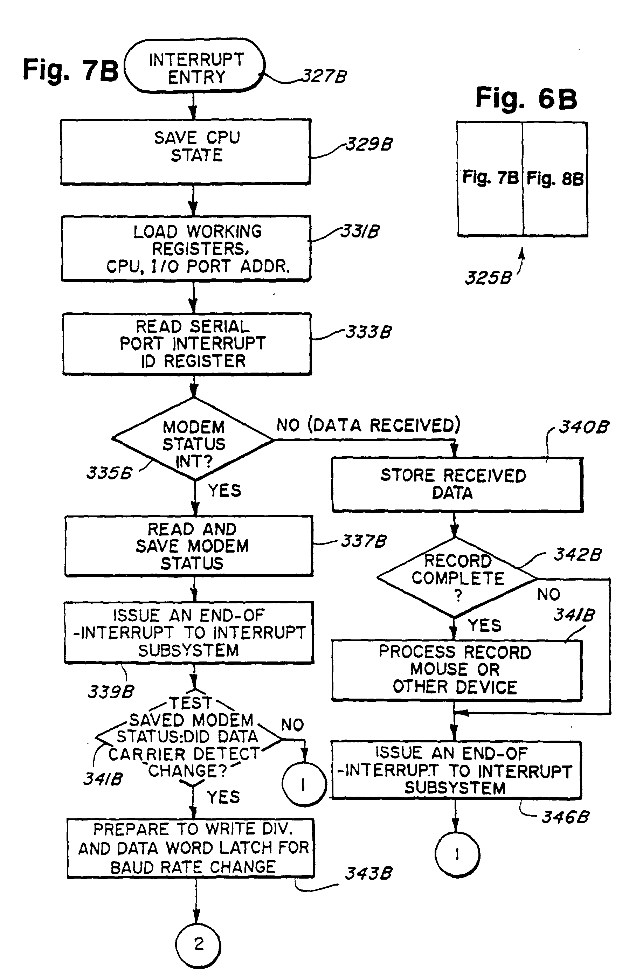

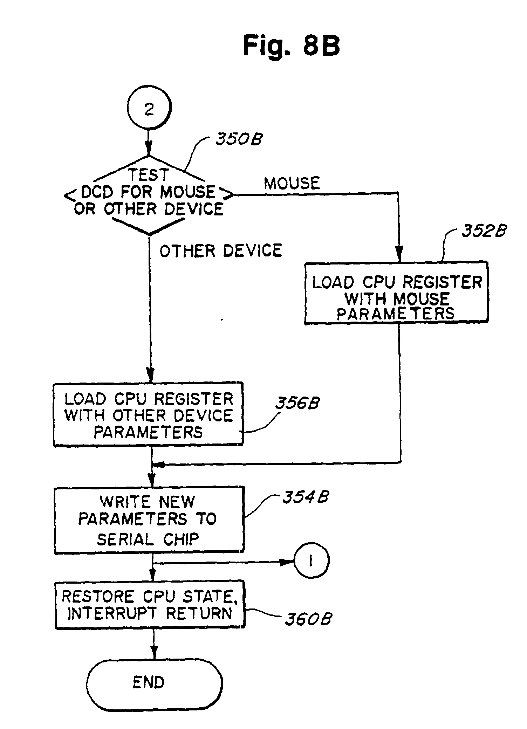

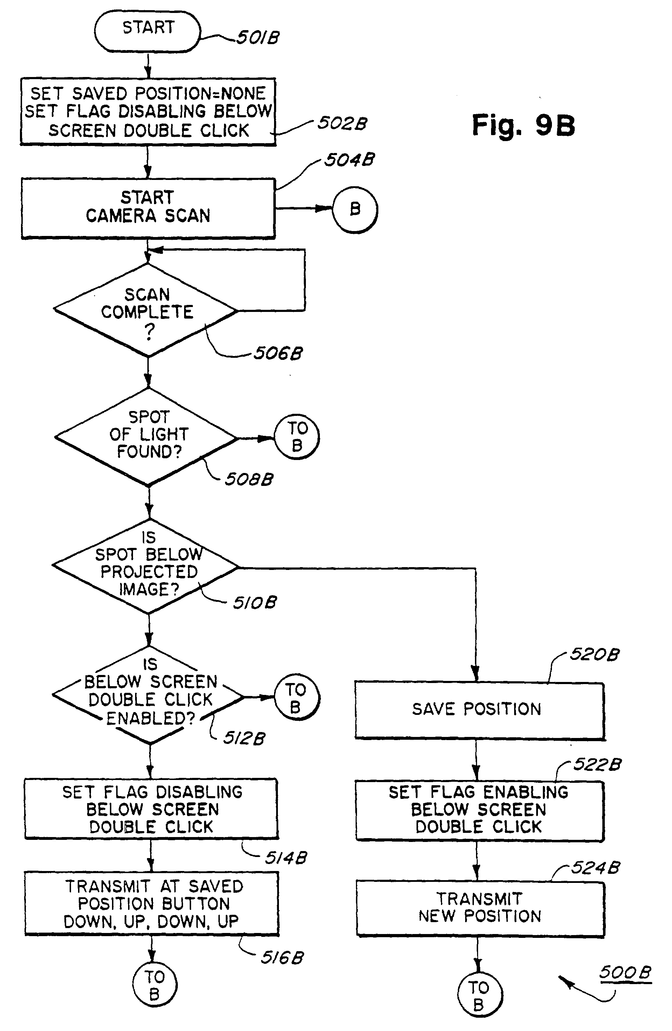

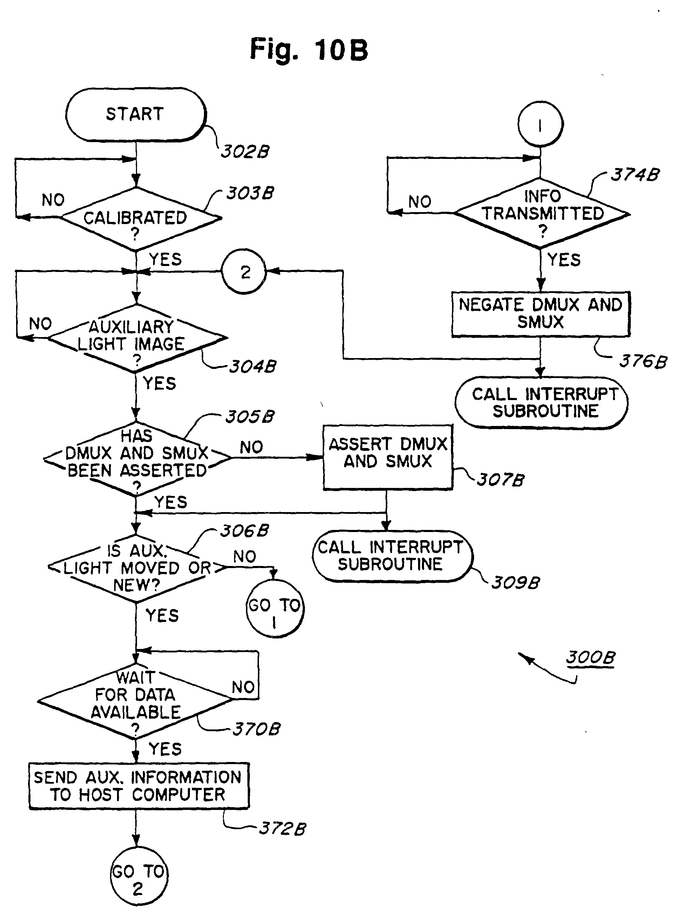

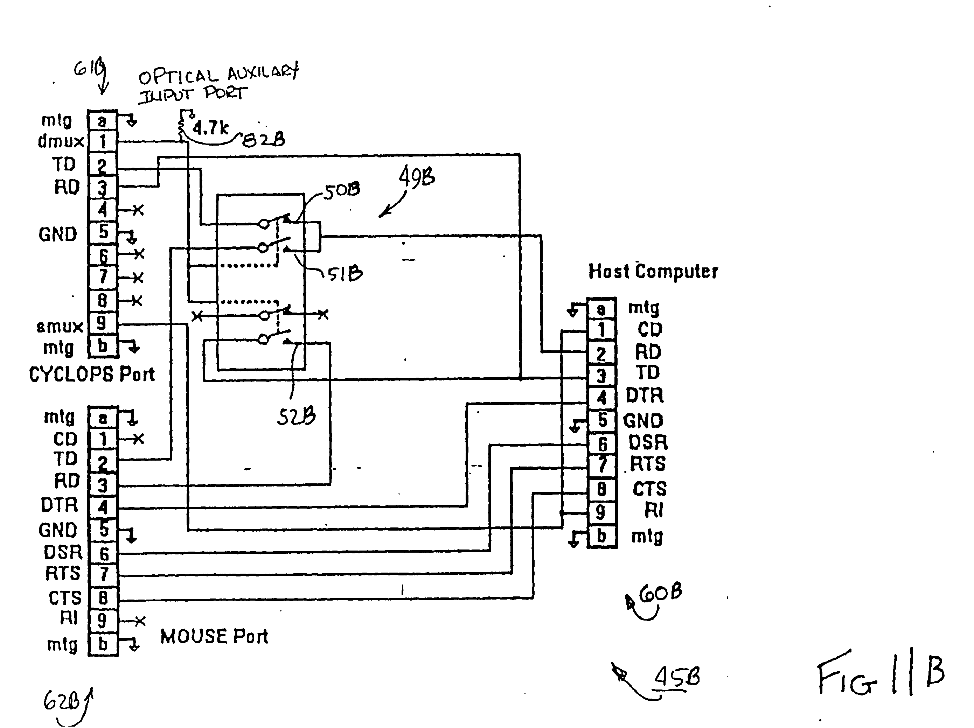

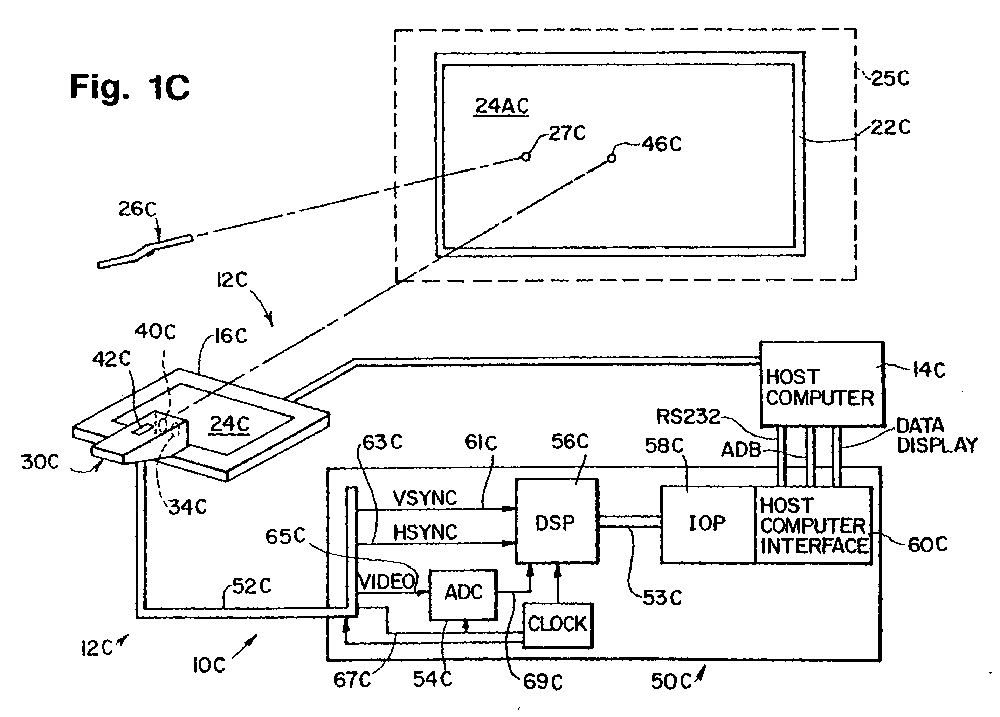

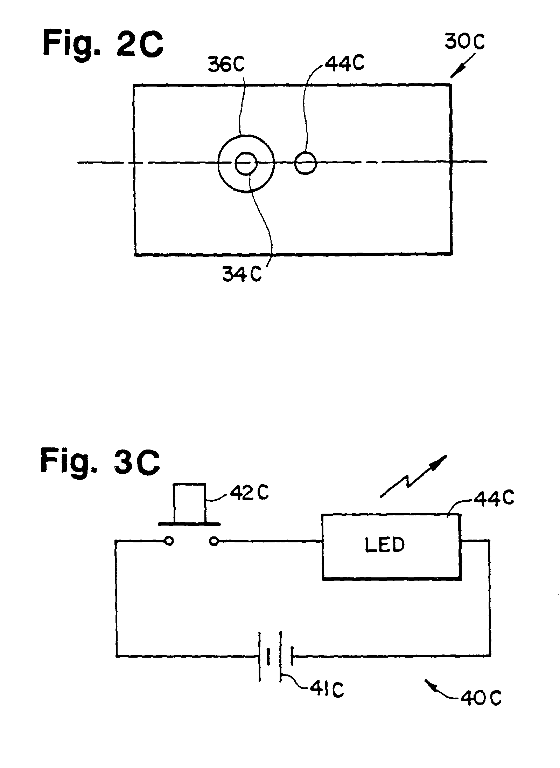

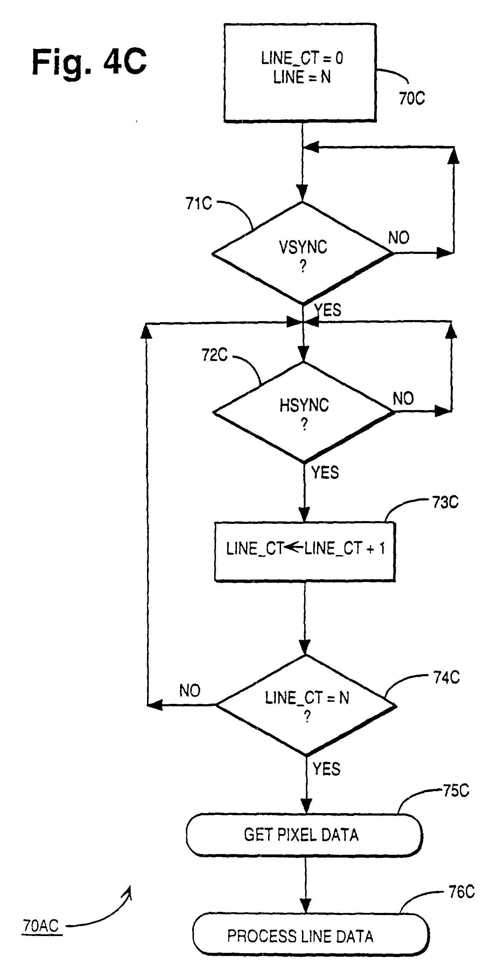

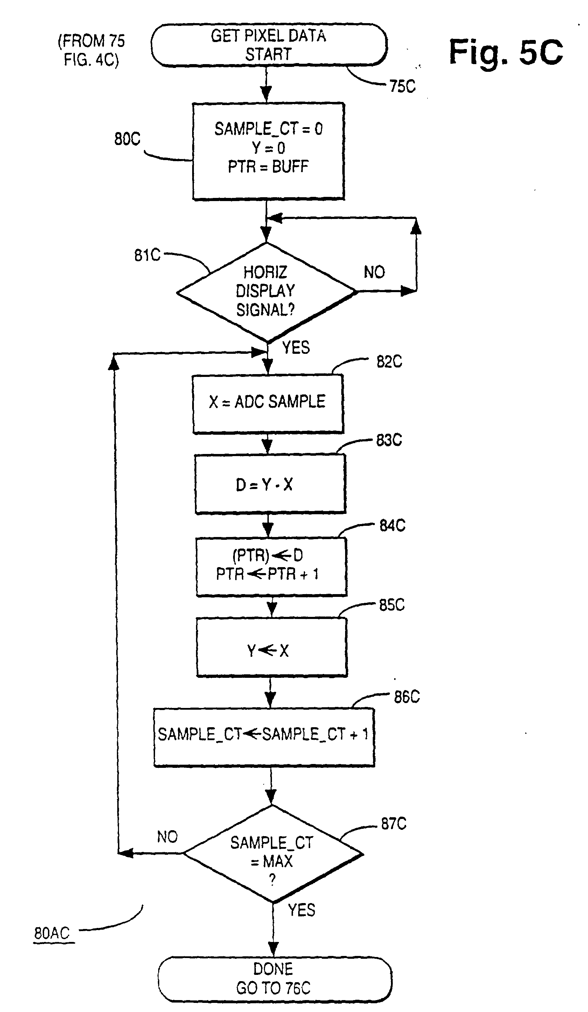

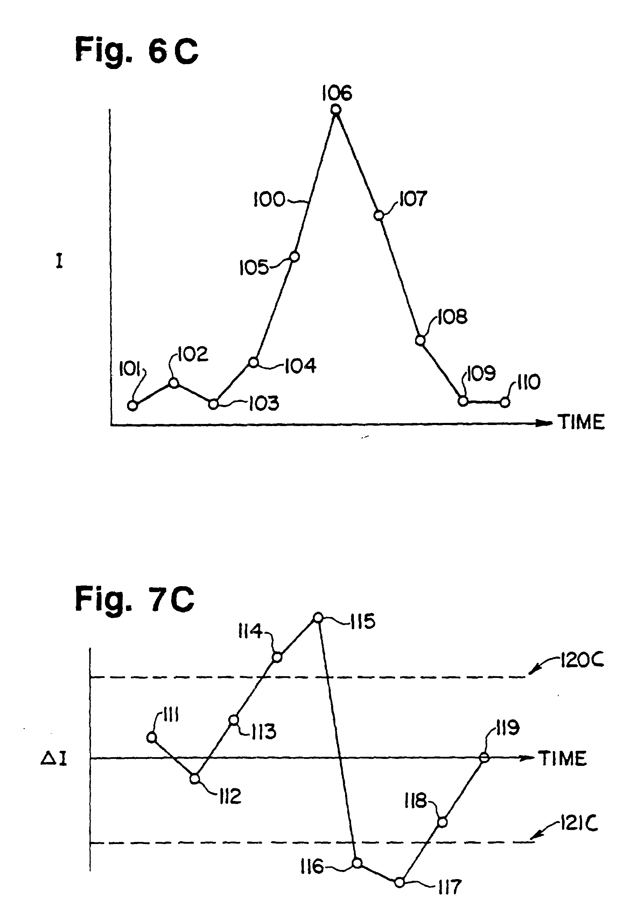

In order to compute the desired reference level voltage, the microprocessor 42A generates a bright image signal that causes the display unit 13A to produce a bright, clear white image which causes, in turn, the charge couple device 34A to produce a bright image information signal 60A (FIG. 34A). The microprocessor 42A then adjusts the reference level signal 48A to a sufficient level to prevent the bright image information signal 60A from being passed by the comparator 46A. The bright image reference level voltage is indicated as b in FIG. 34A.

Next the microprocessor 42A generates a dark image signal that causes the display unit 13A to produce a dark noncolored image which causes, in turn, the charge coupled device 34A to produce a dark image information signal 61A (FIG. 34A). The microprocessor then adjusts the reference level signal 48A to a sufficient level to prevent the dark image information signal 61A from being passed by the comparator 46A. The dark image reference level voltage is indicated as d in FIG. 34A.

Next, the microprocessor 42A determines the model of the display unit 13A by communicating with the display unit 13A to obtain model number information. The microprocessor 42A utilizes the model number information to retrieve a set of adjustment factors that are utilized to compute the desired reference level voltage in accordance with the following formula:

$$Y = mx + b = desired\ reference\ level\ voltage$$

where:

$$m = factor\,1$$

$$x = \left( \begin{array}{c} reference\ level\ voltage \\ for\ bright\ image \end{array} - \begin{array}{c} reference\ level \\ voltage\ for\ dark\ image \end{array} \right)$$

$$b = \left( \begin{array}{c} reference\ level\ voltage \\ for\ bright\ image \end{array} + \begin{array}{c} factor\ 2 \\ in\ volts \end{array} \right)$$

The above mentioned equation, expresses the relationship between the image information signals 60A and 61A for a given type of display unit and projection unit that enables the information signals resulting from a dual intensity auxiliary light beam, to be distinguished by the comparator 46A.

From the foregoing, it will be understood that a low intensity auxiliary light beam can be displayed on any location of the projected image 24A, without generating auxiliary light information. Such a low intensity beam can therefore help a user in locating a precise spot on the image 24A before illuminating that spot with high intensity light or with auxiliary light information. Table IIIA illustrates various factors relative to a selected number of display units manufactured and sold by Proxima Corporation of San Diego, California.

Considering now the signal amplifier circuit 39A in greater detail with reference to FIGS. 2A and 3A, the amplifier arrangement 39A is coupled between the light sensing device 34A and the comparator 46A. The arrangement 39A generally comprises a direct current restoration and notch filter 75A having its input coupled via a conductor 35BA, to the reflected light information signal 35A produced by the charge coupled device 34A. The filter 75A helps remove extraneous noise from the reflected light information signal 35A before the signal is amplified and passed to the comparator 46A.

The amplifier arrangement 39A also includes a four stage multiple gain circuit indicated generally at 76A. The four stage multiple gain circuit 76A enables the reflected light information signal 35A to be amplifier to four discrete levels of 50, 100, 200 and 400 respectively. In this regard, the circuit 76A generally includes an input stage or multiple by 50 amplifier 77A coupled to the output of filter 75A and a set of series connected multiple by 2 amplifier stages 78A, 79A and 80A respectively. The amplifier arrangement 39A also includes an analog multiplexer unit 81A coupled to the output of each one of the amplifier stages 77A-80A for enabling selected ones of the stages 77A-80A to be coupled to the comparator 46A. In order to control which stage of the multiple gain circuit 76A will be coupled to the comparator 46A, the multiplexer 81A is coupled via a conductor 47AA to the gain select signal 47A produced by the microprocessor 42A. The output of the analog multiplexer 81A is coupled to a video signal input 35AA to the comparator 46A via a conductor 81AA.

In order to offset the output signal of the signal amplifier circuit 39A relative to the reflected light information signal 35A, the input to the multiple by 50A amplifier 77A is coupled via a conductor 43AA to the black level signal 43A produced by the microprocessor 42A. In this regard, the black level signal 43A causes the reflected light information signal 35A to be raised and lowered relative to a zero volt reference level as best seen in FIGS. 6A to 8A.

Considering now the signal discrimination arrangement 40A in greater detail with reference to FIG. 2A, the microprocessor 42A controls the exposure time of the charge couple device 34A, the reference level signal 48A for the comparator 46A, and the black level and gain select for the signal amplifier circuit 39A. In this regard, in order to convert the digital control signals produced by the microprocessor 42A to analog voltages, the signal discrimination arrangement 40A includes a set of digital to analog converters including a reference level signal converter 82A coupled to a positive input terminal of the comparator 46A, and a black level signal converter 83A coupled to the input of the amplifier arrangement 39A. The exposure time signal 31A is coupled directly to the timing generator 88A from the microprocess 42A via a conductor 84A. As best seen in FIG. 2A, the signal discrimination arrangement 40A also includes a counter arrangement 86A and a timing generator 88A.

The counter arrangement 86A includes a horizontal counter and latching arrangement 89A and a vertical counter arrangement 90A. The counter arrangement 86A is synchronized with the raster scan sequence of the charge coupled device by a pixel clock generated by the timing generator 88A. In this regard, the microprocessor 42A and timing generator 88A cooperate together to control the exposure time and scanning sequence of the charge couple device 34A. More particularly, they cooperate together so that the device 34A will produce an output signal of sufficient magnitude in response to the detection of light.

Considering now the light generating device 26A in greater detail with reference to FIGS. 1A and 35A, the light generating device 26A include a laser 85A powered by a battery 86A. The laser 85A produces a low intensity beam 87A for helping the user 32A locate a desired portion of the image to illuminate with the auxiliary light image 27A and a high intensity beam 89A for generating the auxiliary light image 27A.

A dual position switch actuator indicated generally at 90A disposed on a handle 92A of the device 26A enables the user to switch beam intensities. The switch 90A include a low intensity light switch 93A and a high intensity light switch 95A. In this regard, when the user 32A depress the actuator 90A to a first or low beam position, switch 93A is enabled, causing the device 26A to produce the low intensity beam 89A. When the user 26A fully depresses the actuator 90A to a second or high beam position, switch 95A is enabled, causing the device 26A to produce the high intensity beam 89A.

From the foregoing, it should be understood the low beam mode of operation enables the user 32A to easily and quickly locate desired portions of the image 24A, without causing the generation auxiliary light information. Thus, once a desired location is determined, the user 32A merely further depresses the actuator 90A to generate the auxiliary light image.

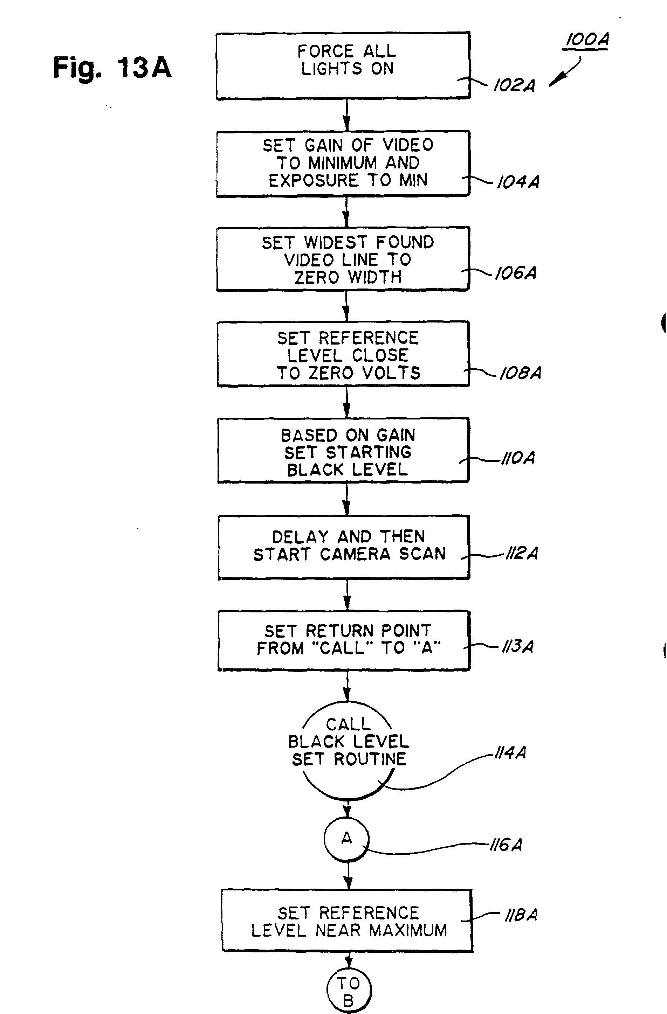

Considering now the field of view alignment algorithm 100A in greater detail with reference to FIG. 13A, the algorithm 100A commences at an instruction 102A in response to a user 32A depressing the calibration button 45A. Instruction 102A causes the microprocessor 42A to generate an initiation signal that in turn cause all of the light emitting diodes 70A-73A to be illuminated. The configuration of all of the diodes being illuminated, informs the user 32A that either the normal alignment subroutine 150A or the alternative alignment 300A will be used to align the field of view of the device 34A.

The program proceeds from instruction 102A to instruction 104A that causes the microprocessor 42A to generate a minimum gain control signal and a minimum exposure time signal which are coupled to the amplifier arrangement 39A and charge couple device 34A respectively. By setting the gain of the amplifier arrangement 39A to a minimum value, coupled with a minimum exposure time setting, assures that the calibration arrangement 9A will be able to detect the peak portions of reflected image information signal produced by the charge couple device 34A. The peak portions include a primary information peak portion resulting from the computer generated image 24A and an auxiliary information peak portion resulting from any user 32A generated auxiliary light image 27A reflecting from the viewing surface 22A.

The program then advances to an instruction 106A that causes an internal line width register (not shown) in the microprocessor 42A to be set to zero. The line width register is utilized to enable the calibration arrangement 9A to detect that portion of the reflected light information signal 35AA which is indicative of the widest area of projected light.

The program proceeds to instruction 108A that causes the microprocessor 42A to set the reference level signal 48A near zero. Setting the reference level signal 48A near zero allow substantially any video signal produced via the amplifier arrangement 39A to be passed by the comparator 46A. Thus, the zero reference level is a desired level for a black video image.

The program continues by causing an instruction 110A to be performed. In this regard, the microprocessor 42A generates a starting black level signal which is amplified by the amplifier arrangement 39A under minimum gain setting. The purpose of instruction 110A is to keep the elapse time for calibration purposes low. Thus, the starting black level and the incremental amount the black level is increased has been made gain dependent. In this regard, the black level adjustment has a range of 0 to 255 where 255 sets the black level at its lowest setting. Table IA shows the gain and black level relationships.

Table IA

| Gain Setting | Starting Black Level Setting | Increment |
|---|---|---|
| 1st lowest setting | 118 | 16 |
| 2nd lowest setting | 159 | 8 |
| 3rd lowest setting | 177 | 4 |
| Highest setting | 186 | 2 |

The program continues to an instruction 112A to initiate a scanning sequence by the charge couple device 34A after about a 60 millisecond delay. The 60 millisecond delay is to allow the system hardware to properly settle after a major change in either the black level, the exposure time or the voltage potential of the reference level signal.

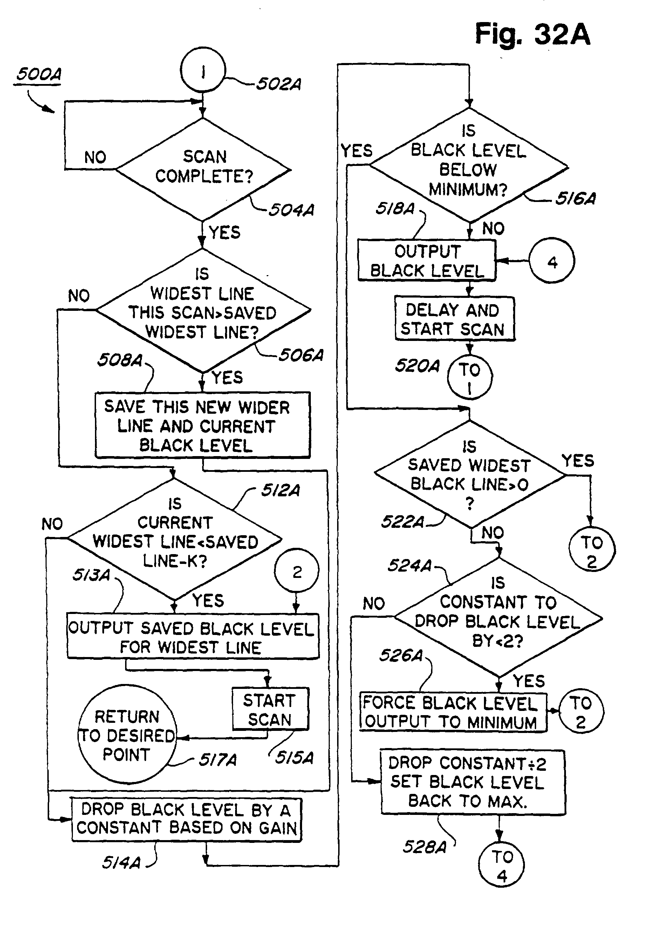

Instruction 113A is executed next to set a return address indication to return location 116A. After instruction 113A is executed, the system advances to a call instruction 114A that calls a black level set subroutine 500A (FIG. 32A) that will be described hereinafter.

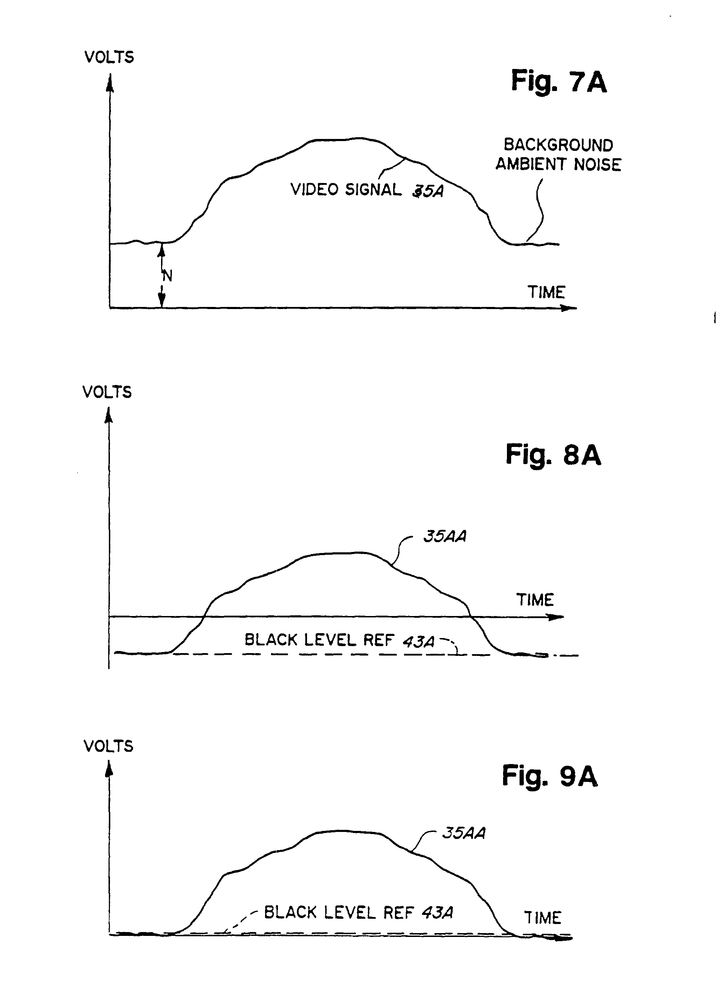

When the black level set routine 500A is executed, the black level signal 43A is adjusted to near zero volts by first setting the black level high and then causing the black level signal 43A to be decreased until the widest video signal is found. FIG. 7A illustrates the reflected light information signal 35AA received by the comparator 46A, where a starting black level voltage setting is substantially above the reference level. FIG. 9A illustrates an adjusted black level signal with a corresponding widest video signal 35AA. FIG. 8A illustrates information signal 35AA received by the comparator 46A, where the black level voltage setting is substantially below the reference level.

After the black level set routine 500A has been executed, the program returns to return location 116A and proceeds to an instruction 118A. At instruction 118A, the microprocessor 42A sets the reference level signal 48A near its maximum value in order to initiate a search for the presence of auxiliary light information. More particularly, the program seeks to determine whether the user 32A has initiated the alternative field of view calibration process by activating the light generating device 26A.

After the reference level signal 48A has been set near its maximum level, the program proceeds to a decision instruction 120A to determine whether the charge couple device 34A has completed its scan. If the scan has not been completed, the program waits at instruction 120A until the scan is completed.

When the scan sequence is completed, the program advances to a decision instruction 122A to determine whether any light was captured during the scan. If no light was detected, the program goes to an instruction 124A that causes the voltage of the reference level signal 48A to be decreased by about 0.5 volts; i.e. one large incremental value. The program then proceeds to a decision instruction 126A to determine whether the reference level signal 48A has been decreased below a predetermined minimum value.

If the reference level signal 48A has been set below the predetermined minimum value, the program proceeds to the normal field of view alignment subroutine 150A. If the reference level signal 48A has not been set below the predetermined minimum value, the program goes to an instruction 128A that causes the light sensing device 34A to initiate another scanning sequence. After the scanning sequence has been started, the program returns to the decision instruction 120A and proceeds as previously described.

At the decision 122A, the program advances to an instruction 130A if light was detected at the present voltage potential for the reference level signal 48A. At instruction 130A, the voltage of the reference level signal 48A is increased by about 0.5 volts. In other words, the voltage of the reference level signal 48A is set at a level where light was not detected.

After increasing the voltage level of the reference level signal 48A, the program proceeds to an instruction 132A that causes the light sensing device 34A to commence another scanning sequence. The program then goes to a decision instruction 134A.

At decision instruction 134A, the program determines whether the last initiated scanning sequence has been completed. If the sequence has not been completed, the program waits at decision 134A.

When the scanning sequence has been completed, the program advances to a decision instruction 136A to determine whether any light has been detected at the present reference level voltage. As instruction 130A previously set the voltage of the reference level signal 48A at a sufficiently high level to prevent the detection of light, no light will be found during this scan sequence. The program therefore advances to an instruction 138A.

At instruction 138A, the microprocessor 42A causes the value of the current reference level voltage to be saved as a possible reference level voltage that is indicative of the peak of the auxiliary light image. After the value of the reference level voltage has been saved, the program goes to an instruction 140A. At instruction 140A the microprocessor 42A causes the voltage of the reference level signal 48A to be decreased by about 0.1 volts, i.e. one small increment.

After the value of the reference level voltage has been decreased, the program advances to a decision instruction 142A to determine whether the reference level signal 48A is below a predetermined minimum value. If the value is not below the predetermined value, the program returns to instruction 132A and proceeds as previously described.

If the value of the reference level signal 48A is below the predetermined minimum value, the program proceeds to a decision 144A to determine whether an auxiliary light image has been detected. In this regard, the microprocessor 42A determines whether the previously saved reference level voltage less the present reference level voltage is greater than a predetermined constant. If the auxiliary light image has not ben detected, the program proceed to the normal alignment subroutine 150A.

If the decision instruction 144A determines that an auxiliary light image has been detected, the program goes to an instruction 146A and computes the strength of the auxiliary light image from the following formula:

$$\textit{Strength of Auxiliary Light Image} = \frac{\textit{Previously Stored Reference Voltage - Current Reference Voltage}}{2} +$$

$$\textit{Current Reference Voltage}$$

After the strength of the auxiliary light image has been computed, the program proceeds to an instruction 148A. The instruction 148A causes the display unit 13A to override the computer generated video image. In this regard, the projected images go to a blank image and then back to the computer generated image. This "flashing" sequence notifies the user 32A that the auxiliary light image has been detected and that alignment of the charge couple device 34A will proceed using the alternative alignment subroutine 200A.

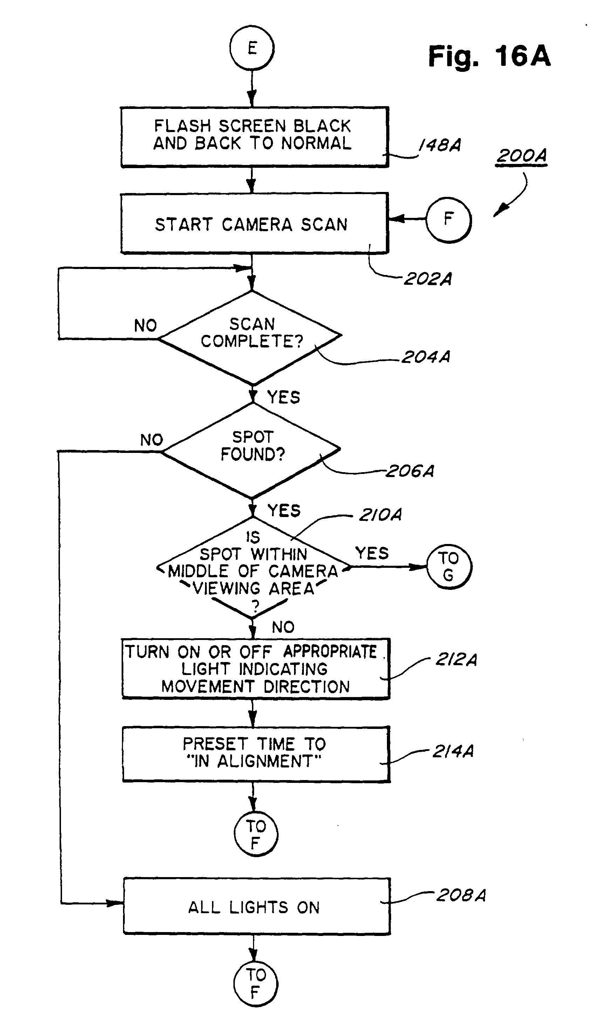

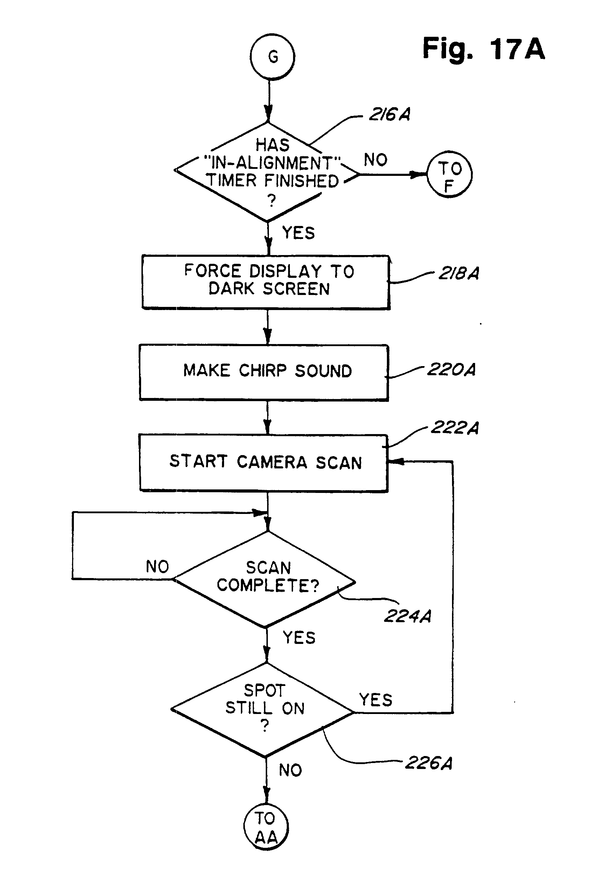

Considering now the alternative alignment subroutine 200A in greater detail with reference to FIGS. 16A to 17A, the alternative alignment subroutine 200A commences at an instruction 202A which causes a scanning sequence to be initiated. The program then goes to a decision instruction 204A to wait for the scanning sequence to be completed.

When the scanning sequence is completed, the program advances to a decision instruction 206A to determine whether the auxiliary light image 27A has been detected. If the auxiliary light image 27A is not detected, the program goes to an instruction 208A that causes all of the light emitting diodes 70A-73A to be illuminated. This particular configuration of illuminated diodes, informs the user 32A that the auxiliary light image was not detected. The program then returns to instruction 202A to start another scanning sequence.

It should be understood, the program will proceed through the above described program sequence 202A, 204A, 206A, 208A, 202A, ... repeatedly until an auxiliary light image is detected, thus, providing the user 32A with notification that an error condition exists and corrective action is required.

Referring to the decision 206A again, if the auxiliary light image is detected, the program goes to a decision instruction 210A to determine whether the auxiliary light image 27A has been detected within the middle of the field of view 25A of the charge coupled device 34A.

If the detected image is not within the middle of the field of view, the program goes to an instruction 212A that causes appropriate ones of the diodes 70A-73A to be illuminated or turned off. The diodes 70A-73A thus provide a visual indication to the user 32A of how to move the positioning device 44A to bring the detected auxiliary light image 27A into the center of the field of view of the device 34A. In this regard, the calibration arrangement 9A desires the detected auxiliary light image 27A to be positioned in a small imaginary rectangle in the middle of the field of view of the device 34A.

After providing the user 32A with a visual indication of how to position the charge coupled device 34A, the program proceeds to an instruction 214A to preset an internal timer (not shown) in the microprocessor 42A to a predetermined elapse time. As will be explained hereinafter, device 44A must remain in alignment for a predetermined period of time.

Once the timer has been set, the program returns to the instruction 202A to initiate another scanning sequence. In this regard, the program proceeds as previously described until the user 32A properly aligns the device 34A. When the light sensing device 34A is aligned, all of the light emitting diodes 70A-73A turn off, thus providing the user 32A with a visual indication that center alignment has been completed.

When center alignment has been completed the program proceeds from the decision instruction 210A to a decision instruction 216A to determine whether the internal timer has completed its timing sequence. If the timer has not timed out, the program returns to the instruction 202A and repeats the sequence 202A, 204A, 206A, 208A, 216A, 202A ... until the timer has completed its timing sequence.

Once the timing sequence has been completed, the program proceeds from the decision instruction 216A to an instruction 218A. Execution of instruction 218A causes the display unit 13A to override the computer generated image information and display a black image. The program then proceeds to an instruction 220A that causes the calibration arrangement 9A to generate a "chirp" sound to notify the user 32A that he or she should turn off the light generating device 26A.

The program proceeds from the instruction 220A to an instruction 222A, to start another scanning sequence. The program then advances to a decision instruction 224A to wait for the scanning sequence to be completed.

When the scanning sequence has been completed, the program proceeds from the decision instruction 224A to a decision instruction 226A to verify that the user 32A has deactivated the light generating device 26A; i.e. the auxiliary light image 27A is no longer being detected. If the auxiliary light image 27A is still being detected, the program returns to instruction 222A to start another scanning sequence. From the foregoing, it will be understood the above described program sequence 222A, 224A, 226A, 222A ... will be repeated until the user 32A deactivates the light generating device 26A.

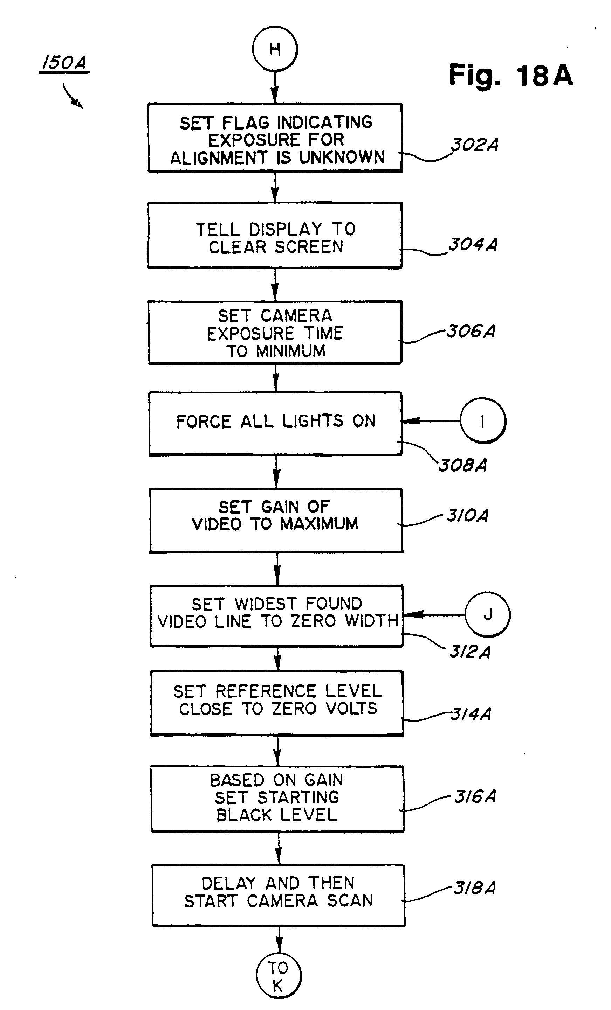

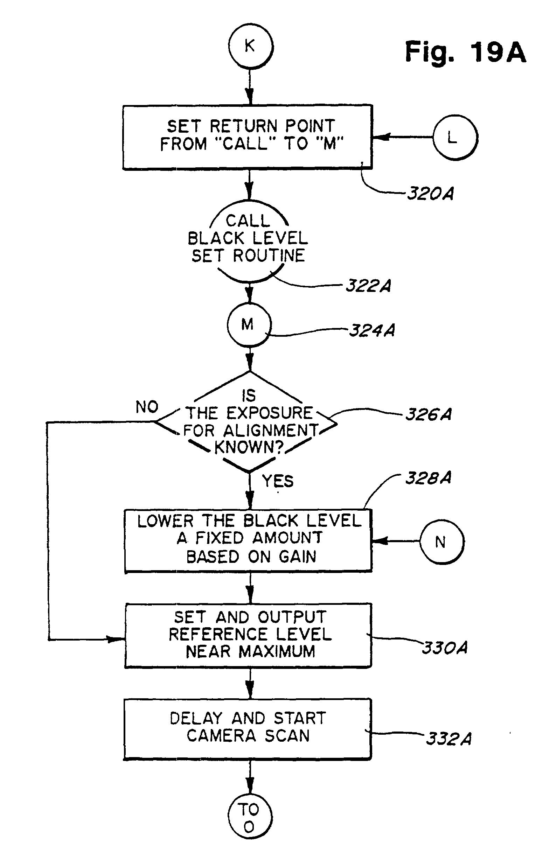

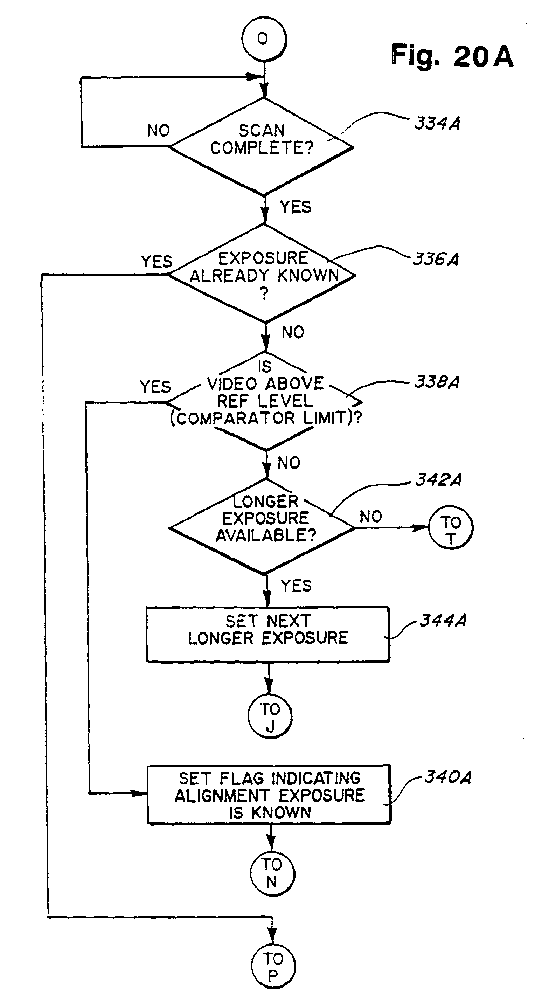

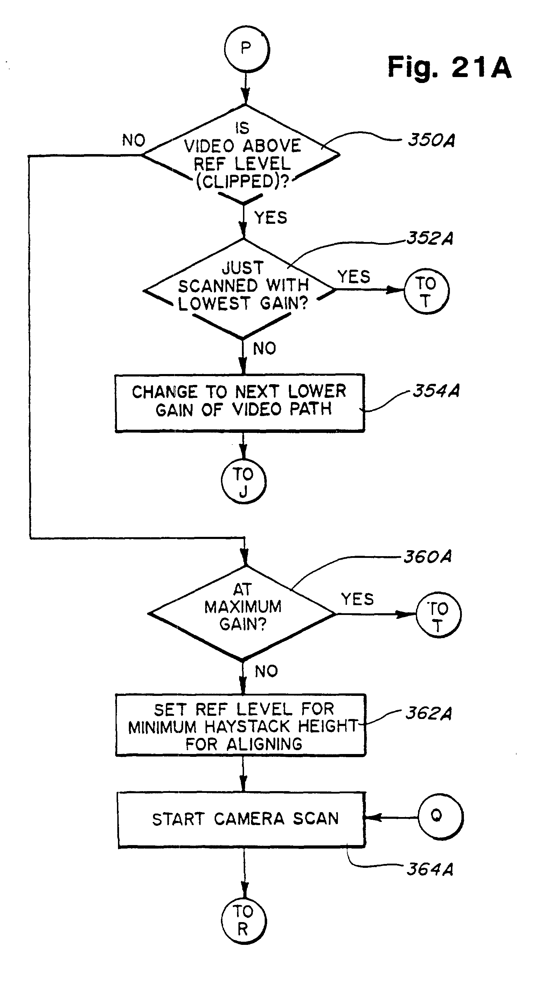

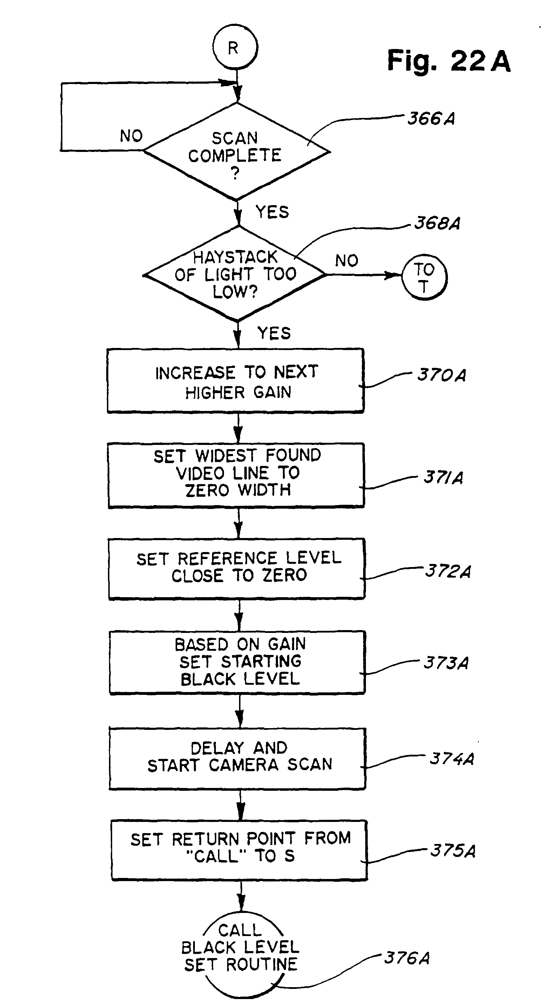

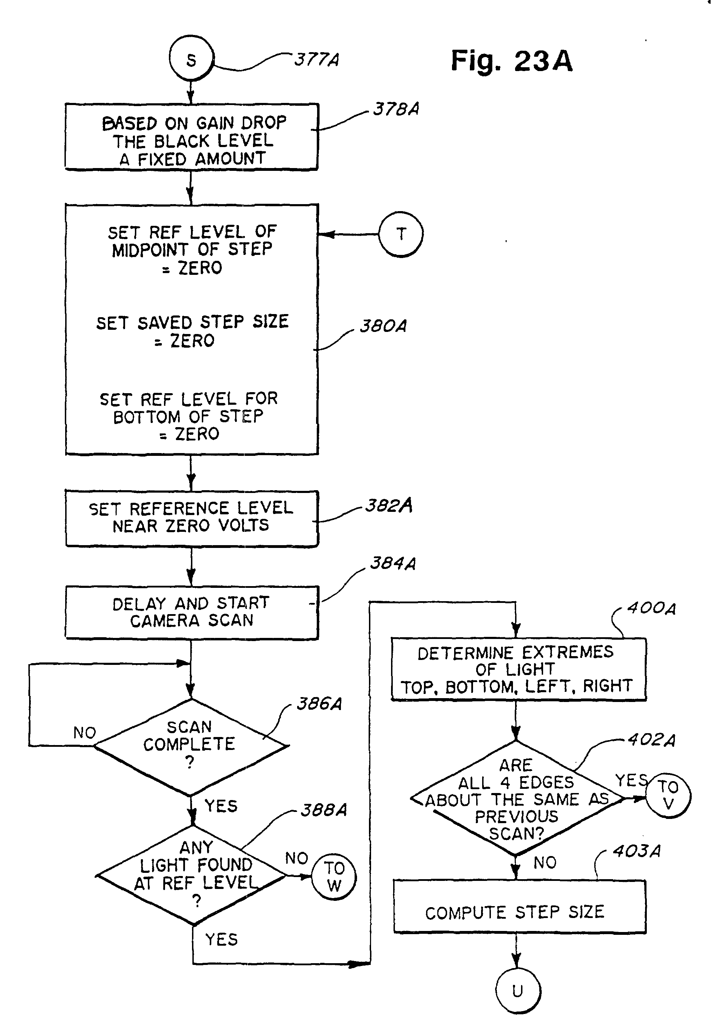

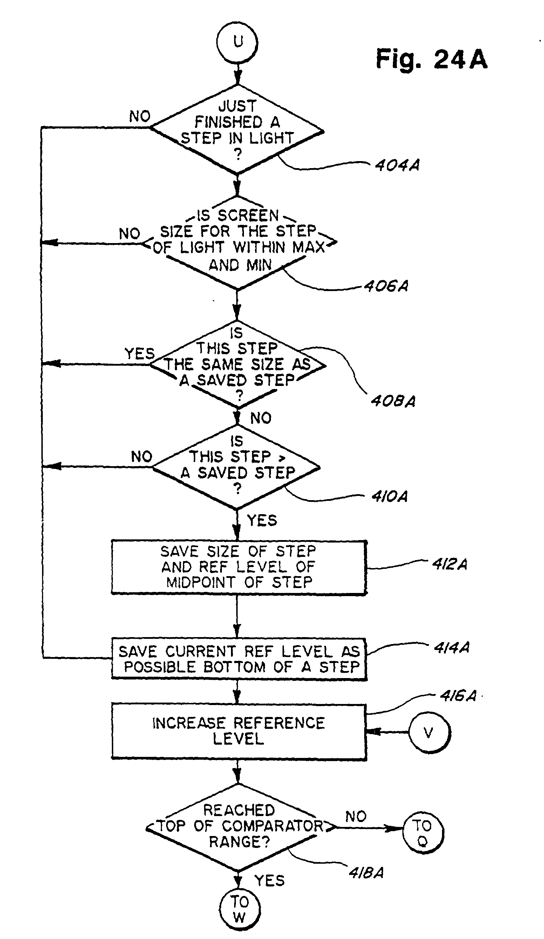

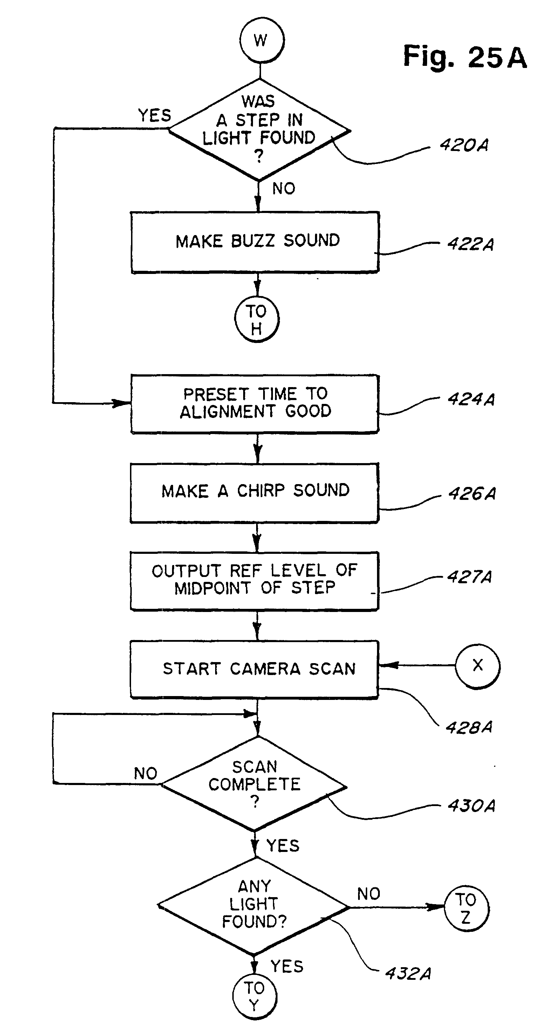

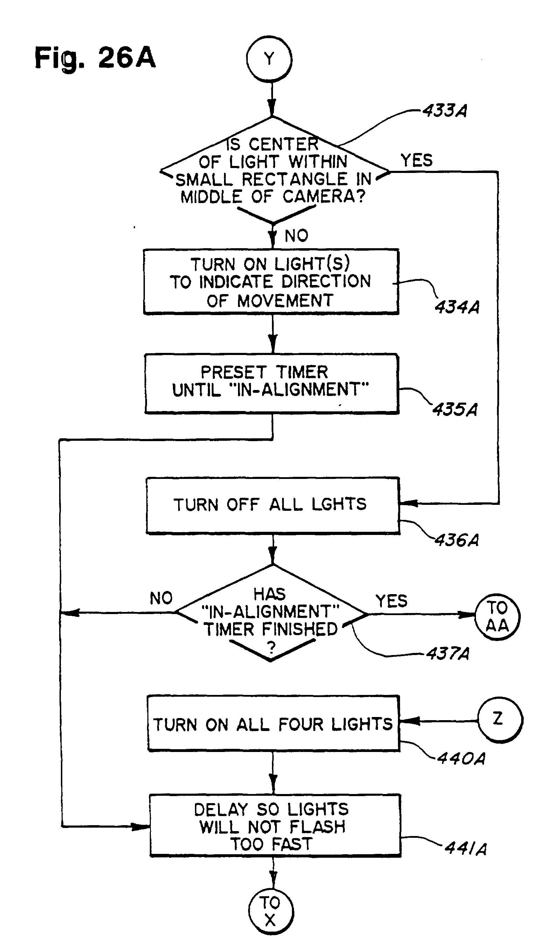

Considering now the normal alignment subroutine 150A in greater detail with reference to FIGS. 18A to 26A, the normal alignment subroutine 150A utilizes a bright clear white image displayed by unit 13A in order to facilitate the alignment of the device 34A. More particularly, during the normal alignment process the calibration arrangement 9A, seeks to identify a sharp change in the luminance level of the projected image and assume such a transition is one of a set of four edge portions defining the periphery boundaries of the projected image. The edge portions include a top edge portion 56A, a bottom edge portion 57A, a right side edge portion 58A and a left side edge portion 59A.

In order to detect an edge portion, the charge coupled device 34A must generate a reflected light image signal 35A having a sufficiently large amplitude to permit detection of substantially different contrast levels defined by clear bright images and dark substantially noncolored images. In this regard, the program enables the microprocessor 42A 1) to control the exposure time of the light sensing device 34A so that its output signal 35A has sufficient strength for contrast detection purposes; 2) to control the gain of the video path to the comparator 46A, so the comparator 46A is able to distinguish the different contrasts; and 3) to control the voltage potential of a black level signal 43A in order to assure the voltage levels of the reflected light signal 35AA are maintained within the voltage range of the comparator 46A.

The normal alignment subroutine 150A commences at an instruction 302A to set up a proper exposure time for the device 34A. In this regard, a flag is set indicating the exposure time is unknown. The program then advances to an instruction 304A that causes the microprocessor 42A to generate a signal that causes the display device 13A to override the computer generated video information and displays a bright substantially noncolored image.

After the bright image is generated, the program advances to an instruction 306A, that causes the exposure time for the device 34A to be set to its minimum exposure time. From instruction 306A, the program proceeds to an instruction 308A.

When the program goes to the instruction 308A, the microprocessor 42A causes all of the light emitting diodes 70A-73A to be illuminated. The program then advances to an instruction 310A where the microprocessor 42A sets the gain of the amplifier arrangement 39A to maximum. The calibration arrangement 9A, based on the foregoing, starts the alignment with the shortest exposure time and the maximum gain setting.

After the gain has been set to the maximum level, the program advances to an instruction 312A that causes the microprocessor 42A to set the internal line width register to zero. After the line width register is set to zero, the program proceeds to an instruction 314A which causes the reference level signal 48A to be set close to zero volts.

Once the reference level voltage has been established, the program advances to an instruction 316A which causes an initial or starting black level to be set relative to the present gain setting (which is set at its maximum level). Table IA, as noted earlier, indicates the relationship between the gain settings and the starting black levels. Although there are a total of two hundred and fifty five level settings for the black level, a less than maximum black level setting of 186A is selected initially because the calibration procedure takes too long to complete if the maximum level of 255A is initially set.

The program then proceeds to an instruction 318A to start a scanning sequence after about a 60 millisecond delay that allows the circuits in the calibration arrangement 9A to settle. While the scanning sequence is commencing, the program advances to an instruction 320A that sets a returning address to a return location 324A.

The program next executes a call instruction 322A to call the black level set routine 500A which causes the black level to be adjusted to near zero volts. When the black level set routine 500A is completed, the program returns to the previous set returning address, causing the program to return to return location 324A.

The program then advances to a decision instruction 326A to determine whether the exposure time flag for the alignment procedure is known. It should be noted that one of the initial alignment steps at instruction 302A caused the exposure flag to be set to the unknown setting.

If the exposure time is unknown, the program goes to an instruction 330A which sets the voltage potential of the reference level signal 48A to near its maximum level of about 10 volts. If the exposure time is known, the program goes to an instruction 328A and drops the black level setting by a fixed amount based on the gain setting. Table IIA, as noted earlier, provided the relationship between the gain settings and the decrement values applied to the black level setting.

After the black level setting is decreased, the program proceeds to the instruction 330A and sets the reference level signal at near its maximum voltage of about 10 volts. From instruction 330A the program advances to an instruction 332A and starts another scanning sequence after about a 60 millisecond delay.

The program next executes a decision instruction 334A to determine whether the scanning sequence has been completed. If the sequence has not been completed, the program waits at the decision instruction 334A. When the scanning sequence is completed the program goes to a decision instruction 336A to again determine whether the exposure time is known.

If the exposure time is unknown, the program proceeds to a decision instruction 338A to determine whether the reflected light image signal 35AA is greater than the reference levels signal 48A. In this regard, with the gain set to maximum, and the reference level signal 48A set to maximum, the comparator 46A will generate an output signal when the reflected light image signal 35AA is greater than the reference level signal 48A. The output signal from the comparator 46A is thus, indicative that at the present exposure time setting, a video image can be detected. The exposure time is therefore known and the program advances to an instruction 340A that causes an internal flag in the microprocessor 42A to be set to indicate that the exposure time is known.

As will be explained hereinafter, once the exposure time is sufficient to capture a given reflected light image signal 35A, the black level signal 43A is decreased to adjust the voltage potential of the reflected light image signal 35A to optimize the signal 35AA within the voltage range of the comparator 46A. In this regard, the program proceeds from instruction 340A to the instruction 328A which causes the black level setting to be decreased by a predetermined fixed amount as shown in Table IIA. The program then proceeds from instruction 328A as previously described.

Referring again to the decision instruction 338A, if the potential value of the reflected light image signal 35AA is not greater than the potential value of the reference level signal 48A, the program proceeds from instruction 338A to a decision instruction 342A. A determination is made at decision instruction 342A whether a longer exposure time is available.

If a longer exposure time is not available, the program advances to an instruction 380A that will be described hereinafter. If a longer exposure time is available, the program goes to an instruction 344A that sets the exposure time to the next highest level. The program then returns to instruction 312A, and proceeds as previously described but with a longer exposure time. In this regard, it should be understood that a longer exposure time will cause the voltage potential of the output signal from the light sensing device 34A to be increased.

The normal alignment subroutine 150A continues in the manner previously described from instruction 312A through instruction 344A repeatedly; however, through each sequence, the exposure time is increased until an output signal is generated. Such an output signal is indicative that the reflected image signal 35AA is greater than the reference level signal 48A.

If all of the exposure times have been attempted with the gain of the amplifier arrangement 39A set to a maximum without generating an output signal, the program will proceed to an instruction 380A that will be described hereinafter. In any event, the program determines whether any light can be found. If no light is found, the program will cause an audible alarm to be energized to notify the user 32A that corrective action must be taken.

Referring again to the decision instruction 336A, if the exposure time is known, the program advances to a decision instruction 350A to determine whether the reflected light image signal 35AA is greater than the reference level signal 48A. In this regard, if the comparator 46A generates an output signal, the reflected light image signal 35AA is greater than the reference level signal 48A. The program in response to a "clipped video signal" determination, advances to a decision instruction 352A to determine whether the last completed scanning sequence was executed with the gain of the amplifier arrangement 39A sets at its lowest level.

If the gain was not set to the lowest level, the program advances to an instruction 354A which causes the microprocessor 42A to generate a select gain signal forcing the next lower gain level to be selected. The program then returns to the instruction 312A, and proceeds as previously described.

If the image just scanned was observed by the light sensing device 34A, with the gain set at its lowest level, the program goes to the instruction 380A. From the foregoing, it should be understood that with a known shortest exposure time, the calibration arrangement 9A will cause the gain setting of the amplifier arrangement 39A to be decreased repeatedly until the reflected image signal 35AA is less than the maximum setting for the reference level signal 48A.

Referring again to the decision instruction 350A, if the comparator 46A fails to generate an output signal, the reflected light image signal 35AA is less than the reference level signal 48A. Responsive to such a determination, the program proceeds to a decision instruction 360A to determine whether the gain is set at its maximum level. If the gain is set at a maximum level, the program proceeds to the instruction 380A.

If the gain is not set at a maximum level, the program next executes an instruction 362A which sets the reference level signal 48A to a predetermined voltage of about 6 volts. This is the smallest acceptable reference level voltage setting (for all gain level setting) for alignment purposes. Stated otherwise, for the purpose of alignment the reflected light image signal 35AA must always be substantially greater than 6 volts.

The program next proceeds to an instruction 364A which causes another scanning sequence to be commenced. After the next scanning sequence has been commenced, the program executes a decision instruction 366A to wait for the scanning sequence to be completed.

When the scanning sequence has been completed, the program executes a decision instruction 368A to determine whether the reflected light image signal 35AA is greater than the reference level signal 48A. If the reflected light image signal 35AA is not too small, the program advances to the instruction 380A. If the reflected light image signal 35AA is too small, the program advances to an instruction 370A which causes the next higher gain level to be selected.

After the next highest gain level is set, the program advances to an instruction 371A which causes the video line width register to be reset to zero. The program then executes an instruction 372A which causes the reference level signal 48A to be set at about zero volts.

The program next executes an instruction 373A which sets a starting black level based on the gain setting as set forth in Table IA. Once the voltage potential of the starting black level signal 43A has been set, the program goes to an instruction 374A which causes another scanning sequence to be commenced. The program next executes an instruction 375A which sets a returning address for the program to a return location 377A. After setting the return location, the program advances to a call instruction 376A which causes the black level set subroutine 500A to be called. From the foregoing, it should be understood that the program causes another black level adjustment before commencing to search for a step change in the reflected light image 35AA.

After the black level set subroutine 500A has been executed, the program returns to the instruction 377A. The program then proceeds to an instruction 378A which causes the black level to be decreased based on the current gain setting as set forth in Table IIA.

The program then continues to the instruction 380A which initializes a set of internal registers (not shown) denoted as a midpoint of step register, a step size register, and a bottom of step register. As will be explained hereinafter in greater detail, these registers will be loaded with data that will be indicative of a step change in the luminance level of the reflected light image.

The program next executes an instruction 382A which causes the reference level signal 48A to be set near zero volts. The program then proceeds to an instruction 384A to cause another scanning sequence to be commenced.

The program proceeds to a decision instruction 386A to wait for the scanning sequence to be completed. When the scanning sequence is completed, the program advanced to a decision instruction 388A to determine whether any light was found at the existing reference level signal setting; i.e. if an output signal was generated by the comparator 46A, the output signal would be indicative that the reflected light image signal 35AA was greater than the present reference level signal 48A.

If light is not detected at the existing reference level voltage, the program goes to a decision instruction 420A that will be described hereinafter in greater detail. If light is detected, at the existing reference level voltage, the program proceeds to an instruction 400A which determines the maximum and minimum values stored in the horizontal and vertical counters 89A and 90A respectively. The maximum and minimum values are indicative of the top, bottom, left and right locations of the luminance level steps produced from the clear image generated by device 13A.

The program next executes a decision instruction 402A, to determine whether the stored values are about the same as determined during the previous scan. As these values have not been previously stored, they will not be at about the same values.

Responsive to a determination that the present values are about the same as the previously stored values, the program goes to an instruction 416A as will be described hereinafter.

If the values are not about the same, the program proceeds to an instruction 403A that causes the step size to be computed based on the following formula:

$$Step\ Size = Voltage\ Potential\ of\ Current\ Reference\ Level\ Signal\ -$$

$$Voltage\ Potential\ of\ Reference\ Level\ Signal\ for\ Saved\ Bottom\ of\ Step$$

After computing the step size, the program proceeds to a decision instruction 404A which determines whether a step of light has been detected. It should be noted that a step of light is defined as all four edges of the projected light image being at about the same value plus or minus a given constant and the step size is greater than or equal to V, where V is 314 millivolts.

If a step of light has not been detected, the program goes to an instruction 414A which causes a digital value indication of the voltage potential of the current reference level signal 48A to be saved.

After saving the current reference level, the program advances to the instruction 416A which causes the reference level voltage to be increased by a predetermined amount of about 78 millivolts. It should be understood that the saved reference level voltage could be indicative of the luminance level transition at the edge of the projected image; i.e. the bottom of a step of light.

Referring to the decision instruction 404A, if a step of light has been detected, the program proceeds to a decision instruction 406A to determine whether the projected image size for the present step of light is within a set of predetermined maximum and minimum levels. Stated otherwise, the microprocessor 42A determines whether the top, bottom, left and right values are within the predetermined maximum and minimum levels. In this regard, the extreme values stored in the horizontal and vertical counters 89A and 90A respectively are compared with the following maximum and minimum value:

|         | Horizontal | Vertical |
|---------|------------|----------|
| Maximum | 133        | 188      |
| Minimum | 42         | 60       |

If the size is not within the maximum, minimum values, the program goes to the instruction 414A, which causes a digital value indicative of the potential of the current reference level signal 48A to be saved as previously described. If the size is within the maximum and minimum values, the program goes to a decision instruction 408A to determine whether the present step has a value that is about the value of a previously stored step (instruction 380A initially set at the step size value to zero).

If the step has about the same size, the program goes to the instruction 414A and proceeds as previously described. If the step is not about the same size, the program advances to a decision instruction 410A to determine whether the size of the present step is greater than the previously stored step size (again, instruction 380A initially set the step size value to zero).

If the step size is not greater than the previously saved step size, the program goes to the instruction 414A and proceeds as previously described. If the step size is greater than the previously stored step size, the program next executes an instruction 412A, which causes a digital value indicative of the size of the step and a digital value indicative of the potential value of the reference level signal 48A at the midpoint of the step to be saved.

Next the program proceeds to the instruction 414A which causes a digital value indicative of the potential of the current reference level signal 48A to be stored as a possible value for the bottom of a step.

After executing instruction 414A the program advances to the instruction 416A which causes the voltage potential of the reference level signal 48A to be increased by a predetermined amount. After the reference level signal has been increased, the program goes to a decision instruction 418A to determine whether the potential value of the present reference level signal 48A is equal to about 10 volts or the maximum acceptable reference voltage potential for the comparator 46A.

If the reference level signal 48A is not set to the top range of the comparator 46A, the program returns to instruction 364A causing another scanning sequence. The program proceeds from instruction 364A as previously described.

If the reference level signal 48A is set to the top range of the comparator 46A, the program advances to the decision instruction 420A. Decision instruction 420A determines whether a step in luminance levels was found. If no step was found, the program advances to an instruction 422A which causes the calibration arrangement 9A to make a "buzz" sound notifying the user 32A that alignment was not possible.

After the alarm is sounded, the program returns to instruction 302A in order to attempt another alignment. In this regard, when the buzz alarm is sounded, the user 32A must take some form of corrective action such as to darken the ambient lighting condition in the room, or to move the overhead projector 20A closer to the viewing surface 22A.

If a step of light was found at decision instruction 420A, the program next executes the instruction 424A which causes a timer to be set for continued alignment.

After the timer is set, the program advances to an instruction 426A which causes an audible "chirp" sound to be produced notifying the user 32A that a step was found and camera alignment will now proceed.

The program next executes an instruction 427A, that causes the voltage potential of the reference level signal 48A to be set to the mid point value previously stored relative to the detected step in light. The program then goes to an instruction 428A, that causes another scanning sequence to be commenced. The program then proceeds to a decision instruction 430A to wait for the scanning sequence to be completed.

When the scanning sequence is completed, the program advances to a decision instruction 432A to determine whether any light is found. If no light is found, the program proceeds to an instruction 440A, that causes all of the light emitting diodes 70A-73A to be illuminated. If light is found, the program advances to a decision instruction 433A.

At decision instruction 433A, a determination is made whether the center of the computer generated reflected light image 24A is within a small imaginary rectangular area of the field of view of the light sensing device 34A. If the image is centered, program goes to an instruction 436A which causes all of the light emitting diodes 70A-73A to be turned off. This provides a visual indication to the user 32A that the device 34A has been properly aligned. If the image is not centered, the program goes to an instruction 434A that causes appropriate ones of the light emitting diodes 70A-73A to be energized for instructing the user 32A how to move the positioning device 44A in a predetermined manner; i.e. up, down, left, right or combinations thereof. The program next executes an instruction 435A which set an alignment timeout timer (not shown).

After the alignment timeout timer has been set, the program advances to an instruction 441A which causes the program to delay for a predetermined period of time. The program then returns to instruction 428A and proceeds as previously described.

From the foregoing, it should be understood that the instruction loop from instruction 428A through 441A enables the user 32A to position the device 44A so the projected image is aligned with an imaginary rectangular square in the field view of the light sensing device 34A.

Referring to instruction 436A, after all of the light emitted diodes 70A-73A have been turned off, the program goes to a decision instruction 438A to determine whether the alignment timeout timer has completed its sequence. If the timer has not completed its sequence, the program goes to the instruction 441A and proceeds as previously described. If the timer has completed its sequence, the program advances to an instruction 442A which causes the image on the display unit 13A to be a bright clear image.

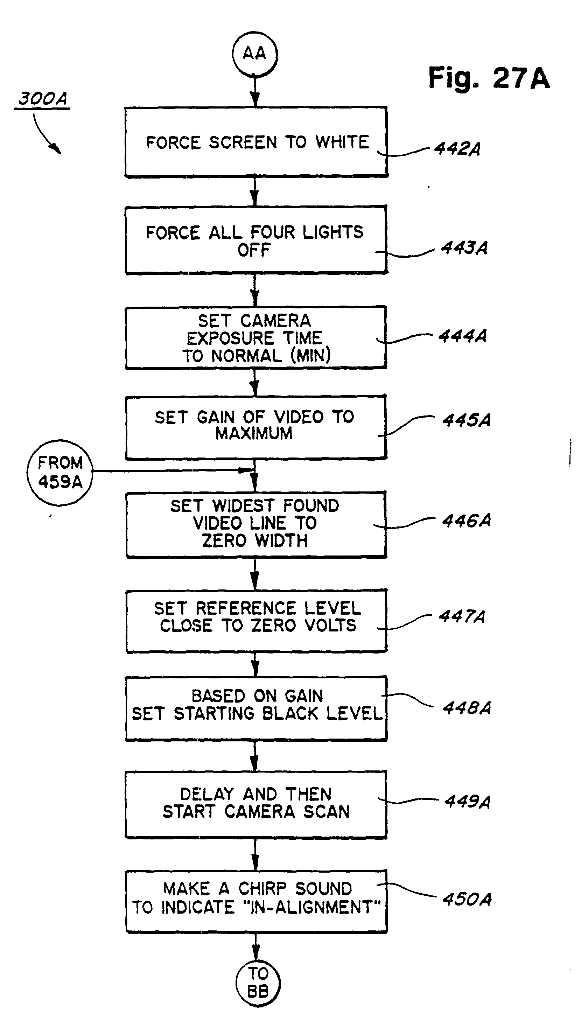

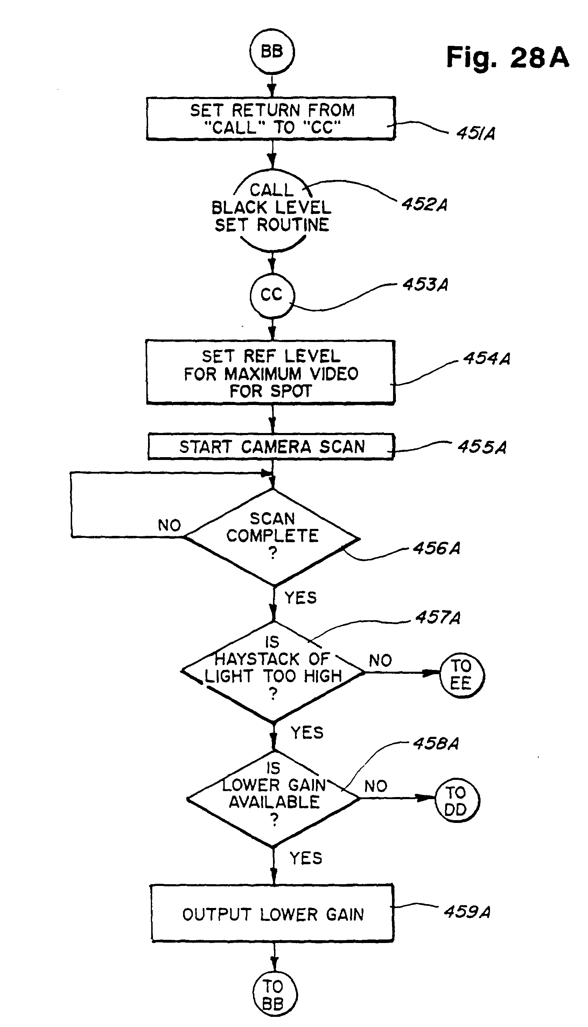

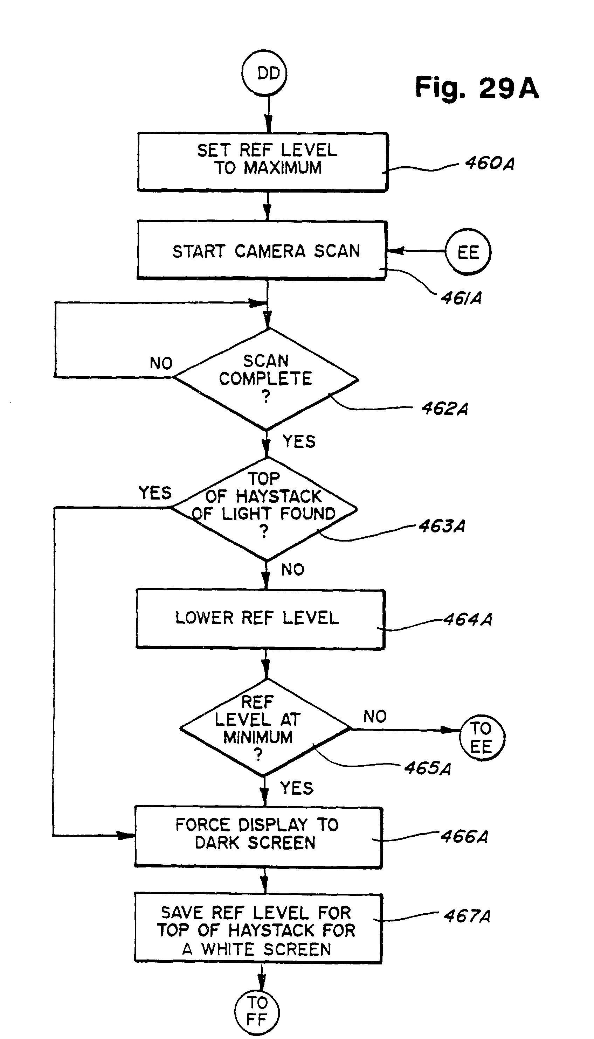

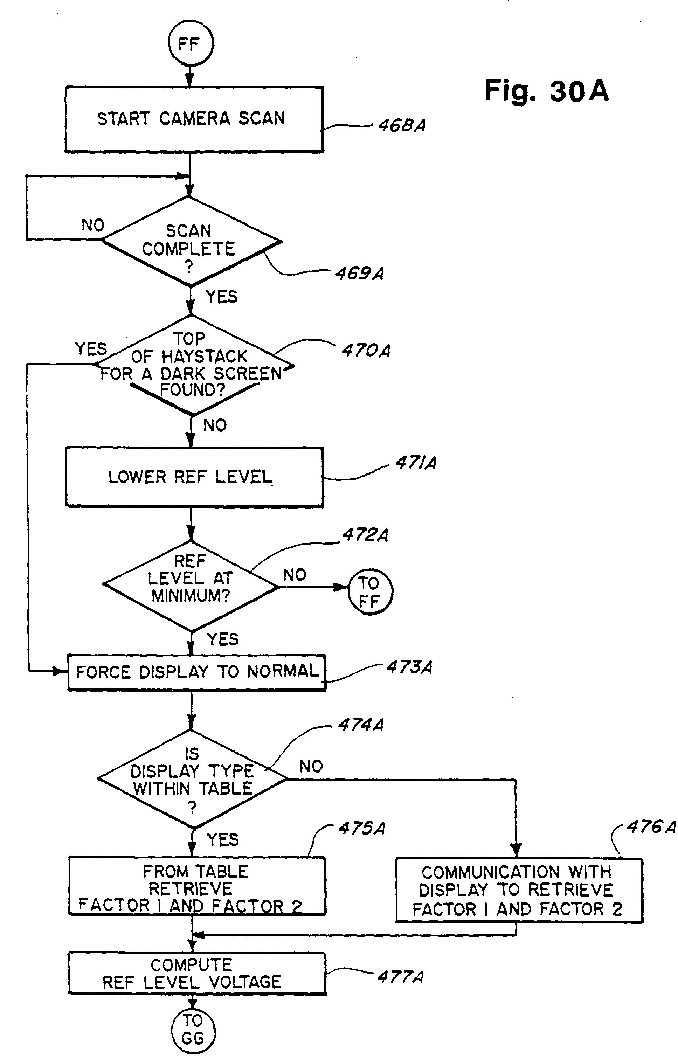

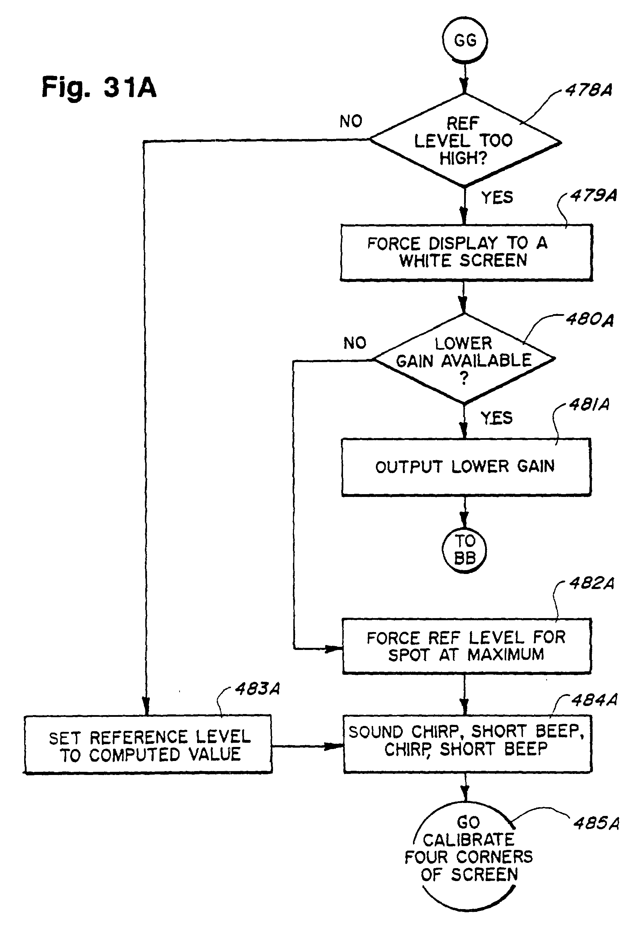

Considering now the sensitivity subroutine 300A in greater detail with reference to FIGS. 27A to 31A, the sensitivity subroutine 300A commences at an instruction 443A, that causes all of the light emitting diodes 70A-73A to be turned off. The program then advances to an instruction 444A, that sets the exposure time of the device 34A to a minimum level. A minimum exposure time is required for sensitivity alignment to assure reliable spot detection and tracking operations.

From instruction 444A, the program executes an instruction 445A which sets the gain level to its maximum level. After the gain level has been set to maximum, the program goes to an instruction 446A, that causes the line width register to be reset to zero.

Next an instruction 447A is executed that causes the reference level signal 48A to be set near zero volts. After the voltage potential of the reference level signal 48A is set, the program goes to an instruction 448A that sets the starting black level based on the gain setting in accordance with Table IA. The program then advances to an instruction 449A, that starts another scanning sequence after about a 60 millisecond delay to allow the calibration arrangement circuits to settle.

When the scanning sequence is commenced, the program advances from instruction 449A to instruction 450A which causes the apparatus 9A to produce an audible "chirp" sound to indicate the optical auxiliary input system 10A is in alignment.

The program next executes a return location instruction 451A that sets a return address to a return location 453A. The program proceeds from an instruction 451A to a call instruction 452A which calls the black level set subroutine 500A.

After the black level set subroutine 500A has been executed, the program returns to the return location 453A and proceeds from thence to an instruction 454A. Instruction 454A sets the voltage potential of the reference level signal 48A to about 4.0 volts for detecting a reflected light image signal 35AA having auxiliary light information. Setting the reference level signal 48A to this predetermined potential level is necessary to adjust the gain for a particular desired signal level.

After setting the reference level signal 48A to the desired potential, the program proceeds to an instruction 455A which commences another scanning sequence. The program then proceeds to a decision instruction 456A to wait for the scanning sequence to be completed.

When the scanning sequence is completed, the program proceeds to a decision instruction 457A to determine whether the selected gain level is too large. In this regard, an excessively large gain setting would preclude detecting that portion of the reflected light information signal 35A that is indicative of the auxiliary light information. It should be noted that the determination is based upon the difference between the maximum and minimum values stored in the horizontal counter exceeding a prestored constant.

If the gain is too large, the program goes to a decision instruction 458A to determine whether a lower gain setting is available. If a lower gain setting is available, the program then advances to an instruction 459A, that causes the next lower gain to be selected. After selecting the lower gain level, the program returns to instruction 451A and proceeds as previously described.

If the gain is not too large as determined at instruction 457A, the program goes to an instruction 461A that will be described hereinafter.

Referring again to the decision instruction 458A, if a lower gain is not available, the program proceeds to an instruction 460A, that causes the reference level signal 48A to be set to a maximum value. The program then goes to the instruction 461A, that causes another scanning sequence.

The program next executes a decision instruction 462A, to determine when the scanning sequence has been completed. When the scanning sequence has been completed, the program goes to a decision instruction 463A to determine whether the maximum level of the reflected light image signal 35AA has been found. If the top of the reflected light image signal 35AA has been found, the program proceeds to an instruction 466A, as will be described hereinafter. If the top of the reflected light image has not been found, the program proceeds to an instruction 464A which reduces the potential value of the reference level signal 48A by a predetermined amount.

The program then advances to a decision instruction 465A to determine whether the potential of the reference level signal 48A has been set to a minimum value. If the signal 48A has not been set to a minimum value, the program returns to the instruction 461A, starting another scanning sequence, and proceeds as previously described. If the reference level signal 48A has been set to a minimum value, the program proceeds to the instruction 466A.

At instruction 466A, the microprocessor 42A generates a signal that causes the image displayed by the display unit 13A to a dark level. The program then advances to an instruction 467A which saves a digital value indicative of the voltage potential of the present reference level signal 48A as a possible maximum potential value for the reflected light image signal 35AA while the display 13A is generating a bright clear image.

The program next executes an instruction 468A which causes another scanning sequence to be started. The program then advances to a decision instruction 469A and waits for the scanning sequence to be completed.

When the scanning sequence is completed, the program advances to a decision instruction 470A to determine whether a maximum level of the reflected image signal 35AA has been determined for the dark reflected image.

If the maximum level of the reflected image signal 35AA is not established, the program proceeds to an instruction 471A, that causes the potential of the reference level signal 48A to be decreased by a predetermined amount. The program next determines, at a decision instruction 472A, whether the potential of the reference level signal 48A is at a minimum level.

If the potential of the reference level signal 48A is not at a minimum level, the program returns to instruction 468A to commence another scanning sequence for detecting the maximum level of the reflected image signal 35AA. If the reference level signal 48A is at a minimum potential, the program advances to an instruction 473A which allows the display unit 13A to display the normal computer generated image 24A in lieu of the dark image.

Referring again to decision instruction 470A, if a maximum vertical count is found for the dark image, the program goes to the instruction 473A and proceeds as previously described; i.e. the display unit 13A is permitted to display the normal computer generated image 24A instead of the dark image.

The program proceeds from instruction 473A, to a decision instruction 474A, to determine whether the display unit 13A is a given type of model. If the unit 13A is a known model, the program proceeds to an instruction 475A which causes a pair of optical correction factors to be retrieved from a look-up table. If the unit 13A is not a known model, the program proceeds to an instruction 476A which causes the calibration arrangement 9A to communicate with the display unit 13A for the purpose of receiving the correction factors indicative of its display characteristics. Table IIIA illustrates the optical correction factors for three types of liquid crystal display units sold and manufactured by Proxima Corporation of San Diego, California.

Table IIIA

| Model of Liquid Crystal Display Units | Factor 1 (Constant) | Factor 2 (Volts) |
|---|---|---|
| A482 | 1.0 | 0.8 |

Table IIIA   (continued)

| Model of Liquid Crystal Display Units | Factor 1 (Constant) | Factor 2 (Volts) |
|---|---|---|
| A722 | 3.2 | 1.0 |
| A822 | 2.57 | 1.0 |
| A822 rear projection | 6.0 | 2.5 |

It should be noted as mentioned earlier, that there is a given relationship between various reflected light image signals 35A indicative of bright clear images, dark images and those portions of the corresponding reflected light image signal 35A which are indicative of auxiliary light information produced from an incandescent light source, a low intensity laser light source, and a high intensity laser light source. The relationship also extends to the projection direction of the reflected light image; i.e. front projection or rear projection. In this regard, the following formula has been determined experimentally for the different type of display indicated in Table IIIA while displaying dark images, bright or clear light images and auxiliary light images produced from incandescent and laser light sources of having different luminance levels:

$$\frac{Voltage\ Potential\ of}{Reference\ Level\ Voltage} = (Factor\ 1)$$

$$\left(\begin{array}{c}Maximum\ Voltage\ Potential \\ of\ Clear\ Light \\ Reflected\ Image\ signal\end{array} - \begin{array}{c}Maximum\ Voltage\ Potential \\ of\ Dark\ Light \\ Reflected\ Image\ Signal\end{array}\right)$$

$$+\ Factor\ 2\ +\ \begin{array}{c}Maximum\ Voltage\ Potential \\ of\ Clear\ Light \\ Reflected\ Image\ Signal\end{array}$$

The above mentioned formula was derived by plotting the minimum voltage potential of the reference level signal to distinguish between a high intensity auxiliary light information beam and a low intensity auxiliary light information beam as a function of the difference between the voltage potential of the reference level when a bright image is displayed and when a dark image is displayed. FIG. 33A is a graphical representation for two of the display units listed in Table IIIA. More particularly, the A722 is represented by a graph 98A and the A822 is represented by a graph 99A.

Considering the computation of the reference level voltage in greater detail with reference to FIG. 33A, when Factor 1 equals one and Factor 2 equals zero the previously mentioned equation reduces to a basic formula given by:

where b = the reference level voltage

$$y = b+c = b+(b-d) = 2b-d$$

relative to the bright image information signal 60A;
c = the difference between the reference level voltage relative to the bright image information signal 60A and the reference level voltage relative to the dark image information 61A; and
d = the reference level voltage relative to the dark image information signal 61A.

From the basic equation (y = b+c), it can be determined readily that the low intensity auxiliary light information, indicated generally at 68, must be less than c to avoid being passed by the comparator 46 when the reference level voltage is set at y volts.

In a similar manner, it also can be determined readily that high intensity auxiliary light information, indicated generally at 69, must be greater than y in order to be passed by the comparator 46 when the reference level voltage is set at y volts. Thus, the voltage levels for the low intensity auxiliary light information 68 ($B_{LOW/MAX}$) and the high intensity auxiliary light information 69 ($B_{HIGH/MIN}$) can be expressed as follows:

*Minimum Voltage for High Intensity Beam = y-d = $B_{HIGH/MIN}$*

*Max Voltage for Low Beam Intensity = c = $B_{LOW/MAX}$*

From the foregoing it should be understood that $B_{LOW/MAX}$ must always be less than c or the voltage differences defined by the contrast of a given panel. Similarly, it should be understood that $B_{HIGH/MIN}$ must always be greater than b + c.

In order to adjust for different types of display units, the factors, Factor 1 and Factor 2 are introduced into the above mentioned basic formula as follows:

*y = (factor2+b) + factor1 (c)*

the equation for the compute reference voltage thus becomes:

*y = mx + z*

*where m = factor1;*

*x = c = b - d; and*

*z = b + factor2*

From the foregoing, it should be understood that the signal information for the low beam auxiliary light information will never be passed by the comparator 46.

After acquiring the factor information, the program proceeds to an instruction 477 which computes the reference level voltage based on the previously mentioned formula. The program than proceeds to a decision instruction 478 to determine whether the computer reference level voltage exceeds the maximum permissible potential of the reference level signal 48A. If the potential is not too high, the program goes to an instruction 483A which causes the reference level signal 48A to be set to the computed voltage potential. After the voltage potential of the reference level signal 48A is set, the program goes to an instruction 484A which causes a series of audible sounds of "chirp," short "beep," "chirp" followed by short "beep" to notify the user 32A the system is ready for corner location calibration. The program then goes to a call instruction 485 which calls the corner calibration routine more fully described in copending U.S. patent application Serial No. 07/611,416, now U.S. Patent 5 181 015.

If the potential of the reference level signal 48A is too large, the program proceeds from instruction 478A to an instruction 479A, that forces the displayed image to a bright clear image. The program next executes a decision instruction 480A to determine whether a lower gain is available.

If a lower gain is not available at the decision instruction 480A, the program goes to an instruction 482A which forces the potential value for the reference level signal 48A to a maximum potential.

If a lower gain is available at decision instruction 480A, the program proceeds to an instruction 481A which causes the gain to be set to the next lower level. After the gain is set at the lower level, the program returns to instruction 451A and proceeds as previously described. Referring again to the instruction 482A, after instruction 482A is executed the program goes to the instruction 484A and proceeds as previously described.

From the foregoing, it will be understood by those skilled in the art, that if the computed reference level voltage is greater than the range of the comparator 46A, the program via the steps described in instructions 478A, 479A, 480A and 481A causes the gain of the amplifier arrangement 39A to be decreased in order to recalculate an appropriate potential for the reference level signal 48A.

Considering now the black level set routine 500A in greater detail with reference to FIG. 32A, the black level set routine 500A illustrates the steps taken by the microprocessor 42A to offset the reflected light information signal 35AA so that its adjusted to the operating range of the comparator 46A. The black level set routine 500A starts at a commence instruction 502A and proceeds to a decision 504A to determine whether the charge couple device 34A has completed its scan. If the scan has not been completed, the program waits at decision 504A until the scan is completed.

When the scan is completed, the program proceeds to a decision instruction 506A to determine whether the widest line detected during the last scan period, is greater than the last saved widest line. In this regard, if any part of the computer generated image 24A is detected, it will result in a scan line greater than zero.

If the widest line detected is larger than the last save line width, the program advances to an instruction 508A that causes the microprocessor 42A to save the new wider line information and the current black level setting. The program then proceeds to an instruction 514A, that causes the voltage potential of black level signal 43A to be dropped by a given amount based on the present gain setting. Table IIA shows the relationship between gain and the black level settings.

Considering decision instruction 506A once again, if the widest line of the last performed scan, is not greater than the last saved line, the program proceeds to decision instruction 512A to determine whether the current widest line is less than, the last saved line less a constant K. If the current widest line is not, the program goes to the instruction 514A that causes the black level to be dropped by a given amount based on the gain setting. As the gain setting at this initial time is set at its lowest level, the black level is dropped by 16 levels.

Table IIA

| Gain | Amount Black Level Decreased |
|---|---|
| lowest | 16 |
| 2nd lowest | 12 |
| 3rd lowest | 8 |
| highest | 4 |

Considering decision 512A again, if the current widest line saved is less than the saved line minus a predetermined constant K, the program advances to an instruction 513A. At the instruction 513A, the black level output is saved for widest line. The program then goes to a return instruction 515A which causes the program to return to a predetermined location.

Referring once again the instruction 514A, after instruction 514A is executed, the program goes to a decision instruction 516A to determine whether the black level is set at below a predetermined minimum value. If the black level is not below the minimum value, the program proceeds to instruction 518A, that causes the microprocessor 42A to output the black level signal. After the black level signal 43A is generated, the program proceeds to an instruction 520A to start another scan sequence after about a 60 millisecond delay. The program then returns to the commence instruction 502A and proceeds as previously described.

At decision 516A, if the black level signal 43A is set below the minimum value, the program advances to a decision 522A to determine whether the saved widest black line is greater than zero. If the widest black line is greater than zero, the program goes to instruction 513A and proceed as previously described.

If the widest black line is not greater than zero, the program goes to a decision 524A to determine whether the constant to decrease the black level is less than two. If the constant is less than two, the program proceeds to an instruction 526A. At instruction 526A, the black level output is set to its minimum value. From instruction 526A the program goes to instruction 513A and proceeds as previously described.

Referring again to decision instruction 524A, if the constant is not less than 2, the program goes to an instruction 528A that causes the constant to be decreased and the black level signal 48A to be reset to its maximum potential. After executing instruction 528A, the program goes to instruction 518A and proceeds as previously described.

Referring now to the drawings and more particularly to FIG. 4A, there is shown a calibration arrangement 109A for calibrating an optical auxiliary input system 110A, and which is constructed in accordance to the present invention. The optical auxiliary input system 110A is substantially similar to the optical auxiliary input system 10A and is not shown for calibration purposes.

Considering now the calibration arrangement 109A in greater detail with reference to FIG. 4A, the calibration arrangement 109A includes a signal amplifier circuit 139A and a signal discrimination arrangement 140A. The discrimination arrangement 140A is similar to the arrangement 40A and is not shown for clarification purposes.

Considering now the signal amplifier circuit 139A in greater detail with reference to FIG. 4A, the signal amplifier circuit 139A generally includes an operational amplifier 176A having a pair of input terminals 178A and 179A, and a variable feedback element 181A. The variable feedback element 181A is coupled between the input terminal 178A and an output terminal 182A of the operational amplifier 176A and is controlled by a microprocessor 142A forming part of the signal discrimination arrangement 140A. In this regard, the microprocessor 142A generates a gain control signal 135A that selects the gain of the operational amplifier 176A via the variable feedback element 181A. The variable feedback element 181A is a digital potentiometer that enables up to four discrete gain factors to be selected.

Although in the preferred embodiment of the present invention the variable feedback element 181A is a digital potentiometer, it will be understood by those skilled in the art that other types and kinds of variable feedback elements, such as a digital to analog converter or a digital gain chip, can be employed. It should also be understood that additional amplifier stages can also be employed to provide intermediate gain levels.

As best seen in FIG. 4A, the input terminal 179A is coupled to a black level signal 143A generated by the microprocessor 142A. The black level signal 143A, enables the output signal of the operational amplifier 176A to be offset.

Referring now to the drawings and more particularly to FIG. 5A, there is shown a calibration arrangement 209A for calibrating an optical auxiliary input system 210A, and which is constructed in accordance to the present invention. The optical auxiliary input system 210A is substantially similar to the optical auxiliary input system 10A and is not shown for clarification purposes.

Considering now the calibration arrangement 209A in 5 greater detail with reference to FIG. 5A, the calibration arrangement 209A includes a signal amplifier circuit 239A and a signal discrimination arrangement 240A. The discrimination arrangement 240A is similar to the arrangement 40A and is not shown for clarification purposes.

Considering now the signal amplifier circuit 239A in greater detail with reference to FIG. 5A, the signal amplifier circuit 239A generally includes an operational amplifier 276A having a pair of input terminals 278A and 279A, and a voltage controlled device 281A. The voltage controlled device 281A is coupled between the input terminal 278A and an output terminal 282A of the operational amplifier 276A and is controlled by a microprocessor 242A forming part of the signal discrimination arrangement 240A. In this regard, the microprocessor 242A is similar to microprocessor 42A and generates a gain control signal 235A that selects the gain of the operational amplifier 276A via the voltage control device 281A. The voltage controlled device 281A is a voltage controlled impedance device that enables a plurality of gain factors to be selected.

As best seen in FIG. 5A, the input terminal 279A of the operational amplifier 276A is coupled to a black level signal 243A generated by the microprocessor 242A. The black level signal 243A, enables the output signal of the operational amplifier 276A to be offset.

Referring now to the drawings and more particularly to FIG. 6A, there is shown a calibration arrangement 309A for calibrating an optical auxiliary input system 310A, and which is constructed in accordance to the present invention. The optical auxiliary input system 310A is substantially similar to the optical auxiliary input system 10A and is not shown for calibration purposes.

Considering now the calibration arrangement 309A in greater detail with reference to FIG. 6A, the calibration arrangement 309A includes a signal amplifier circuit 339A and a signal discrimination arrangement 340A. The discrimination arrangement 340A is similar to the arrangement 40A and is not shown for clarification purposes.

Considering now the signal amplifier circuit 339A in greater detail with reference to FIG. 6A, the signal amplifier circuit 339A generally includes an operational amplifier 351A having a pair of input terminals 352A and 353A and feedback resistor 354A for high gain operation. The feedback resistor 343A is connected from the input terminal 352A to an output terminal 356A of the operational amplifier 351A. One of the input terminals 352A is connected via a conductor 355A, to a black level signal 343A generated by a microprocessor 342A forming part of the signal discrimination arrangement 340A. The black level signal 342A functions as an offset voltage for the amplifier 351A.

The other one of the input terminals 353A is connected to a voltage controlled impedance device 362A for helping to control the gain of the operational amplifier 351A.

The voltage controlled impedance device 362A has a pair of input terminals 362A and 363A. One of the input terminals 362A is connected to a gain select signal 347A generated by the microprocessor 342A. The gain select signal 347A causes the impedance of the device 362A to be either high or low for attenuating the input signal to the amplifier 351A as will be explained hereinafter.

The other one of the input terminals 364A is connected to a reflected light information signal 335A generated via the optical auxiliary input system 310A.

In operation, the feedback resistor 354A has a predetermined impedance that is selected to cause the operational amplifier 351A to have a maximum gain characteristic. The voltage controlled impedance device 362A is connected in the input path to the operational amplifier 351A as functions as an attenuator. In this regard, when the impedance of the device 362A is low, the input signal to the amplifier 351A is not attenuated and the output signal of the amplifier 351A has its maximum potential. Conversely, when the impedance of the device 362A is high, the input signal to the amplifier 351A is attenuated causing the output signal of the amplifier 351A to have its minimum potential.

Referring now to the drawings, and more particularly to FIGS. 1B and 2B, there is illustrated an optical auxiliary input arrangement generally indicated at 9B, for emulating a mouse 10B employed in an optical system generally indicated at 11B, and which is constructed in accordance to the present invention.

The optical system 11B, is more fully described in the above mentioned U.S. patent application Serial No. 07/433,029, now abandoned, and includes a video information source, such as a personal computer 12B, and a liquid crystal display unit 13B for displaying a primary image 24B indicative of the primary image information generated by the computer 12B. The liquid crystal display unit 13B is positioned on the stage of an overhead projector 20B for enabling the displayed primary image information to be projected onto a viewing surface, such as a screen 22B.

The optical system 11B also includes a light sensing device, such as a raster scan charge coupled device or camera 34B for generating a reflected light information signal 35B indicative of the luminance levels of the video images and other light reflecting from the surface of the screen 22B.

As best seen in FIGS. 1B and 2B, the optical auxiliary input arrangement 9B generally includes a user actuated dual intensity laser beam light generating device 26B for generating auxiliary light information, such as a spot of reflected light 27B for emulating the mouse 10B and for facilitating the modifying or changing of the primary image information displayed by the liquid crystal display unit 13B.

The optical auxiliary input arrangement 9B also includes a signal processing unit 28B coupled between the light sensing device 34B and the computer 12B for converting the auxiliary light information generated by the device 34B into coordinate information for emulating the mouse 10B. The signal processing unit 28B is substantially similar to signal processing unit 28A and will not be described in greater detail.

The optical auxiliary input arrangement 9B further includes a communication interface generally indicated it 45B that enables both the low speed mouse 10B and the high speed light generating device 26B via the signal processing unit 28B, communicate with the computer 12B at substantially different baud rates and data formats. In this regard, while the mouse 10B normally communicates with the computer 12B at a baud rate of about 1200 characters per second, the light generating device 26B, via the communication interface 45B, communicates with the computer 12B at a baud rate of about 9600 characters per second. This accelerated baud rate facilitates the tracking of the auxiliary light information entered by a user via the light generating device 26B.

For the purpose of enabling the light generating device 26B to emulate the mouse 10B, the optical auxiliary input arrangement 9B also includes a direct image double click algorithm 150B and a below screen double click algorithm 500B for enabling the light generating device 26B to simulate double click mouse operations and a baud rate algorithm 300B for controlling the baud rate of the communication interface 45B. The firmware for baud rate and data format algorithm 300B is located partially within the optical auxiliary input arrangement 9B and partially within the computer 12B.

Considering now the operation of the optical input arrangement 9B, when the computer 12B commences generating video information, the liquid crystal display unit 13B generates an initiation signal that is coupled to the signal processing unit 28B which beeps to notify the user that he or she may initiate an alignment procedure which is more fully described herein.

In this regard, the user depresses an alignment button 55B that causes a series of visual prompts to be generated for informing the user how to adjust the position of the light sensing device 34B to capture the entire projected image 24B. Once the user has adjusted the position of the device 34B, the user calibrates the signal processing unit 28B by identifying the corner locations of the image 24B with the light generating device 26B. In this regard, the user causes a spot of light to be reflected on and off at each respective corner of the image 24B so the signal processing unit 28B will be able to generate accurate and reliable coordinate information in response to the detection of a spot of light produced by the device 26B. This calibration process is more fully described in copending U.S. patent application 07/611,416 and will not be described in further detail.

It should be understood by those skilled in the art, that since the field of view 25B of the device 34B is substantially larger than the image 24B, certain ones of the raster scan coordinates of the field of view of the device 34B are outside of the image 24B. These extraneous raster scan coordinates are utilized to facilitate double click mouse features via the below screen double click algorithm 200B as will be explained hereinafter.

At the end of the calibration process, the signal processing unit 28B generates an initialization signal that enables the light generating device 26B to emulate a mouse.

Considering now the signal processing unit 28B in greater detail with reference to FIGS. 1B and 2B, the signal processing unit 28B generally include a signal amplifier circuit 39B for increasing the strength of the reflected light information signal 35B generated by the light sensing device 34B and a signal discrimination apparatus generally indicated at 40B, for discriminating auxiliary light information from the other information components in the reflected light information signal 35B.

The signal discrimination apparatus 40B includes a comparator 46B, for facilitating discriminating between signals indicative of the various sources of light reflecting from the viewing surface 22B and a microprocessor 42B (FIG. 2B) for controlling a reference level signal 48B utilized by the comparator 46B for discrimination purposes. In this regard, for discrimination purposes, it should be understood that the light reflecting from the viewing surface 22B, has a plurality of luminance levels generally including background ambient light, primary image light, such as the image 24B, indicative of primary image information, and user 32B generated auxiliary image light, such as the spot of light 27B, indicative of auxiliary light information.

The microprocessor 42B also controls the exposure rate of the light sensing device 34B, gain selection for the amplifier arrangement 39B, and an offset black level signal 43B that is more fully described herein.

Considering now the signal discrimination apparatus 40B in greater detail with reference to FIG. 2B, the signal discrimination apparatus 40B controls the exposure rate of the charge couple device 34B, the reference level signal 48B for the comparator 46B, and the black level and gain select for the signal amplifier arrangement 39B. In this regard, in order to convert the digital control signals produced by the microprocessor 42B to analog voltages, the signal discrimination apparatus 40B includes a set of digital to analog converters including a reference level signal converter 82B to a positive input terminal of the comparator 46B, and a black level signal converter 83B coupled to the input of the amplifier arrangement 39B. As best seen in FIG. 2B, the signal discrimination apparatus 40B also includes a counter arrangement 86B and a timing generator 88B. The microprocessor 42B controls the exposure time via the timing generator 88B.

The counter arrangement 86B includes a horizontal counter and latching arrangement 89B and a vertical counter arrangement 90B. The counter arrangement 86B is synchronized with a raster scan sequence of the charge coupled device by a pixel clock generated by the timing generator 88B. In this regard, the microprocessor 42B and timing generator 88B cooperate together to control the exposure rate and scanning sequence of the charge couple device 34B. More particularly, they cooperate together so that the device 34B will produce an output signal of sufficient magnitude in response to the detection of light.

Considering now the double click algorithm 150B in greater detail with reference to FIGS. 3B to 5B, the double click algorithm 150B commences at a start instruction 152B (FIG. 4B) that is entered when the microprocessor 42B has been calibrated to generate raster scan information corresponding to pixel coordinate information of the image 24B.

The program proceeds from instruction 152B to an instruction 154B, that causes an internal memory location of the microprocessor 42B designated as "saved spot" to be initialized for the purpose of storing coordinate locations of auxiliary light information. The program next proceeds to an instruction 156B, that causes an internal spot timer 64B to be cleared and a spot on/off flag to be reset to off. In this regard, when the spot on/off flag is set to "on" the flag is indicative that a previous spot of auxiliary light, such as the spot 27B, was detected by the device 34B and processed by the microprocessor 42B. If the spot on/off flag is set to "off," the flag is indicative that a previous spot of auxiliary light was not detected by the light sensing device 34B.

After instruction 156B is executed, the program proceeds to an instruction 158B that causes the data from the charge coupled device 34B to be scanned by the microprocessor 42B a scanning sequence. The program then goes to a decision instruction 160B, to determine whether the scanning sequence has been completed. If the scanning sequence is not completed, the program waits at instruction 160B.

When the scanning sequence is completed, the program advances to a decision instruction 162B, to determine whether a spot of auxiliary light was detected. If a spot of auxiliary light was not detected, the program proceeds to a decision instruction 164B to determine whether the spot on/off flag was off. If a spot of auxiliary light was detected, the program proceeds to a decision instruction 172B to determine whether the spot on/off flag was "on."

If the spot on/off flag was "off" at decision instruction 164B, the program advances to an instruction 166B that causes the internal spot timer 64B to be advanced by one time increment. The program then goes to a decision instruction 168B (FIG. 5B), to determine whether the light generating device 26B has been deactivated for greater than a certain predetermined period of time t, where t is between about 0.5 second and 1.0 seconds. A more preferred time t is between about 0.6 seconds and 0.9 seconds, while the most preferred time t is about 0.75 seconds.

If the light generating device 26B has been deactivated for longer than time t, the program advances to an instruction 170B that causes the microprocessor 42B to set an internal move flag, that permits the user to move the position of the auxiliary spot of light 27B within an imaginary rectangular area of m by n raster scan pixel locations, such as an area 29B, for double click simulation purposes.

If the light generating device 26B has not been deactivated for longer than time t, the program returns to the instruction 158B to start another scanning sequence. The program then proceeds from instruction 158B as previously described.

Referring again to the decision instruction 172B, if the spot on/off flag was "on," the program goes to an instruction 174B that causes internal spot timer 64B to be cleared. The program then advances to an instruction 176B.

If the spot on/off flag was on at decision instruction 172B, the program advances to the instruction 176B that cause the timer 64B to be advanced by one time increment. The program then proceeds to an instruction 178B, that causes the spot on/off flag to be set to its "on" condition.

After instruction 178B is executed the program goes to a decision instruction 180B, to determine whether the timer 64B has exceeded a predetermined period of time T, where T is between about 0.5 seconds and 1.0 seconds. A more preferred time T is between about 0.6 seconds and 0.9 seconds, while the most preferred time T is about 0.75 seconds.

If the timer 64B has not exceeded the predetermined period of time T, the program advances to a decision instruction 184B. If the timer 64B has exceeded the predetermined period of time T, the program advances to an instruction 182B that causes the move flag to be set to permit the user to move the position of the auxiliary spot of light 27B within an imaginary rectangular area, such as the area 29B for double click simulation purposes. In this regard, as previously noted the imaginary rectangular area is m pixels wide and n pixels tall, where m is about 12 pixels and n is about 6 pixels. A more preferred m is about 8 pixels and a more preferred n is about 4 pixels. The most preferred m pixels and n pixels is about 4 pixels and 2 pixels respectively.

From the foregoing, it will be understood by those skilled in the art, that so long as the user is able to keep the spot of light 27B within the imaginary rectangular area surrounding an initial detection location the microprocessor 42B will seek to determine whether the user is attempting to execute a double click operation.

Referring now to decision instruction 184B, if the move flag is not set, the program advances to decision instruction 186B, to determine whether a previously saved auxiliary spot location is near the current auxiliary spot location; i.e. is the current spot of auxiliary light within the imaginary rectangular area from where the previous spot of auxiliary light was detected. If the current spot of auxiliary light is within the imaginary area, the program advances to an instruction 188B (FIG. 5B). If the current spot of auxiliary light is not within the imaginary area, the program advances to an instruction 187B (FIG. 5B).

For explanation purposes, it should be understood that the double click feature requires the user to activate, deactivate activate and deactivate, the light generating device 26B, while holding the auxiliary light beam sufficiently steady to cause the spot to remain within an imaginary rectangular area, such as the area 29B, while the above mentioned sequence is completed.

Referring again to decision instruction 186B, as the saved position was initialized at instruction 154B, the program proceeds from the decision instruction 186B to the instruction 187B that causes the move flag to be set. Instruction 187B also causes the microprocessor 42B to store the raster scan location of the current auxiliary spot as a saved spot location. The program then proceeds to an instruction 191B that converts the raster scan location into coordinate information that corresponds to image coordinates.

After the raster scan location has been converted into coordinate information, the program advances to an instruction 193B that causes the communication interface 45B to transmit the coordinate information to the computer 12B.

Referring again to decision instruction 184B, if the current spot of auxiliary light has not been on for more than T seconds, and the spot on/off flag is on, the program advances to an instruction 189B as the move flag will have been set at instruction 182B. Instruction 189B causes the microprocessor 42B to store the current spot location as a saved position and then proceeds to the instruction 191B. The program proceeds from instruction 191B as previously described.

Referring again to decision instruction 184B, if the current spot of auxiliary light has been on for less than T seconds, and the spot on/off flag is off, the program advances to the decision instruction 186B as the move flag will not have been set at instruction 182B. Decision instruction 186B, causes the microprocessor 42B to determine whether the location of the saved auxiliary light spot is near the location of the current auxiliary light spot. If the spot is within the area 29B for example, the program advances to the instruction 188B that causes the saved auxiliary light location to be converted into coordinate information. The program then goes to an instruction 190B, that causes the coordinate information to be transmitted to the computer 12B via the communication interface 45B. After transmitting the coordinate information to the computer 12B, the program returns to instruction 158B and proceeds as previously described.

From the foregoing, it should be understood that the same coordinate information will be transmitted to the computer 12B so long as the user executes the double click operation within the predetermined period of time t and T respectively and keeps the auxiliary light spot 27B within the boundaries of an associated imaginary rectangular area, such as the area 29B.

Referring again to decision instruction 164B (FIG. 4B), if the spot on/off flag is not "off," the program advances to an instruction 165B (FIG. 5B) that causes the microprocessor 42B to set the spot on/off flag to "off." The program then proceeds to an instruction 167B, that causes the timer 64B to be cleared.

After the timer 64B has been cleared at instruction 167B, the program returns to instruction 158B and proceeds as previously described.

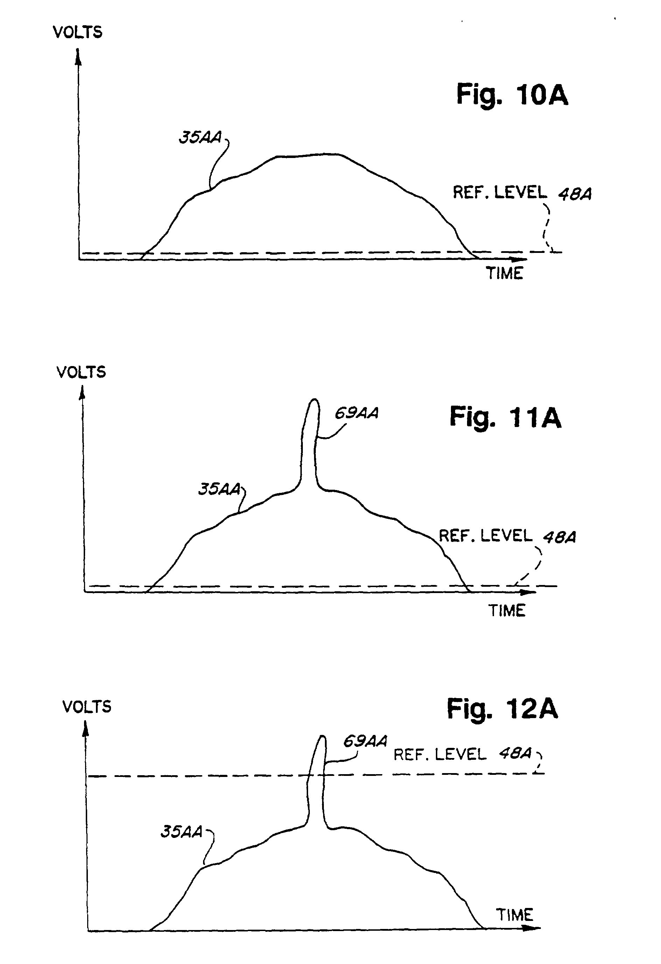

Considering now the baud rate algorithm 300B in greater detail with reference to FIGS. 6B-8B and 10B, the baud rate algorithm 300B begins at a start instruction 302B (FIG. 10B) and proceeds to a decision instruction 303B to determine whether the calibration of the charge couple device 348 has been completed. If calibration has not been completed the program waits at instruction 303B.

When calibration has been completed, the program goes to a decision instruction 304B to determine whether auxiliary light information has been received by the microprocessor 42B. If auxiliary light information has not been received, the program waits at decision instruction 304B until auxiliary light information is received.

When auxiliary light information is received, the program advances to decision instruction 305B to determine whether a dmux signal and a smux signal has been asserted. If the signals have not been asserted, the program goes to an instruction 307B that causes the dmux and smux signals to be asserted. The smux signal informs the computer 12B that the baud rate must be switched to the 9600 baud rate.

If the dmux and smux signals have already been asserted, the program goes to a decision instruction 306B to determine whether the auxiliary light image is new or has moved from its previous position.

Referring again to instruction 307B, once the dmux and smux signals have been asserted, the program goes to the decision instruction 306B. Also, the program executes a call instruction 309B that call an interrupt subroutine 325B that will be described hereinafter in greater detail.

When the smux signal is received by the computer 12B, the computer 12B passes control to the interrupt subroutine 325B implemented in the software of the computer 12B.

Referring to decision instruction 306B, if the light has moved or is new, the program goes to a decision instruction 370B to determine whether auxiliary information is ready to be sent to the computer 12B. If the information is not available, the program waits at instruction 370B.

When the auxiliary information is available to be transmitted to the computer 12B, the program advances to an instruction 372B that causes the microprocessor 42B to transmit the auxiliary light information to the computer 12B. The program then goes to a decision instruction 374B to determine whether the auxiliary light information has been transmitted to the computer 12B. If the information has not been transmitted the program waits at decision instruction 374B until the transmission is completed.

Once the transmission of the auxiliary light information has been completed, the program advances to an instruction 376B that causes the dmux signal and smux signals to be negated to inform the computer 12B that the light generating device 26B no longer requires the serial port. The program then changes the state of the dmux and smux signals which causes the interrupt subroutine 325B (FIGS. 6B-8B) to be executed by the computer 12B. The computer 12B then switches the interface parameters. The program also returns to the decision instruction 304B and proceeds as previously described.

Considering now the interrupt subroutine 325B in greater detail with reference to FIGS. 6B-8B, the interrupt subroutine 325B which resides in the computer 12B commences at an interrupt entry instruction 327B (FIG. 7B) and proceeds to an instruction 329B that causes a set of CPU registers (not shown) in the computer 12B to be saved. The program then proceeds to an instruction 331B that causes a set of working registers to be loaded with information to address the serial port residing in computer 12B. The program then goes to an instruction 333B that causes a serial port interrupt identification register (not shown) to be retrieved.

The program then advances from instruction 333B to a decision instruction 335B, to determine whether the retrieved information was a modem status interrupt or data available interrupt.

If the retrieved information is indicative of a modem status interrupt, the program advances to an instruction 337B that causes the computer 12B to read and save the modem status from the serial port. If the retrieved information indicates a data available interrupt, the program advances to an instruction 340B that causes the received data to be read and stored.

Referring again to the instruction 337B, after the computer 12B reads and saves the modem status, the program proceeds to an instruction 339B, that causes the computer 12B to issue an end-of-interrupt operation to an interrupt subsystem (not shown). The program then goes to a decision instruction 341B to determine whether the data carrier detect signal changed causing the modem status interrupt.

If the data carrier detect signal did not change, the program proceeds to an instruction 360B (FIG. 8B) that causes the CPU registers to be restored and control returned to computer 12B.

If the decision instruction 341B determines the data carrier detect signal changed, the program proceeds to an instruction 343B that prepares the computer 12B to change the serial port parameters. The program then advances to a decision instruction 350B (FIG. 8B) that determines whether the state of the data carrier detect signal specifies that the communication interface 45B is set for the mouse 10B or the light generating device 26B via the microprocessor 42B.

If the data carrier detect signal specifies the mouse 10B, the program goes to an instruction 352B that causes the communication registers to be loaded with a set of mouse parameters that includes a baud rate parameter, a data bit packet parameter, a parity parameter, and a stop bit parameter. After loading the communication register with the mouse parameters, the program goes to an instruction 354B that causes the new baud rate to be loaded into a serial port interface chip (not shown) to enable communication at the new baud rate. After loading the serial chip, the program goes to the instruction 360B and proceeds as previously described.

Referring again the decision instruction 350B (FIG. 8B), if the data carrier detect signal specifies the light generating device 34B via the microprocessor 42B, the program advances to an instruction 356B that causes the communication registers to be loaded with optical input device parameters that include a baud rate parameter, a data packet parameter, a parity parameter, and a stop bit parameter. After loading the communication registers, the program goes to instruction 354B and proceeds as previously described.

After the data received on the serial port is stored at instruction 340B, the program advances to a decision instruction 342B to determine whether a complete packet or record has been received. If the record is not complete, the program goes to an instruction 346B that causes an end-of-interrupt signal to be generated to the interrupt subsystem the end-of-interrupt signal is generated, the program goes to instruction 360B and proceeds as previously described.

If a determination is made at decision instruction 342B that the packet was complete, the program goes to an instruction 341B and processes the coordinate information received from either the mouse 10B or the optical input device 34B. After processing the data the program advances to instruction 346B and proceeds as previously described.

Referring now to the communication interface 45B in greater detail with reference to FIG. 11B, the communication interface 45B includes a gang switch 49B having three discrete switches 50B, 51B and 52B for dynamically switching the data path between a low baud rate device, such as 1200 baud, and a (high) baud rate device, such as 9600 baud. The communication interface also includes a pull up resistor 82B for helping to facilitate the state of the system operation (when the optical auxiliary input device 78B is not plugged into connector 61B) and the mouse 10B is used, dmux signal is a logical low.

The communication interface 45B further includes a set of 3 DB9 pin connectors. In this regard, the set of connectors include a host computer connector 60B for the computer 12B, an optical input device connector 61B for the microprocessor 42B, and a mouse connector 62B for the mouse 10B.

The signal names of the connections between the computer 12B and the input devices, such as the optical auxiliary input arrangement 9B and the mouse 10B, are defined by an IEEE RS-232C specification serial port to external modem as mapped to a 9-pin connector by IBM corporation.

Considering now the host computer connector 60B in greater detail with reference to FIG. 11B, Table IB illustrates the connector pin numbers and the signals carried by each respective pin.

Table IB

| PIN NUMBER | SIGNAL ABBREVIATION | SIGNAL FUNCTION |
|---|---|---|
| 1 | CD | Signal to the host computer that the base sending and receiving tones have been detected by the receiving and transmitting modems. |
| 2 | RD | This line to the host computer receives the data from the external device. |
| 3 | TD | This line from the host computer sends the data to the external device. |
| 4 | DTR | A signal from the host computer telling the external device that it is 'ready', powered on, or operating. |
| 5 | GND | Ground connection. |
| 6 | DSR | A signal from an external device telling the host computer that it is 'ready', powered on, or operating. |
| 7 | RTS | A signal from the host computer asking the external device if it is ok to send data to the external device. |
| 8 | CTS | A signal from the external device to the host computer, in response to the RTS from the host, when transmission is ready to proceed. |
| 9 | RI | A signal from the external device to the host computer that the phone on the remote end of the external device is ringing. |

Considering now the optical input device connector 61B in greater detail with reference to FIG. 11B, Table IIB provides the connector pin numbers and signals caused by each respective pin, as used by the communication interface 45B.

Table IIB

| PIN NUMBER | SIGNAL ABBREVIATION | SIGNAL FUNCTION |
|---|---|---|
| 1 | dmux | A digital control signal from CYCLOPS to set the switch to either the CYCLOPS or mouse position. |
| 2 | TD | Data transmitted from CYCLOPS is sent to the host computer over this line. |
| 3 | RD | Data transmitted to CYCLOPS from the host computer is received over this line. Data from the host computer is received both by CYCLOPS and the mouse. |

Table IIB   (continued)

| PIN NUMBER | SIGNAL ABBREVIATION | SIGNAL FUNCTION |
|---|---|---|
| 4 | | No connection. |
| 5 | GND | Ground connection. |
| 6 | | No connection |
| 7 | | No connection |
| 8 | | No connection |
| 9 | smux | An RS-232 level signal that can be sensed by the host computer software by using a serial port chip. |

Considering now the mouse connector 62B in greater detail with reference to FIG. 11B, Table IIIB shows the signals carrier by each respective pin.

Table IIIB

| PIN NUMBER | SIGNAL ABBREVIATION | SIGNAL FUNCTION |
|---|---|---|
| 1 | CD | Not connected. |
| 2 | TD | Used to send data to the host computer. |
| 3 | RD | Used by the mouse to receive power. Used to receive data from the host computer. |
| 4 | DTR | Used by the mouse to receive power. |
| 5 | GND | Ground connection. |
| 6 | DSR | Different manufacturers of mice can use CTS and DSR so these are connected to the host computer. |
| 7 | RTS | Used by the mouse to receive power. |
| 8 | CTS | Different manufacturers of mice can use CTS and DSR so these are connected to the host computer. |
| 9 | RI | Not connected. |

Considering now the operation of the communication interface 45B with reference to FIG. 11B, when the microprocessor 42B causes the signal dmux to be generated, switch 50B is forced to a closed position establishing a data transmission path between the microprocessor 42B and the computer 12B. The dmux signal also causes switch 51B to an opened position to terminate the data communication path between the mouse 10B and the computer 12B.
The dmux signal further causes switch 52B to an opened position to inhibit the mouse 10B from receiving data from the computer 12B. From the foregoing, it should be understood that the dmux signal causes the communication path from the host computer 12B to be switched either to the optical auxiliary input port for the light generating device 26B or to the mouse port for the mouse 10B.
Considering now the below screen click algorithm 500B in greater detail with reference to FIG. 9B, the below screen click algorithm 500B commences at a start instruction 501B and proceeds to an instruction 502B that causes the microprocessor 42B to set its saved position register to none and to set a double click flag to disable below screen double click feature.
The program next executes an instruction 504B that causes the charge coupled device 34B to execute another scanning sequence. The program then proceeds to a decision instruction 506B to determine whether the scan has been completed. If the scan has not been completed, the program waits at decision instruction 506B.
When the scan is completed, the program goes to a decision instruction 508B to determine whether an auxiliary light image has been detected. If no image was detected the program returns to instruction 504B and proceeds as previously described.
If an auxiliary light image is detected, the program goes to a decision instruction 510B to determine whether the auxiliary light image was detected outside of and below the image 24B. If the auxiliary light image was not outside the image 24B, the program goes to an instruction 520B that causes the raster scan coordinates of the auxiliary light image to be saved.

Next the program executes an instruction 522B that causes the below screen disable flag to be set on. The program then goes to an instruction 524B that converts the raster scan coordinates into image coordinate information and then transmits the coordinate information to the computer 12B. The program returns to instruction 504B and proceeds as previously described.

Referring again to decision instruction 510B, if the detected auxiliary light image was below and outside the image 24B, the program advances to a decision instruction 512B to determine whether the below screen double click enable flag was set. If the flag was not set, the program returns to instruction 504B and proceeds as previously described.

If the enable flag was set, the program goes to an instruction 514B that sets the double click flag to disable the below screen double click feature. The program then advances to an instruction 516B that causes the double click command to be transmitted to the computer 12B from the saved position. The program then returns to instruction 504B and continues as previously described.

While the above referenced algorithm determines that an auxiliary light image was generated below the image 24B, it will be understood by those skilled in the art that an algorithm could also detect auxiliary light above the image 24B on the viewing surface 22B.

Referring now to the drawings, and more particularly to FIG. 1C thereof, there is illustrated an optical input arrangement, generally indicated at 10C, for permitting optical control of an optical auxiliary input system generally indicated at 12C, and which is constructed in accordance with the present invention.

The optical input system 12C, is more fully described in the above-mentioned U.S. patent application Serial No. 07/901,253, now abandoned, and includes a video information source, such as a host computer 14C, and a liquid crystal display unit 16C, for displaying a primary image 24C indicative of the image information generated by the host computer 14C. The liquid crystal display unit 16C is positioned on the stage of an overhead projector (not shown) for enabling the image information generated by the computer 14C to be projected onto a viewing surface, such as a screen 22C, as a projected image 24AC.

The optical input arrangement 10C includes an image processing apparatus 30C having a CCD raster scan charge couple source video camera, indicated at 34C, for generating signals indicative of detected images mounted on the unit 16C, and a signal processing system 50C coupled to the image processing apparatus 30C for processing the signals for use by the host computer 14C. In this way, the optical input arrangement 10C cooperates with a light generating device 26C which generates auxiliary high intensity light information, such as a spot of reflected light 27C directed onto the image 24AC, for facilitating the modifying or changing of the primary image information 24C displayed by the liquid crystal display unit 16C.

The arrangement 10C also includes an alignment light source 40C (FIGS. 1C and 3C) mounted on the front of the image processing apparatus 30C for producing an alignment spot 46C for facilitating alignment of the image processing apparatus 30C with the projected image 24AC. In this regard, the alignment light source 40C helps a user align the optical sensing device 34C relative to the projected image 24AC, such that the field of view 25C of the device 34C is able to include the complete displayed projected image 24AC reflecting from the screen 22C.

The device or camera 34C (FIG. 2C) senses light reflecting from the screen 22C and generates a reflected light information signal indicative of the luminance levels of the reflected images including other light reflecting from the surface of the screen 22C. The optical sensing device 34C as best seen in FIG. 1C, has a field of view, indicated generally at 25C, that is substantially larger than the primary image 24AC.

A band pass filter 36C (FIG. 2C) disposed over the lens (not shown) of the device 34C limits the range of wavelengths of light permitted to be sensed by the device 34C (FIG. 2C). The optical filter 36C is of the band pass variety, whereby only a selected range of wavelengths of light are permitted to pass therethrough. A preferred range of wavelengths permitted to pass through the filter 36C is between about 660 nanometers and 680 nanometers, and centered about the 670 nanometer wavelength. In this regard, the optical filter 36C excludes all optical light sources outside of the range specified from being sensed by the camera 34C.

The light generating device 26C generates an auxiliary optical input or command signal spot 27C as described in U.S. patent application Serial No. 07/901,253, whose optical wavelength is within the specified range of the band pass filter 36C. In this regard, the auxiliary optical command signal spot 27C is sensed by the device 34C while surrounding reflected light of the projected image 24AC, whose optical wavelengths is outside of the specified range, is not permitted to be sensed by the camera 34C.

In operation, after the image processing apparatus 30C has been pointed towards the screen 22C, the user causes the optical auxiliary input system 12C to produce the projected image 24AC on the screen 22C. As the image processing apparatus 30C is pointed generally toward the screen 22C, the apparatus 30C is able to sense the reflected light of the image 24AC. In this regard, the reflected light of the primary image 24AC generally comprises light substantially from the entire optical wavelength spectrum. Thus, to limit the wavelength spectrum to be sensed by the device 34C, the reflected light is first filtered optically by the optical filter 36C. In this way, the wavelength of the reflected light permitted to reach the camera 34C is restricted to facilitate the detection of the auxiliary optical input signal spot 27C which is characterized by a very narrow optical wavelength falling within the band of optical wavelengths that filter 36C permits to pass through to the camera 34C.

From the foregoing, it will be understood by those skilled in the art, that the filter 36C reduces the amount of extraneous incoming light which will be sensed for detection of the auxiliary optical input signal spot 27C.

The image processing apparatus 30C is attached to the liquid crystal display unit 16C in such a way that it may be rotated on both its horizontal and vertical axes. This rotating process is more fully described in U.S. patent application Serial No. 07/955,831, U.S. Patent N° 5 489 923, and will not be described in further detail.

The image processing apparatus 30C generates a video signal indicative of the light reflecting from the screen 22C. In this regard, the signal is indicative of the image 24AC as well as the light spot 46C. This signal is coupled to the signal processing system 50C.

When the signal processing system 50C receives the video signal from the device 34C, it converts the signal into a digital signal indicative of the luminance level of the image 24AC at a given location on the screen 22C. In this regard, as the field of view of the device 34C is greater than the site of the image 24AC, the device 34C detects the image 24AC when properly aligned relative thereto.

Considering now the alignment light source 40C in greater detail with reference to FIG. 3C, the light source 40C includes a series arrangement of a source of electrical energy such as a battery 41C, a pushbutton 42C, and a light emitting diode 44C, wherein the pushbutton 42C is disposed between the source 41C and the diode 44C to permit activating and deactivating the diode 44C by depressing or releasing the pushbutton 42C. By completing the circuit between the source and the diode 44C, the diode is electrically activated and generates the alignment spot 46C.

In operation, the alignment light source 40C facilitates the method for aligning the image processing apparatus 30C with the screen 22C. In this regard, when the computer 14C commences image 24C, the image 24C is projected onto the screen 22C as the projected or primary image 24AC by means of the overhead projector (not shown). The user must then align the image processing apparatus 30C in such a way that the primary image 24AC is located substantially within the camera field of view 25C.

By depressing the pushbutton 42C on the top of the apparatus 30C, the alignment spot 46C is generated. The user then manually adjusts the apparatus 30C and the display 16C to position the field of view of the device 34C, while simultaneously continuing to depress the pushbutton 42C, until the alignment spot 46C is located substantially at the center of the primary image 24AC. In this way, the primary image 24AC is contained substantially within the camera field of view 25C. Once the spot 46C is so located, the user releases the pushbutton 42C, to extinguish the alignment spot 46C. It should be understood that this alignment operation is performed without the use of the signal system 50C or the host computer 14C.

Considering now the signal processing system 50C in greater detail with reference to FIG. 1C, the signal processing system 50C is coupled between the image processing apparatus 30C and the host computer 14C for detecting the auxiliary optical command signal spot 27C and for transmitting detection information to the host computer 14C. The signal processing system 50C is connected to the image processing apparatus 30C via cable 52C.

Cable 52C supplies a variety of signals including a VSYNC signal 61C, an HSYNC signal 63C, a VIDEO signal 65C, and a clock signal 67C. The clock signal 67C facilitates synchronization of the image processing apparatus 30C and the signal processing system 50C. The signal processing system 50C generally includes an analog to digital converter 54C for converting the video signal 65C into a digital signal 69C indicative of a given luminance level, a high speed digital processor 56C for detecting luminance levels indicative of the auxiliary optical command signal spot 27C on the screen 22C, and a clock generator for developing the clock signal 67C. The system 50C also includes a host computer interface 60C and an input/output processor 58C for facilitating communication between the system 50C and the host computer 14C.

Considering now the digital signal processor 56C in greater detail with reference to FIG. 1C, the processor 56C is coupled to the input/output processor 58C by a cable 53C. The processor 56C is a model ADSP2105, as manufactured by Analog Devices Inc. and is fully described in the ADSP2102/ADSP2105 User's Manual, February 1990, for performing various high speed operations. The operations performed by the processor 56C are performed under the control of a set of algorithms 70AC and 80AC which each will be described hereinafter in greater detail.

Considering now the operation of the digital signal processor 56C with reference to FIGS. 4C-7C, the digital signal processor 56C is controlled by algorithms 70AC and 80AC which determine when video data should be acquired, determine differences in optical intensity values for processing, and process the differences in optical intensity values to detect the presence of the auxiliary optical command signal spot 27C.

Considering now the incrementing algorithm 70AC in greater detail with reference to FIG. 4C, the algorithm 70AC enables the digital signal processor 56C to prepare for acquiring video data from the apparatus 30C. The video data to be acquired corresponds to the horizontal line N received from the analog to digital converter 54C according to the present invention. The value of horizontal line N is dependent upon the total number of horizontal lines to be scanned.

Initialization of the incrementing algorithm 70AC begins with instruction box 70C where a variable LINE_CT is cleared to 0 and a variable LINE is set to equal N. Next, the digital signal processor 56C awaits the beginning of a new scan sequence at decision box 71C. The beginning of a new scan sequence is indicated by assertion of the VSYNC signal 61C. If no VSYNC signal 61C is asserted, control returns to the decision box 71C.

When the VSYNC signal 61C is asserted, the digital signal processor 56C awaits the assertion of the an HSYNC signal 63C at decision box 72C. Assertion of the HSYNC signal 63C indicates that a new horizontal line is about to be acquired by the device 34C. If no HSYNC signal 63C is asserted, control returns to decision box 72C. However, if the HSYNC signal 63C is asserted, the program proceeds to an instruction box 73C which causes the LINE_CT to be incremented by 1. Next, decision box 74C determines whether the LINE_CT is equal to N, indicating that the desired horizontal line n has been reached. If LINE_CT is not equal to N, control returns to decision box 72C where the assertion of another HSYNC signal 63C is awaited. The return operation from decision box 74C to decision box 72C will continue until the desired horizontal line N is reached.

Once the desired horizontal line N has been reached, an ACQUISITION routine or GET PIXEL DATA routine 80AC, described hereinafter in greater detail, is summoned at box 75C. After acquisition is complete, control returns from acquisition routine 80AC to the incrementing algorithm 70AC. Thereafter, incrementing algorithm 70AC continues to box 76C where the values obtained from the ACQUISITION routine 80AC, are used to determine a differential intensity value D and to compare the differential intensity value D with threshold values.

Considering now the ACQUISITION routine 80AC in greater detail with reference to FIG. 5C, the ACQUISITION routine 80AC enables the digital signal processor 56C to acquire the horizonal line N and to store the differential intensity value D. Acquisition routine 80AC, commences with a START command 75AC which is entered from the incrementing algorithm 70AC at box 75C. The program then proceeds to a command instruction box 80C which initializes a sample count SAMPLE_CT, a previous pixel value Y and a memory pointer PTR. Further, memory pointer PTR is set to a memory location BUFF, which indicates a free area of random access memory (RAM) to be used as a buffer.

Routine 80AC then proceeds to a decision box 81C where a determination is made as to whether or not a transmission of pixel data from the device 34C has begun. If transmission has not yet begun, control is returned to box 81C until such time that the transmission does begin.

Once transmission has begun, the program proceeds to an instruction command at box 82C which indicates that a pixel intensity value X is digitized by analog to digital converter 54C and stored. The value of the present pixel value X is then subtracted from the previous pixel value Y to determine the differential intensity value D in box 83C. D is then stored, as indicted in instruction box 84C, and memory pointer PTR is incremented by 1 to facilitate memory allocation.

Next the program goes to instruction box 85C which replaces the value stored as Y with the value stored as X, thereby making the present value now the previous value for the next intensity value comparison, as shown in box 83C. SAMPLE_CT is incremented by 1 at box 87C before control continues to decision box 87C, where SAMPLE_CT is tested as to whether all possible pixels on the sampled horizontal line N have been acquired. If all possible pixels have not been acquired, the routine returns to box 82C where another pixel intensity value X is digitalized. When all of the possible pixels have been acquired, the acquisition routine 80AC returns control to the incrementing algorithm 70AC at CALL instruction 76C.

Considering now the processing of the differential intensity value D in greater detail, with respect to FIGS. 6C and 7C, there is shown in FIG. 6C a graph which indicates individual pixel intensity values 101C-110C for a typical horizontal line N. As the auxiliary optical command signal spot 27C is acquired by the signal processing system 50C, the individual pixel intensity values 101C-110C will indicate an increase in intensity magnitude followed a decrease in intensity magnitude. The acquisition of the spot 27C is indicated in FIG. 6C as pixel intensity values 104C-108C.

FIG. 7C shows the differential intensity value D, as determined by acquisition routine 80AC, for the pixel intensity values 101C-110C acquired for horizontal line N. Each data point 111C-119C represents the differential intensity value D of each previous sample and current sample. For example, intensity values 104C and 105C (FIG. 6C) are +5 units apart. The corresponding data point 114C (FIG. 7C), representing differential intensity value D, is shown as 5C. Similarly, intensity values 107C and 108C (FIG. 6C) are -6 units apart and the corresponding data point 117C (FIG. 7C) is shown as -6.

Thus, FIG. 7C indicates that signal processing system 50C is an indicator for change in slope of a line 100C (FIG. 6C) which represents the intensity values 101C-110C acquired. When particular change in slope characteristic are calculated, the system 50C has detected the spot 27C and can then transmit this detection to the IOP 58C for communication to the host computer 14C.

Referring to FIG. 7C, in operation, a positive threshold 120C and a negative threshold 121C are established, where the threshold 121C is the negative value of the threshold 120C. The differential intensity values, such as data points 111C-119C, are calculated according to the processing described previously, but are not considered for spot detection purposes until a differential intensity value exceeds the positive threshold 130C, such as data points 114C and 115C, and is subsequently followed by a differential intensity value that is lower than negative threshold 121C, such as data point 116C. At this point, the signal processing system 50C has detected the spot 27C from surrounding reflected light and then transmits this information to the IOP 58C which translates the information to a form compatible for interfacing with the host computer 14C.

The output of the digital signal processor 56C is coupled to the input/output processor 58C, such as the SIGNETICS 87C652, to facilitate the communication of information processed by the signal processing system 50C to the host computer 14C. A host computer interface 60C is coupled to the IOP 58C to permit transmission of data from the signal processing system 50C to the host computer 14C in a form which is compatible with the host computer 14C. The data sent via the combination of the IOP 58C and the host computer interface 60C include a DATA DISPLAY signal, an ADB signal, and an RS232 signal.

**Claims**

1. A method (150B, 501B) for optically emulating a computer mouse input device (10B) to change a primary video image (24B) reflecting from a viewing surface(22B), the primary image (24B) being defined by a plurality of pixel images arranged in a matrix array, where each pixel image is disposed at a specific x, y coordinate location within the array, the method using an auxiliary light generating device (26B) to produce a sequence of auxiliary light information (27B), said sequence of auxiliary light information being indicative of a mouse double click command in the form of sequenced spots of auxiliary control light (27B) reflecting from the viewing surface(22B), the method characterized by:

   detecting 158B, 160B, 162B a spot of auxiliary control light (27B) reflecting from the viewing surface(22B); determining (15B, 112B, 164B) initially whether the detected spot of auxiliary control light(27B) is tentatively an initial sequenced spot in said mouse double click command; storing (154B, 187B), X, Y camera coordinate values of the detected spot of auxiliary control light if it is an initial sequence spot in said mouse double click command, said X, Y camera coordinate values corresponding to at least one x, y computer coordinate location of one of the pixel images in the matrix array; converting (191B) the stored X, Y camera coordinate values of the detected spot of auxiliary control light (27B) to the corresponding x, y coordinate values so they can be transmitted (193B) as part of said mouse double click command; setting (172B, 176B, 180B) an ON timer when the spot of auxiliary control light (27B) is detected within the matrix array of pixel images defining the primary image(24B), said on timer being set to a predetermined period of time T in order to help facilitate optically emulating the double click command of the computer mouse input device; determining (180B) whether the detected spot of light has been extinguished before said predetermined period of time T has elapsed; setting (168B, 170B) an off timer when the detected spot of light has been extinguished, said off timer being set to predetermined period of time t; detecting (158B, 160B, 162B) another spot of auxiliary control light (27B) reflecting from the viewing surface (22B); determining (186B) whether the detected another spot of auxiliary control light is disposed within at least m coordinate locations of the stored X coordinate location and within at least n coordinate locations of the stored Y coordinate location; setting said on timer again when the another spot of auxiliary control light (27B) is detected, said on timer being set to a predetermined period of time T in order to help facilitate optically emulating the double click command of the computer mouse input device; determining whether the detected another spot of auxiliary control light (27B) has been extinguished before said predetermined period of time T has elapsed; storing X, Y camera coordinate values of the another detected spot of auxiliary control light if it is the next sequenced spot in said mouse double click command, said X, Y camera coordinate value being determined to be within m (29B) coordinate locations of the previously stored X coordinate location and within n (29B) coordinate locations of the previously stored Y coordinate location; converting (191B) the presently stored X, Y camera coordinate values of the another detected spot of auxiliary control light to the corresponding x, y coordinate values so they can be transmitted (193B) as part of said mouse double click command if the detected another spot of auxiliary control light (27B) was extinguished before the predetermined period of time T elapsed and if the another spot of light was disposed within at least m (25B) coordinate locations of the stored X coordinate location and within at least n (29B) coordinate locations of the stored Y coordinate location; whereby when a sequence of auxiliary light spots (27B) are detected indicative of a double click command to cause said mouse double click command is transmitted.

2. An optical input arrangement (9B, 11B) for emulating optically a computer mouse input device (10B) to change a primary video image reflecting from a viewing surface (22B) in response to auxiliary control light (27B) being indicative of auxiliary light information (26B) in the form of sequenced spots of light (27B) to define a mouse double click command, the primary image (24B) being defined by a plurality of pixel images arranged in a matrix array, where each pixel image is disposed at a specific x, y computer coordinate location within the array, the system (9B, 11B) having camera means (34B) for detecting the spots of auxiliary control light (27B) reflection from the viewing surface, (22B) the system characterized by:

means for determining (34B, 28B, 150B, 500B, 42B, 164B) initially whether a detected spot of auxiliary control light (27B) reflecting from the viewing surface (22B) is tentatively an initial sequenced spot in said mouse double click command; means for storing (42B, 187B) coordinate information if the detected spot is an initial sequenced spot in said mouse double click command, said stored information being indicative of a specific determined X, Y camera (34B) coordinate location for the detected spot of auxiliary control light (27B), said X, Y camera coordinate location corresponding to at least one x, y computer coordinate location of one of the pixel images in the matrix array; modifying means (42B, 191B) for converting the stored X, Y camera coordinate location to the corresponding x, y coordinate location so the computer coordinate location of the detected spot can be transmitted as part of said mouse double click command; clock means (64B) for helping to establish the timing interval between sequenced spots of light (27B) to facilitate optically emulating the computer mouse, said clock means (64B) including a spot ON clock (64B, 178B) and a spot OFF clock (64B, 156B); ON timer (64B, 178B) means for setting said ON clock to a predetermined period of time T when the detected spot of auxiliary control light (27B) is detected within the matrix array of pixel images defining the primary image (24B), said ON clock (64B, 178B) being set to said period of time T in order to help facilitate optically emulating the double click common of the computer mouse into device; means responsive (42B, 34B 40B) to said ON timer means for determining whether the detected spot of light (27B) was extinguished before said predetermined period of time T elapsed; OFF timer means (64B, 156B) for setting said OFF clock to a predetermined period of time t when the detected spot of light (27B) is extinguished; means for determining (64B) whether another detected spot of auxiliary control light (27B) reflecting from the viewing surface (22B) is detected after said predetermined period of time t elapsed and is disposed within at least m (29B) coordinate locations of the stored X coordinate location and within at least n (29B) coordinate locations of the stored Y coordinate location; said ON timer means (64B, 178B) setting said ON clock (64B, 178B) to another predetermined period of time T when the another spot of auxiliary control light is detected within the matrix array of pixel images defining the primary image(24B); said means responsive (42B, 34B, 40B) to said ON timer means determining whether the another detected spot of light extinguished before said another predetermined period of time T elapsed; said means for storing (42B) coordinate information storing another X and Y camera coordinate location if the another detected spots is the next sequenced spot in said mouse double click command, said another X and Y camera coordinate location being determined to be within m (29B) coordinate locations of the previously stored X coordinate location and within n (29B) coordinate locations of the previously stored Y coordinate location; said modifying means (42, 191B) for converting he presently stored X, Y camera coordinate location of the another detected spot of auxiliary control light to the corresponding x, y computer coordinate location so the computer coordinate location of the another detected spot can be transmitted as part of said mouse double click command if the detected another spot of auxiliary control light extinguished before said other predetermined period of time T elapsed and if the another spot of light was disposed within at least m (29B) coordinate locations of the stored X coordinate location and within at least n (29B) coordinate locations of the stored Y coordinate location; and whereby when the sequence of auxiliary light spots (27B) are detected a mouse double click command is transmitted.

3. The optical input arrangement of claim 2, further characterized wherein T is about 0.75 seconds and t is about 0.75 seconds.

4. The optical input arrangement of claim 2, further characterized in that relative coordinate means for determining whether said spot of auxiliary control light and said another spot of auxiliary control light both occurred with a given area (29B) of the viewing surface(22B).

5. The optical input arrangement of claim 2, further characterized by:
connector means (45B) for connecting a plurality of input units (26B, 28B, 10B) having substantially different communication rates to a host computer (12B), said host computer (12B) having at least two separate communication speeds for receiving information from said input units; switching means (28B, 51B, 52B) coupled to said connector means for establishing selectively a designated communication path between the host computer (12B) and one unit of said plurality of input units (26B, 28B, 10B); processor means (42B) for generating a selection signal for causing said switching means (28B, 51B, 52B) to establish a data communication path between said host computer (12B) and a single one only of said plurality of input units (26B, 28B, 19B); and algorithm means (300B) disposed partially in said processor means (42B) and partially within said host computer (12B) for causing said host computer (12B) to receive data at a certain one of its communication rates.

6. The method of claim 1 further characterized by: a method (100A, 200A, 150A, 300A, 500A) for controlling a projected video image (24A) with auxiliary control light (27A) projected onto a viewing surface reflecting the projected video image (24A), characterized by:

generating a bright calibration video signal (35A) indicative of the combination of the projected video image (24A) and background light to facilitate discriminating accurately the projected video image (24A) from the background light reflecting from the viewing surface (22A), said video signal (35A) having a minimum value and a maximum value; determining (FIGS 7A-9A) the minimum value of said bright calibration video signal above a given background light level (43A)to facilitate the elimination of a portion of said video signal indicative of the background light; storing (42A) the determined minimum value to facilitate modifying said video signal above said given background light level thereafter to facilitate responding to the auxiliary control light (27A) projected onto the viewing surface (22A); adjusting (42A, FIG. 9A) the value of said bright calibration video signal from said maximum value to a lesser value, said lesser value being equal to the maximum value less the stored minimum value to generate a modified video signal (35AA) indicative of the projected video image only, said modified video signal having a minimum value and a maximum value; and adjusting (42A, FIGS 11A-12A) the value of a reference level signal (48A) to be greater than said lesser value to distinguish a video signal (69A) indicative of an auxiliary control light image (27A) from a video signal indicative of the combination of the projected video image (24A) and background light to facilitate discriminating accurately the projected auxiliary control light (27A) from the projected video image light (24A) reflecting from the viewing surface (22A); whereby the auxiliary control light (27A) is enabled to control the projected display image (24A) when projected onto the viewing surface (22A).

7. The optical input arrangement of claim 2, further comprising: a system (9A, 109A, 209A, 309A) for calibration of an optical computer input system 10A, 110A, 210A, 310A to facilitate the modifying of a video image (24A) generated by computer means displayed by display means (12A) and projected onto a viewing surface (22A) by projection means (13A), characterized by:

light sensing means (34A) having a field of view (25A) that is substantially larger than said video image (24A) reflecting from the viewing surface (22A) and being mounted for movement relative to the viewing surface and the projection means (20A) so that said field of view (25A) is able to capture all of the video image (24) reflecting from the viewing surface (22A) for generating a reflected light information signal (35A) indicative of the luminance levels of the light images reflecting from the viewing surface(22A); signal processing means (28A) coupled to the computer (12A) and said light sensing means (34A) for converting said reflected light information signal (35A) into computer coordinate information to modify the video image (24A) generated by the computer means(12A); signal calibration means (9A, 39A, 109A 139A, 239A, 339A) for automatically adjusting the strength of said reflected light information signal (35A) for different background lighting conditions to enable said signal processing means (28A) to accurately process said signal (35A) so that it is reliably converted into computer coordinate information to modify the video image (24A) generated by the computer means(12A); said signal calibration means (9A, 29A, 109A, 139A, 239A, 339A) including discrimination means (40A, 140A, 240A, 340A) for facilitating comparing signals indicative of a plurality of light images having a plurality of different luminance levels reflecting from the viewing surface(22A), and microprocessor means (42A, 142A, 242A, 342A) for controlling said discrimination means (40A, 140A, 240A, 340A) to enable the comparison between light images indicative of said video image (24A) reflecting from the viewing surface (22A) and light images indicative of externally generated (26A) spots of control light (27A) reflecting from the viewing surface(22A); wherein the reflected light images indicative of said video image (24A) having different luminance levels ranging between a maximum luminance level and a minimum luminance level.

8. The system of claim 7 further characterized by having means for generating (42A) a bright calibration video signal (35A) indicative of the combination of the projected video image (24A) and background light to facilitate discriminating accurately the projected video image (24A) from the background light reflecting from the viewing surface (22A), said video signal (35a) having a minimum value and a maximum value; means for determining (42A, FIGS. 7A-9A) the minimum value of said bright calibration video signal (35A) above a given background light level to facilitate the elimination of a portion of said video signal indicative of the background light; means for storing (42A) the determined minimum value to facilitate modifying said video signal (35A) above said given background light level thereafter to facilitate responding to the spots of control light (27A) projected onto the viewing surface (22A); means for adjusting (42A, FIGS. 7A-9A) the value of said bright calibration video signal from said maximum value to a lesser value, said lesser value being equal to the maximum value less the stored minimum value to generate a modified video signal (35AA) indicative of the projected video image (24A) only, said modified video signal (35AA) having another minimum value and another maximum value; and means for adjusting the value of a reference level signal (48A) to be greater than said lesser value to distinguish a video signal indicative of an auxiliary control light image (27A) from a video signal indicative of the combination of the projected video image and background light to facilitate discrimination accurately the projected auxiliary control light (27A) from the projected video image (24A) light reflecting from the viewing surface (22A); whereby the auxiliary control light (27A) is enabled to control the projected display image (24A) when projected onto the viewing surface (22A).

9.   The system of claim 7, further characterized by a signal employing means (29A, 75A, 76A, 81A, 139A, 176A 239A, 276A, 281A, 339A), for increasing the strength of the reflected light information signal (35A) to facilitate discriminating between signals indicative of the various light images reflection from the viewing surface (22A); wherein the reflected light images indicative of said video image (24A) having different luminance levels ranging between a maximum luminance level and a minimum luminance level; and wherein the reflected light images indicative of said control light (27A) have at least two different luminance levels (89A, 89A) to help facilitate directing the control light (27A) to desired locations on the video image without generation of said reflected light information signal.

10.   The system of claim 9 further characterized wherein the projection means (20A) has optical properties for projecting the video image (24A) through a particular optical path onto the viewing surface (22A) to be reflected therefrom; and wherein said viewing surface (22A) is disposed in a room having ambient light therein; said optical properties of the projection means (20A) in combination with the ambient light and the distance the viewing surface (22A) is disposed from the projection means (20A) causing the light images reflecting from the viewing surface (22A) to have maximum and minimum luminance levels relative to one another; wherein said microprocessor means (42A) includes reference level signal means for generating a reference level signal (48A) and a black level signal (43A, 143A, 243A, 343A) to help facilitate discrimination between signals indicative of the various light images reflecting from the viewing surface (22A); and wherein said discrimination means (40A, 140A, 240A, 340A) includes comparator means responsive to said reference level signal (48A) to enable the accurate comparison of the various light images reflecting from the viewing surface (22A) relative to ambient light conditions and the optical properties of the projection means (20A).

11.   The system of claim 10, further characterized by wherein said at least two difference luminance levels include a positioning luminance level that will not be processed as being indicative of a control signal to modify the video image and a processing luminance level that will be processed as being indicative of a control signal to modify the video image.

12.   The system of claim 8 further characterized by means for generating a low intensity auxiliary locating image for projecting onto the viewing surface to help a user locate a desired portion of the video image reflecting from the viewing surface; means for generating said auxiliary light image being a high intensity auxiliary control image for projecting onto the viewing surface a substantially the same location as said location image was projected to enable the optical input system to detect the control image for calibration purposes; and discrimination means for distinguishing said signal indicative of said control image from said reference level signal for display control purposes.

13.   The system of claim 12, further characterized by means for causing the projected video image to change between a brightest image and a darkest image to help facilitate determining the maximum and minimum values of said modified video signal relative to the projected image; and means for determining the maximum value of said modified video signal for helping to determine a value of said reference level signal sufficiently above the value of a modified video signal indicative of the combination of the low intensity locating image and the brightest image to prevent the optical input system from generating auxiliary control information in response to the system detecting the locating image on the viewing surface.

14.   The system of claim 13, further characterized by means for strong expected boundary values of the projected video image for calibration purposes; said expected boundary values being indicative of a range of maximum an minimum width and height values of projected images having a sufficient intensity to be detected by the optical input system; means for determining the width and height values of the projected video image detected by the optical input system; means for comparing the determined width and height values of the projected video image with said expected boundary values to determine if the optical input system is physically aligned with the viewing surface to detect the entire projected video image from the viewing surface; and said input system being aligned when both the determined width and height values falls within the range of the expected maximum and minimum width and height values respectively.

15.   The optical input arrangement of claim 2, further comprising: an image projection arrangement (10C, 12C) including projection means (20A) for directing a projected image (24C) onto a remote viewing surface (22C), light sensing means (34C) for detecting all wavelengths of light in the visible spectrum including the reflected projected image and ambient light, and an optical apparatus (16C) for generating a video image, a system and (14C) for controlling the optical apparatus (16C) for generating a video image, the arrangement characterized by:

means for generating (26C) an optical control image (27C) having a predetermined optical wavelength and a given intensity level to modify the projected image (24C); means interposed (36C) between the remote viewing surface (22C) and the light sensing means (34C) for passing visible light within a narrow predetermined band of optical wavelengths only including the reflected projected image, ambient light and said optical control image; signal means responsive (30C, 50C) to the light sensing means (34C) for generating an electrical signal indicative of the visible light having said narrow band of wavelengths; signal modification means (50C, 54C, 56C, 70AC, 80AC) responsive to said signal means for determining a black level reference level to help generate a modified electrical signal indicative of the visible light having said narrow band of wavelengths and a peak intensity level substantially equal to the combination of the lowest intensity level of the projected image reflecting from the viewing surface and the highest intensity level of the control image reflecting from the viewing surface (22C); reference level means (76C, D, 56C) responsive to said modified electrical signal for determining a peak video image reference level, and a peak control image reference level and for establishing a reference level between said peak video image reference level and said peak control image reference level; control means (14C, 58C) responsive to said electrical signal for generating a control signal indicative of a desired modification of the projected image (24C) whenever the electrical signal is greater than said reference level, said electrical signal being further indicative of visible light in said narrow band of wavelengths and having a peak intensity level that is at least greater than the highest intensity level of the protected image reflecting from the viewing surface; and means for modifying the projected image in response to said control signal.

16. The arrangement of claim 15, further characterized by:

optical attenuation means (36C) for passing only said narrow band of optical wavelengths to facilitate the detection of said optical control image by said light sensing means (34C) so that said sensing means (34C) can detect received light in said narrow band; said light sensing means (34C) generating an electrical output signal indicative of light only having wavelengths substantially within said narrow band of optical wavelengths; differential means (56C) responsive to said output signal for determining a differential intensity value of the light sensed by said optical sensing means (34C); and discrimination means (56C, FIG 6C-9C) for detecting when said differential intensity value exceeds a positive threshold amount and substantially immediately thereafter decreases more than a negative threshold amount to discriminate against reflected projected image light and extraneous light so that only auxiliary light command images can be detected.

17. The arrangement of claim 16, further characterized wherein said alignment image is an auxiliary command image (27C).

18. The arrangement of claim 16, further characterized by:

mounting means connected to said light sensing means (34C) for supporting it movably to enable it to be adjusted positionally relative to a viewing area (25C) on the viewing surface (22C) so that said light sensing means (34C) can be aligned with the viewing area (22C); a light source (40C, 44C) mounted to said light sensing means (34C) for projecting an alignment image (46C) onto the viewing area (25C) to facilitate adjustment of said light sensing means (34C) to an aligned position; electrical switch means (42C) coupled to said light source (40C, 44C) for activating it to project the alignment image (46C) generally toward the viewing area (25C) so that said sensing means (34C) and said light source (40C, 44C) can be moved adjustably by employing said mounting means until the alignment image (46C) is positioned generally at a central portion of the viewing area (25C); whereby said light sensing means (34C) is properly aligned with the viewing area (25C) to sense optically the entire projected image (24C).

19. The method of claim 1 further characterized by: a method (70AC, 80AC) of using an auxiliary optical command arrangement (10C, 26C) for controlling a liquid crystal display system for projection an image (24C) onto a surface (22C), characterized by:

receiving (34C, 70AC, 80AC) incoming light indicative of a reflected projected image, a reflected auxiliary command image (24C) having a narrow band of optical wavelengths, and extraneous light including reflected and direct ambient light of different intensities and optical wavelengths; directing an auxiliary light command image (27C) having a narrow wavelength band onto the surface (22C) and the projected image (24C) thereon to help discriminate the command image (27C) from all other light; optically filtering (36C) the incoming light being received to pass only said narrow band of optical wavelengths to facilitate the detection of said auxiliary command image (27C); generating (30C, 50C) an electrical output signal indicative of light only having wavelengths substantially within said narrow band of optical wavelengths; detecting (50C) when an intensity value exceeds a positive threshold amount and substantially immediately thereafter decreases more than a negative threshold amount to discriminate against reflected projected image light and extraneous light so that only auxiliary light command images (27C) can be detected.

**20.** The method of claim 19, further characterized by:

determining a black level reference level to help generate a modified electrical signal indicative of the received light having said narrow band of wavelengths and a peak intensity level substantially equal to the combination of the lowest intensity level of the reflected projected image from the surface and the highest intensity level of the command image reflecting from the surface; determining a peak video image reference level, and a peak control image reference level; establishing a reference level between said peak video image reference level and said peak control image reference level; generating (58C) a control signal indicative of a desired modification of the projected image whenever the electrical signal is greater than said reference level, said electrical signal being further indicative of visible light in said narrow band of wavelengths and having a peak intensity level that is at least grater than the highest intensity level the projected image reflecting from the viewing surface; and modifying the projected image (24C) in response to said control signal.

**21.** The method of claim 19, further having a calibration method for the liquid crystal display system, characterized by:

using the display system to project a calibration video image onto the surface; detecting a predetermined narrow band of optical wavelengths of light reflected from the surface; determining the value of the maximum video intensity of the reflected wavelengths of light; storing the maximum intensity value thereof; establishing a reference level value at a level substantially greater than the stored maximum intensity value and substantially less than the combination of the value of the maximum video intensity and a maximum value of control light directed onto and reflecting from the video image; said maximum video intensity value being the maximum intensity level value of only that portion of light reflecting from the surface indicative of a projected video image having wavelengths in only a narrow band range; said maximum control light value being the combination of the minimum intensity level value of only that portion of light reflecting from said surface indicative of said projected video image having wavelengths in only the narrow band range and the maximum control light intensity value having wavelengths in only said narrow band range, where the control light is reflecting from the last mentioned portion of said projected video image; and generating (58C) a control signal whenever the value of said detection signal is greater than said reference level value, said control signal indicative of at least a detected video image coordinate location for helping to control the display.

**22.** The method of claim 19 further characterized by:

using optical sensing means (34C); sensing optically (34C) a projected image (24C), said image (24C) having an associated viewing area (25C) on the surface (22C) to generate electrical command signals for controlling the display system; using a light source (40C, 44C) for producing an alignment image (46C); projecting said alignment image (46C) onto the viewing area (25C) to facilitate adjustment of said optical sensing means (34C) to an aligned position; activating said light source (40C, 44C) to project the alignment image (46C) generally toward the viewing area (22C) so that said sensing means (34C) and said light source (46C) can be moved adjustably until the alignment image is positioned generally at a central portion of the viewing area (22C); whereby said optical sensing means (34C) is properly aligned with the viewing area (22C) to sense optically the entire projected image (24C).

**Patentansprüche**

**1.** Ein Verfahren (150B, 501B) zum optischen Emulieren einer Computermauseingabeeinrichtung (10B), um ein primäres Videobild (24B) zu ändern, das von einer Beobachtungsfläche (22B) zurückgeworfen wird, wobei das primäre Bild (24B) durch eine Vielzahl von Pixelbildern definiert wird, die in einer Matrixanordnung angeordnet sind, in der jedes Pixelbild an einer spezifischen x-, y-Koordinatenstelle innerhalb der Anordnung angeordnet ist, wobei das Verfahren eine Hilfslichterzeugungseinrichtung (26B) verwendet, um eine Sequenz von Hilfslichtinformation (27B) zu erzeugen, wobei die Sequenz von Hilfslichtinformation für einen Mausdoppelklickbefehl in der Form von folgegebundenen Lichtpunkten des Hilfssteuerlichts (27B) kennzeichnend ist, das von der Beobachtungsfläche (22B) reflektiert wird, und wobei das Verfahren **gekennzeichnet ist durch**:

Feststellen (158B, 160B, 162B) eines Lichtpunkts des Hilfssteuerlichts (27B), das von der Beobachtungsfläche (22B) reflektiert wird; anfängliches Ermitteln (15B, 112B, 164B), ob der festgestellte Lichtpunkt des Hilfssteuerlichts (27B) versuchsweise ein anfänglicher folgegebundener Lichtpunkt in dem Mausdoppelklickbefehl ist; Speichern (154B, 187B) von X-, Y-Kamerakoordinatenwerten des festgestellten Lichtpunkts des Hilfssteuerlichts, wenn es sich um einen anfänglichen folgegebundenen Lichtpunkt in dem Mausdoppelklickbefehl handelt, wobei die X-, Y-Kamerakoordinatenwerte wenigstens einer x-, y-Computerkoordinatenstelle von einem der Pixelbilder in der Matrixanordnung entsprechen; Umwandeln (191B) der gespeicherten X-, Y-Kamerakoordinatenwerte des festgestellten Lichtpunkts des Hilfssteuerlichts (27B) in die entsprechenden x-, y-Koordinatenwerte, so daß sie als Teil des Mausdoppelklickbefehls übertragen (193B) werden können; Einstellen (172B, 176B, 180B) eines EIN-Zeitgebers, wenn der Lichtpunkt des Hilfssteuerlichts (27B) innerhalb der Matrixanordnung der Pixelbilder festgestellt wird, die das primäre Bild (24B) definieren, wobei der EIN-Zeitgeber auf eine vorgegebene Periode der Zeit T eingestellt wird, um dazu beizutragen, das optische Emulieren des Doppelklickbefehls der Computermauseingabeeinrichtung zu erleichtern; Ermitteln (180B), ob der festgestellte Lichtpunkt des Lichts ausgelöscht worden ist, bevor die vorgegebene Periode der Zeit T abgelaufen ist; Einstellen (168B, 170B) eines AUS-Zeitgebers, wenn der festgestellte Lichtpunkt des Lichts ausgelöscht worden ist, wobei der AUS-Zeitgeber auf eine vorgegebene Periode der Zeit t eingestellt wird; Feststellen (158B, 160B, 162B) eines anderen Lichtpunkts des Hilfssteuerlichts (27B), das von der Beobachtungsfläche (22B) reflektiert wird; Ermitteln (186B), ob der festgestellte andere Lichtpunkt des Hilfssteuerlichts innerhalb mindestens m Koordinatenstellen der gespeicherten X-Koordinatenstelle und innerhalb mindestens n Koordinatenstellen der gespeicherten Y-Koordinatenstelle angeordnet ist; erneutes Einstellen des EIN-Zeitgebers, wenn der andere Lichtpunkt des Hilfssteuerlichts (27B) festgestellt worden ist, wobei der EIN-Zeitgeber auf eine vorgegebene Periode der Zeit T eingestellt wird, um dazu beizutrageh; das optische Emulieren des Doppelklickbefehls der Computermauseingabeeinrichtung zu erleichtern; Ermitteln, ob der festgestellte andere Lichtpunkt des Hilfssteuerlichts (27B) ausgelöscht worden ist, bevor die vorgegebene Periode der Zeit T abgelaufen ist; Speichern von X-, Y-Kamerakoordinatenwerten des anderen festgestellten Lichtpunkts des Hilfssteuerlichts, wenn er der nächste folgegebundene Lichtpunkt in dem Mausdoppelklickbefehl ist, wobei der X-, Y-Kamerakoordinatenwert bestimmt wird, um innerhalb von m (29B) Koordinatenstellen der zuvor gespeicherten X-Koordinatenstelle und innerhalb von n (29B) Koordinatenstellen der zuvor gespeicherten Y-Koordinatenstelle zu sein; Umwandeln (191B) der gegenwärtig gespeicherten X-, Y-Kamerakoordinatenwerte des anderen festgestellten Lichtpunkts des Hilfssteuerlichts in die entsprechenden x-, y-Koordinatenwerte, so daß sie als Teil des Mausdoppelklickbefehls übertragen (193B) werden können, wenn der festgestellte andere Lichtpunkt des Hilfssteuerlichts (27B) ausgelöscht war, bevor die vorgegebene Periode der Zeit T abgelaufen ist, und wenn der andere Lichtpunkt des Lichts innerhalb wenigstens von m (25B) Koordinatenstellen der gespeicherten X-Koordinatenstelle und innerhalb von mindestens n (29B) Koordinatenstellen der gespeicherten Y-Koordinatenstelle angeordnet war; wodurch, wenn eine Sequenz von Hilfslicht-Lichtpunkten (27B) festgestellt wird, die für einen Doppelklickbefehl kennzeichnend ist, der zu bewirken ist, der Mausdoppelklickbefehl übertragen wird.

2.  Eine Anordnung (9B, 11B) zur optischen Eingabe zum optischen Emulieren einer Computermauseingabeeinrichtung (10B), um ein primäres Videobild, das von einer Beobachtungsfläche (22B) reflektiert wird, in Reaktion auf Hilfssteuerlicht (27B) zu ändern, das für eine Hilfslichtinformation (26B) in der Form von folgegebundenen Lichtpunkten des Lichts (27B) kennzeichnend ist, um einen Mausdoppelklickbefehl zu definieren, wobei das primäre Bild (24B) durch eine Vielzahl von Pixelbildern definiert wird, die in einer Matrixanordnung angeordnet sind, in der jedes Pixelbild an einer spezifischen x-, y-Computerkoordinatenstelle innerhalb der Anordnung angeordnet ist, wobei das System (9B, 11B) eine Kameraeinrichtung (34B) zum Feststellen der Lichtpunkte des Hilfssteuerlichts (27B) aufweist, das von der Beobachtungsfläche (22B) reflektiert wird, und wobei das System **gekennzeichnet ist durch:**

    eine Einrichtung zum anfänglichen Ermitteln (34B, 28B, 150B, 500B, 42B,164B), ob ein festgestellter Lichtpunkt des Hilfssteuerlichts (27B), dasvonderBeobachtungsfläche(22B)reflektiert wird, versuchsweise ein anfänglicher folgegebundener Lichtpunkt in dem Mausdoppelklickbefehl ist; eine Einrichtung zum Speichern (42B, 187B) einer Koordinateninformation, wenn der festgestellte Lichtpunkt ein anfänglicher folgegebundener Lichtpunkt in dem Mausdoppelklickbefehl ist, wobei die gespeicherte Information kennzeichnend ist für eine spezifische, ermittelte X-, Y-Kamera (34B)-Koordinatenstelle für den festgestellten Lichtpunkt des Hilfssteuerlichts(27B),wobeidieX-,Y-Kamerakoordinatenstelle wenigstenseinerx-,y-Computerkoordinatenstelle von einem der Pixelbilder in der Matrixanordnung entspricht; eine Modifizierungseinrichtung (42B, 191B) zum Umwandeln der gespeicherten X-, Y-Kamerakoordinatenstelle indieentsprechendex-, y-Koordinatenstelle, so daß die Computerkoordinatenstelle des festgestellten Lichtpunkts als Teil des Mausdoppelklickbefehls übertragen werden kann; eine Taktgebereinrichtung (64B), um dazu beizutragen, das Zeitintervall zwischen folgegebundenen Lichtpunkten des Lichts (27B) zu bilden, um das optische Emulieren der Computermaus zu erleichtern, wobei die Taktgebereinrichtung (64B) einen Lichtpunkt-EIN-Taktgeber (64B, 178B)und einen Lichtpunkt-AUS-Taktgeber (64B, 156B) aufweist; eine EIN-Zeitgeber (64B, 178B)-Einrichtung zum Einstellen des EIN-Taktgebers auf eine vorgegebene Periode der Zeit T, wenn der festgestellte Lichtpunkt des Hilfssteuerlichts (27B) innerhalb der Matrixanordnung der das primäre Bild (24B) definierenden Pixelbilder festgestellt wird, wobei der EIN-Taktgeber (64B, 178B) auf diese Periode der Zeit T eingestellt wird, um dazu beizutragen, das optische Emulieren des Doppelklickbefehls der Computermauseingabeeinrichtung zu erleichtern; eine auf die EIN-Zeitgebereinrichtung ansprechende Einrichtung (42B, 34B, 40B), um zu ermitteln, ob der festgestellte Lichtpunkt des Lichts (27B) ausgelöscht war, bevor die vorgegebene Periode der Zeit T abgelaufen ist; eine AUS-Zeitgebereinrichtung (64B, 156B) zum Einstellen des AUS-Taktgebers auf eine vorgegebene Periode der Zeit t, wenn der festgestellte Lichtpunkt des Lichts (27B) ausgelöscht ist; eine Ermittlungseinrichtung (64B) zum Ermitteln, ob ein anderer festgestellter Lichtpunkt des Hilfssteuerlichts (27B), das von der Beobachtungsfläche (22B) reflektiert wird, festgestellt wird, nachdem die vorgegebene Periode der Zeit t abgelaufen ist, und innerhalb von mindestens m (29B) Koordinatenstellen der gespeicherten X-Koordinatenstelle und innerhalb von wenigstens n (29B) Koordinatenstellen der gespeicherten Y-Koordinatenstelle angeordnet ist; wobei die EIN-Zeitgebereinrichtung (64B, 178B) den EIN-Taktgeber (64B, 178B) auf eine andere vorgegebene Periode der Zeit T einstellt, wenn der andere Lichtpunkt des Hilfssteuerlichts innerhalb der Matrixanordnung der das primäre Bild (24B) definierenden Pixelbilder festgestellt wird; wobei die auf die EIN-Zeitgebereinrichtung ansprechende Einrichtung (42B, 34B, 40B) ermittelt, ob der andere festgestellte Lichtpunkt des Lichts ausgelöscht ist, bevor die andere vorgegebene Periode der Zeit T abgelaufen ist; wobei die Speichereinrichtung (42B) zum Speichern der Koordinateninformation eine andere X- und. Y-Kamerakoordinatenstelle speichert, wenn der andere festgestellte Lichtpunkt der nächste folgegebundene Lichtpunkt in dem Mausdoppelklickbefehl ist, wobei die andere X- und Y-Kamerakoordinatenstelle bestimmt wird, um innerhalb von m (29B) Koordinatenstellen der zuvor gespeicherten X-Koordinatenstelle und innerhalb von n (29B) Koordinatenstellen der zuvor gespeicherten Y-Koordinatenstelle zu sein; wobei die Modifizierungseinrichtung (42, 191B) die gegenwärtig gespeicherten X-, Y-Kamerakoordinatenstelle des anderen festgestellten Lichtpunkts des Hilfssteuerlichts in die entsprechende x-, y-Computerkoordinatenstelle umwandelt, so daß die Computerkoordinatenstelle des anderen festgestellten Lichtpunkts als Teil des Mausdoppelklickbefehls übertragen werden kann, wenn der festgestellte andere Lichtpunkt des Hilfssteuerlichts ausgelöscht ist, bevor die andere vorgegebene Periode der Zeit T abgelaufen ist, und wenn der andere Lichtpunkt des Lichts innerhalb von wenigstens m (29B) Koordinatenstellen der gespeicherten X-Koordinatenstelle und innerhalb von wenigstens n (29B) Koordinatenstellen der gespeicherten Y-Koordinatenstelle angeordnet war; und wodurch, wenn die Sequenz der Hilfslicht-Lichtpunkte (27B) festgestellt wird, ein Mausdoppelklickbefehl übertragen wird.

3. Die Anordnung zur optischen Eingabe nach Anspruch 2, ferner **dadurch gekennzeichnet, daß** T etwa 0,75 Sekunden ist und t etwa 0,75 Sekunden ist.

4. Die Anordnung zur optischen Eingabe nach Anspruch 2, ferner **gekennzeichnet durch** eine Relativkoordinateneinrichtung zum Ermitteln, ob der Lichtpunkt des Hilfssteuerlichts und der andere Lichtpunkt des Hilfssteuerlichts beide innerhalb eines gegebenen Bereichs (29B) der Beobachtungsfläche (22B) auftraten.

5. Die Anordnung zur optischen Eingabe nach Anspruch 2, ferner **gekennzeichnet durch:**
eine Anschlußeinrichtung (45B) zum Anschließen einer Mehrzahl von Eingabeeinheiten (26B, 28B, 10B) mit wesentlich unterschiedlichen Übertragungsraten an einen Hauptrechner (12B), wobei der Hauptrechner (12B) wenigstens zwei getrennte Übertragungsgeschwindigkeiten zum Empfangen von Information von den Eingabeeinheiten aufweist; eine Schalteinrichtung (28B, 51B, 52B), die mit der Anschlußeinrichtung gekoppelt ist, um selektiv einen gekennzeichneten Übertragungsweg zwischen dem Hauptrechner (12B) und einer Einheit der Mehrzahl von Eingabeeinheiten (26B, 28B, 10B) aufzubauen; eine Prozessoreinrichtung (42B) zum Erzeugen eines Selektionssignals, um die Schalteinrichtung (28B, 51B, 52B) dazu zu veranlassen, einen Datenübertragungsweg zwischen dem Hauptrechner (12B) und nur einer einzelnen der Mehrzahl der Eingabeeinheiten (26B, 28B, 19B) aufzubauen; und eine Algorithmuseinrichtung (300B), die teilweise in der Prozessoreinrichtung (42B) und teilweise innerhalb des Hauptrechners (12B) angeordnet ist, um den Hauptrechner (12B) dazu zu veranlassen, Daten bei einer bestimmten seiner Übertragungsraten zu empfangen.

6. Das Verfahren nach Anspruch 1, ferner **gekennzeichnet durch:** eine Methode (100A, 200A, 150A, 300A, 500A) zum Steuern eines projizierten Videobildes (24A) mit Hilfssteuerlicht (27A), das auf eine Beobachtungsfläche projiziert wird, die das projizierte Videobild (24A) reflektiert, **gekennzeichnet durch:**
Erzeugen eines hellen Eich-Videosignals (35A), das für die Kombination des projizierten Videobildes (24A) und des Hintergrundlichts kennzeichnend ist, um eine genaue Unterscheidung des projizierten Videobildes (24A) von dem Hintergrundlicht zu erleichtern, das von der Beobachtungsfläche (22A) reflektiert wird, wobei das Videosignal (35A) einen Minimalwert und einen Maximalwert aufweist; Ermitteln (Figuren 7A bis 9A) des Minimalwertes des hellen Eich-Videosignals oberhalb eines gegebenen Hintergrundlichtpegels (43A), um die Eliminierung eines für das Hintergrundlicht kennzeichnenden Teils des Videosignals zu erleichtern; Speichern (42A) des ermittelten Minimalwerts, um ein Modifizieren des Videosignals oberhalb des gegebenen Hintergrundlichtpegels zu erleichtern, um danach ein Ansprechen auf das Hilfssteuerlicht (27A) zu erleichtern, das auf die Beobachtungsfläche (22A) projiziert wird; Einstellen (42A, Figur 9A) des Wertes des hellen Eich-Videosignals von dem Maximalwert auf einen kleineren Wert, wobei dieser kleinere Wert gleich zu dem Maximalwert weniger den gespeicherten Minimalwert ist, um ein modifiziertes Videosignal (35AA) zu erzeugen, das nur für das projizierte Videobild kennzeichnend ist, wobei dieses modifizierte Videosignal einen Minimalwert und einen Maximalwert aufweist; und Einstellen (42A, Figuren 11A bis 12A) des Wertes eines Referenzpegelsignals (48A), um größer zu sein als der geringere Wert, um ein Videosignal (69A), das für ein Hilfssteuerlicht-Bild (27A) kennzeichnend ist, von einem Videosignal zu unterscheiden, das für die Kombination des projizierten Videobildes (24A) und des Hintergrundlichts kennzeichnend ist, um eine genaue Unterscheidung des projizierten Hilfssteuerlichts (27A) von dem projizierten Videobild-Licht (24A) zu erleichtern, das von der Beobachtungsfläche (22A) reflektiert wird; wodurch das Hilfssteuerlicht (27A) dazu befähigt wird, das projizierte Display-Bild (24A) zu steuern, wenn auf die Beobachtungsfläche (22A) projiziert.

7. Die Anordnung zur optischen Eingabe nach Anspruch 2, weiterhin aufweisend: ein System (9A, 109A, 209A, 309A) zum Eichen eines optischen Computereingabesystems (10A, 110A, 210A, 310A), um das Modifizieren eines Videobildes (24A) zu erleichtern, das durch Computermittel erzeugt, durch Display-Mittel (12A) angezeigt und durch Projektionsmittel (13A) auf eine Beobachtungsfläche (22A) projiziert wird, **gekennzeichnet durch:** Lichtfühlmittel (34A), die ein Gesichtsfeld (25A) aufweisen, das wesentlich größer als das Videobild (24A) ist, das von der Beobachtungsfläche (22A) reflektiert wird, und für eine Bewegung relativ zu der Beobachtungsfläche und den Projektionsmitteln (20A) angebracht sind, so daß das Gesichtsfeld (25A) dazu befähigt ist, alles von dem Videobild (24) einzufangen, das von der Beobachtungsfläche (22A) reflektiert wird, um ein Reflektiertes-Licht-Informationssignal (35A) zu erzeugen, das für die Luminanzpegel der von der Beobachtungsfläche (22A) reflektierten Licht-Bilder kennzeichnend ist; Signalverarbeitungsmittel (28A), die mit dem Computer (12A) und den Lichtfühlmitteln (34A) gekoppelt sind, um das Reflektiertes-Licht-Informationssignal (35A) in eine Computerkoordinateninformation umzuwandeln, um das Videobild (24A) zu modifizieren, das durch die Computermittel (12A) erzeugt wird; Signaleichmittel (9A, 39A, 109A, 139A, 239A, 339A) zum automatischen Einstellen der Stärke des Reflektiertes-Licht-Informationssignals (35A) für unterschiedliche Hintergrundbeleuchtungsbedingungen, um die Signalverarbeitungsmittel (28A) dazu zu befähigen, das Signal (35A) genau zu verarbeiten, so daß es zuverlässig in die Computerkoordinateninformation umgewandelt wird, um das Videobild (24A) zu modifizieren, das durch die Computermittel (12A) erzeugt wird; wobei die Signaleichmittel (9A, 29A, 109A, 139A, 239A, 339A) Diskriminierungsmittel (40A, 140A, 240A, 340A) aufweisen, um ein Vergleichen von Signalen zu erleichtern, die für eine Mehrzahl von Licht-Bildern.kennzeichnend sind, die eine Mehrzahl von unterschiedlichen Luminanzpegeln aufweisen und von der Beobachtungsfläche (22A) reflektiert werden, und Mikroprozessormittel (42A, 142A, 242A, 342A) zum Steuern der Diskriminierungsmittel (40A, 140A, 240A, 340A), um den Vergleich zwischen Licht-Bildern, die für das Videobild (24A) kennzeichnend sind, das von der Beobachtungsfläche (22A) reflektiert wird, und Licht-Bildern zu ermöglichen, die für außen erzeugte (26A) Lichtpunkte des Steuerlichts (27A) kennzeichnend sind, das von der Beobachtungsfläche (22A) reflektiert wird; wobei die reflektierten Licht-Bilder, die für das Videobild (24A) kennzeichnend sind, unterschiedliche Luminanzpegel aufweisen, die in einem Bereich zwischen einem maximalen Luminanzpegel und einem minimalen Luminanzpegel liegen.

8. Das System nach Anspruch 7, ferner **dadurch gekennzeichnet,** daß es Mittel zum Erzeugen (42A) eines hellen Eich-Videosignals (35A) aufweist, das für die Kombination des projizierten Videobildes (24A) und des Hintergrundlichts kennzeichnend ist, um das genaue Unterscheiden des projizierten Videobildes (24A) von dem Hintergrundlicht zu erleichtern, das von der Beobachtungsfläche (22A) reflektiert wird, wobei das Videosignal (35A) einen Minimalwert und einen Maximalwert aufweist; Mittel zum Ermitteln (42A, Figuren 7A bis 9A) des Minimalwerts des hellen Eich-Videosignals (35A) oberhalb eines gegebenen Hintergrundlichtpegels, um die Eliminierung eines Teils des Videosignals zu erleichtern, der für das Hintergrundlicht kennzeichnend ist; Mittel zum Speichern (42A) des ermittelten Minimalwertes, um ein Modifizieren des Videosignals (35A) oberhalb des gegebenen Hintergrundlichtpegels zu erleichtern, um danach ein Ansprechen auf die Lichtpunkte des Steuerlichts (27A) zu erleichtern, das auf die Beobachtungsfläche (22A) projiziert wird; Mittel zum Einstellen (42A, Figuren 7A bis 9A) des Wertes des hellen Eich-Videosignals von dem Maximalwert auf einen kleineren Wert, wobei dieser kleinere Wert gleich zu dem Maximalwert weniger den gespeicherten Minimalwert ist, um ein modifiziertes Videosignal (35AA) zu erzeugen, das nur für das projizierte Videobild (24A) kennzeichnend ist, wobei das modifizierte Videosignal (35AA) einen anderen Minimalwert und einen anderen Maximalwert aufweist; und Mittel zum Einstellen des Wertes eines Referenzpegelsignals (48A), um größer zu sein als der geringere Wert, um ein Videosignal, das für ein Hilfssteuerlicht-Bild (27A) kennzeichnend ist, von einem Videosignal zu unterscheiden, das für die Kombination des projizierten Videobildes und des Hintergrundlichts kennzeichnend ist, um die genaue Unterscheidung des projizierten Hilfssteuerlichts (27A) von dem Licht des projizierten Videobildes (24A) zu erleichtern, wobei dieses Licht von der Beobachtungsfläche (22A) reflektiert wird; wodurch das Hilfssteuerlicht (27A) dazu befähigt ist, das projizierte Display-Bild (24A) zu steuern, wenn auf die Beobachtungsfläche (22A) projiziert.

**9.** Das System nach Anspruch 7, ferner **gekennzeichnet durch** ein Signalverwendungsmittel (29A, 75A, 76A, 81A, 139A, 176A, 239A, 276A, 281A, 339A), um die Stärke des Reflektiertes-Licht-Informationssignals (35A) zu erhöhen, um das Unterscheiden zwischen Signalen zu erleichtern, die für die Reflexion der verschiedenen Licht-Bilder von der Beobachtungsfläche (22A) kennzeichnend sind; wobei die Reflektiertes-Licht-Bilder, die für das Videobild (24A) kennzeichnend sind, unterschiedliche Luminanzpegel aufweisen, die im Bereich zwischen einem maximalen Luminanzpegel und einem minimalen Luminanzpegel liegen; und wobei die Reflektiertes-Licht-Bilder, die für das Steuerlicht (27A) kennzeichnend sind, wenigstens zwei unterschiedliche Luminanzpegel (89A, 89A) aufweisen, um dazu beizutragen, ein Richten des Steuerlichts (27A) zu erwünschten Stellen an dem Videobild ohne Erzeugung des Reflektiertes-Licht-Informationssignals zu erleichtern.

**10.** Das System nach Anspruch 9, ferner **dadurch gekennzeichnet**, daß die Projektionsmittel (20A) optische Eigenschaften aufweisen, um das Videobild (24A) durch einen besonderen optischen Weg auf die Beobachtungsfläche (22A) zu projizieren, um von dieser reflektiert zu werden; und daß die Beobachtungsfläche (22A) in einem Raum mit Umgebungslicht hierin angeordnet ist; wobei die optischen Eigenschaften der Projektionsmittel (20A) in Verbindung mit dem Umgebungslicht und dem Abstand, um den die Beobachtungsfläche (22A) von den Projektionsmitteln (20A) angeordnet ist, verursachen, daß die von der Beobachtungsfläche (22A) reflektierten Licht-Bilder maximale und minimale Luminanzpegel relativ zueinander aufweisen; daß die Mikroprozessormittel (42A) Referenzpegelsignalmittel aufweisen, um ein Referenzpegelsignal (48A) und ein Schwarzpegelsignal (43A, 143A, 243A, 343A) zu erzeugen, um dazu beizutragen, die Unterscheidung zwischen Signalen zu erleichtern, die für die verschiedenen, von der Beobachtungsfläche (22A) reflektierten Licht-Bilder kennzeichnend sind; und daß die Diskriminierungsmittel (40A, 140A, 240A, 340A) Vergleichsmittel aufweisen, die auf das Referenzpegelsignal (48A) ansprechen, um den genauen Vergleich der verschiedenen, von der Beobachtungsfläche (22A) reflektierten Licht-Bilder relativ zu den Umgebungslichtbedingungen und den optischen Eigenschaften der Projektionsmittel (20A) zu ermöglichen.

**11.** Das System nach Anspruch 10, ferner **dadurch gekennzeichnet,** daß die wenigstens zwei unterschiedlichen Luminanzpegel einen Positionierungsluminanzpegel, der nicht als kennzeichnend für ein Steuersignal zum Modifizieren des Videobildes verarbeitet wird, und einen Verarbeitungsluminanzpegel aufweisen, der als kennzeichnend für ein Steuersignal zum Modifizieren des Videobildes verarbeitet wird.

**12.** Das System nach Anspruch 8, ferner **gekennzeichnet durch**: Mittel zum Erzeugen eines Niedrigintensität-Hilfslokalisierungsbildes zum Projizieren auf die Beobachtungsfläche, um einem Anwender zu helfen, einen erwünschten Bereich des von der Beobachtungsfläche reflektierten Videobildes zu finden; Mittel zum Erzeugen des Hilfslicht-Bildes als ein Hochintensität-Hilfssteuerbild zum Projizieren auf die Beobachtungsfläche im wesentlichen an derselben Stelle, an der das Lokalisierungsbild projiziert wurde, um es dem System zur optischen Eingabe zu ermöglichen, das Steuerbild für Eichzwecke festzustellen; und Diskriminierungsmittel zum Unterscheiden des für das Steuerbild kennzeichnenden Signals von dem Referenzpegelsignal für Display-Steuerzwecke.

**13.** Das System nach Anspruch 12, ferner **gekennzeichnet durch**: Mittel zum Verursachen, daß sich das projizierte Videobild zwischen einem hellsten Bild und einem dunkelsten Bild ändert, um dazu beizutragen, das Ermitteln der Maximal- und Minimalwerte des modifizierten Videosignals relativ zu dem projizierten Bild zu erleichtern; und Mittel zum Ermitteln des Maximalwerts des modifizierten Videosignals, um dazu beizutragen, einen Wert des Referenzpegelsignals zu ermitteln, der genügend oberhalb des Wertes eines modifizierten Videosignals ist, das für die Kombination des Niedrigintensität-Lokalisierungsbildes und des hellsten Bildes kennzeichnend ist, um das System zur optischen Eingabe daran zu hindern, eine Hilfssteuerinformation in Reaktion auf die Systemfeststellung des Lokalisierungsbildes an der Beobachtungsfläche zu erzeugen.

**14.** Das System nach Anspruch 13, ferner **gekennzeichnet durch**: Mittel zum Speichern von erwarteten Grenzwerten des projizierten Videobildes für Eichzwecke; wobei die erwarteten Grenzwerte kennzeichnend sind für einen Bereich von maximalen und minimalen Breiten- und Höhen-Werten von projizierten Bildern mit einer ausreichenden Intensität, um durch das System zur optischen Eingabe festgestellt zu werden; Mittel zum Ermitteln der Breiten- und Höhen-Werte des projizierten Videobildes, das durch das System zur optischen Eingabe festgestellt worden ist; Mittel zum Vergleichen der ermittelten Breiten- und Höhen-Werte des projizierten Videobildes mit den erwarteten Grenzwerten, um zu ermitteln, wenn das System zur optischen Eingabe physikalisch ausgerichtet ist mit der Beobachtungsfläche, um das gesamte projizierte Videobild von der Beobachtungsfläche festzustellen; und wobei das erwähnte System zur Eingabe ausgerichtet ist, wenn sowohl die ermittelten Breitenwerte als auch die ermittelten Höhenwerte innerhalb den Bereich der jeweils erwarteten maximalen und minimalen Breiten- und Höhenwerte fallen.

**15.** Die Anordnung zur optischen Eingabe nach Anspruch 2, ferner aufweisend: eine Bildprojektionsanordnung (10C, 12C), die Projektionsmittel (20A) zum Richten eines projizierten Bildes (24C) auf eine entfernte Beobachtungsfläche (22C) aufweist, Lichtfühlmittel (34C) zum Feststellen sämtlicher Wellenlängen des Lichts in dem sichtbaren Spektrum unter Einbeziehung des reflektierten, projizierten Bildes und des Umgebungslichts, und einen optischen Apparat (16C) zum Erzeugen eines Videobildes, und ein System (14C) zum Steuern des optischen Apparates (16C) zum Erzeugen eines Videobildes, wobei die Anordnung **gekennzeichnet ist** durch:
Mittel zum Erzeugen (26C) eines optischen Steuerbilds (27C) mit einer vorgegebenen optischen Wellenlänge und einem gegebenen Intensitätspegel, um das projizierte Bild (24C) zu modifizieren; zwischen der entfernten Beobachtungsfläche (22C) und den Lichtfühlmitteln (34C) angeordnete Mittel (36C) zum Hindurchlassen von sichtbarem Licht nur innerhalb eines schmalen, vorbestimmten Bandes von optischen Wellenlängen einschließlich des reflektierten, projizierten Bildes, des Umgebungslichtes und des optischen Steuerbildes; auf die Lichtfühlmittel (34C) ansprechende Signalmittel (30C, 50C) zum Erzeugen eines elektrischen Signals, das für das sichtbare Licht mit dem schmalen Band von Wellenlängen kennzeichnend ist; Signalmodifizierungsmittel (50C, 54C, 56C, 70AC, 80AC), die auf die Signalmittel ansprechend sind, um einen Schwarzpegel-Referenzpegel zu ermitteln, um dazu beizutragen, ein modifiziertes elektrisches Signal zu erzeugen, das für das sichtbare Licht mit dem schmalen Band von Wellenlängen kennzeichnend ist, und um einen Spitzenintensitätspegel zu ermitteln, der im wesentlichen gleich ist zu der Kombination des niedrigsten Intensitätspegels des von der Beobachtungsfläche reflektierten, projizierten Bildes und des höchsten Intensitätspegels des von der Beobachtungsfläche (22C) reflektierten Steuerbildes; Referenzpegelmittel (76C, D, 56C), die auf das modifizierte elektrische Signal ansprechend sind, um einen Spitzenvideobildreferenzpegel und einen Spitzensteuerbildreferenzpegel zu ermitteln und um einen Referenzpegel zwischen dem Spitzenvideobildreferenzpegel und dem Spitzensteuerbildreferenzpegel zu errichten; Steuermittel (14C, 58C), die auf das elektrische Signal ansprechend sind, um ein Steuersignal zu erzeugen, das für eine erwünschte Modifikation des projizierten Bildes (24C) kennzeichnend ist, wann auch immer das elektrische Signal größer ist als der Referenzpegel, wobei dieses elektrische Signal weiterhin kennzeichnend ist für sichtbares Licht in dem schmalen Band von Wellenlängen und einen Spitzenintensitätspegel aufweist, der zumindest größer ist als der höchste Intensitätspegel des projizierten, von der Beobachtungsfläche reflektierten Bildes; und Mittel zum Modifizieren des projizierten Bildes in Reaktion auf das Steuersignal.

**16.** Die Anordnung nach Anspruch 15, ferner **gekennzeichnet durch:**
optische Dämpfungsmittel (36C) zum Hindurchlassen lediglich des schmalen Bandes von optischen Wellenlängen, um die Feststellung des optischen Steuerbildes durch die Lichtfühlmittel (34C) zu erleichtern, so daß die Fühlmittel (34C) empfangenes Licht in dem schmalen Band feststellen können; wobei die Lichtfühlmittel (34C) ein elektrisches Ausgangssignal erzeugen, das kennzeichnend ist für Licht, das nur Wellenlängen im wesentlichen innerhalb des schmalen Bandes von optischen Wellenlängen aufweist; Differenzmittel (56C), die auf das erwähnte Ausgangssignal ansprechend sind, um einen Differenzintensitätswert des Lichts zu ermitteln, das durch die optischen Fühlmittel (34C) gefühlt worden ist; und Diskriminierungsmittel (56C, Figuren 6C bis 9C) zum Feststellen, wenn der Differenzintensitätswert einen positiven Schwellwertbetrag überschreitet und im wesentlichen unmittelbar danach sich mehr als ein negativer Schwellwertbetrag vermindert, um gegenüber Licht eines reflektierten, projizierten Bildes und Fremdlicht zu unterscheiden, so daß lediglich Hilfslichtsteuerbilder festgestellt werden können.

**17.** Die Anordnung nach Anspruch 16, ferner **dadurch gekennzeichnet**, daß das Ausrichtungsbild ein Hilfssteuerbild (27C) ist.

**18.** Die Anordnung nach Anspruch 16, ferner **gekennzeichnet durch**:
Anbringungsmittel, die mit den Lichtfühlmitteln (34C) verbunden sind, um diese bewegbar zu tragen, um es diesen zu ermöglichen, positionsmäßig relativ zu einem Beobachtungsbereich (25C) an der Beobachtungsfläche (22C) eingestellt zu werden, so daß die Lichtfühlmittel (34C) mit dem Beobachtungsbereich (22C) ausgerichtet werden können; eine Lichtquelle (40C, 44C), die an den Lichtfühlmitteln (34C) angebracht ist, um ein Ausrichtungsbild (46C) auf den Beobachtungsbereich (25C) zu projizieren, um die Einstellung der Lichtfühlmittel (34C) in eine ausgerichtete Position zu erleichtern; elektrische Schaltmittel (42C), die mit der Lichtquelle (40C, 44C) verbunden sind, um diese zu aktivieren, um das Ausrichtungsbild (46C) im wesentlichen in Richtung zu dem Beobachtungsbereich (25C) zu projizieren, so daß die Fühlmittel (34C) und die Lichtquelle (40C, 44C) durch Verwenden der Anbringungsmittel einstellbar bewegt werden können, bis das Ausrichtungsbild (46C) im wesentlichen an einem zentralen Teil des Beobachtungsbereichs (25C) positioniert ist; wodurch die Lichtfühlmittel (34C) mit dem Beobachtungsbereich (25C) genau ausgerichtet sind, um das gesamte projizierte Bild (24C) optisch zu fühlen.

19. Das Verfahren nach Anspruch 1, ferner **gekennzeichnet durch:** eine Methode (70AC, 80AC) des Verwendens einer optischen Hilfssteueranordnung (10C, 26C) zum Steuern eines Flüssigkristallanzeigesystems für eine Projektion eines Bildes (24C) auf eine Fläche (22C), **gekennzeichnet durch:**
Empfangen (34C, 70AC, 80C) von einfallendem Licht, das kennzeichnend ist für ein reflektiertes, projiziertes Bild, ein reflektiertes Hilfssteuerbild (24C) mit einem schmalen Band von optischen Wellenlängen und Fremdlicht einschließlich reflektiertes und direktes Umgebungslicht mit unterschiedlichen Intensitäten und optischen Wellenlängen; Richten eines Hilfslichtsteuerbildes (27C) mit einem schmalen Wellenlängenband auf die Fläche (22C) und das projizierte Bild (24C) auf dieser, um dazu beizutragen, das Steuerbild (27C) von allem anderen Licht zu unterscheiden; optisches Filtern (36C) des einfallenden Lichts, das empfangen worden ist, um lediglich das schmale Band von optischen Wellenlängen hindurchzulassen, um die Feststellung des Hilfssteuerbildes (27C) zu erleichtern; Erzeugen (30C, 50C) eines elektrischen Ausgangssignals, das für Licht kennzeichnend ist, das nur Wellenlängen im wesentlichen innerhalb des schmalen Bandes von optischen Wellenlängen aufweist; Feststellen (50C), wenn ein Intensitätswert einen positiven Schwellwertbetrag überschreitet und sich im wesentlichen unmittelbar danach mehr als ein negativer Schwellwertbetrag vermindert, um gegenüber Licht des reflektierten, projizierten Bildes und Fremdlicht zu unterscheiden, so daß lediglich Hilfslichtsteuerbilder (27C) festgestellt werden können.

20. Das Verfahren nach Anspruch 19, ferner **gekennzeichnet durch:**
Ermitteln eines Schwarzpegel-Referenzpegels, um dazu beizutragen, ein modifiziertes elektrisches Signal zu erzeugen, das für das empfangene Licht kennzeichnend ist, das das schmale Band von Wellenlängen und einen Spitzenintensitätspegel aufweist, der im wesentlichen gleich zu der Kombination des niedrigsten Intensitätspegels des von der Fläche reflektierten, projizierten Bildes und des höchsten Intensitätspegels des von der Fläche reflektierten Steuerbildes ist; Ermitteln eines Spitzenvideobildreferenzpegels und eines Spitzensteuerbildreferenzpegels; Errichten eines Referenzpegels zwischen dem Spitzenvideobildreferenzpegel und dem Spitzensteuerbildreferenzpegel; Erzeugen (58C) eines Steuersignals, das kennzeichnend ist für eine erwünschte Modifikation des projizierten Bildes, wann auch immer das elektrische Signal größer als der Referenzpegel ist, wobei dieses elektrische Signal ferner kennzeichnend ist für sichtbares Licht in dem schmalen Band von Wellenlängen und einen Spitzenintensitätspegel aufweist, der zumindest größer ist als der höchste Intensitätspegel des von der Beobachtungsfläche reflektierten, projizierten Bildes; und Modifizieren des projizierten Bildes (24C) in Reaktion auf das Steuersignal.

21. Das Verfahren nach Anspruch 19, das weiterhin eine Eichmethode für das Flüssigkristallanzeigesystem aufweist, **gekennzeichnet durch:**
Verwenden des Anzeigesystems, um ein Eichvideobild auf die Fläche zu projizieren; Feststellen eines vorbestimmten schmalen Bandes von optischen Wellenlängen des von der Fläche reflektierten Lichts; Ermitteln des Wertes der maximalen Videointensität der reflektierten Wellenlängen von Licht; Speichern dessen maximalen Intensitätswertes; Errichten eines Referenzpegelwerts bei einem Pegel wesentlich größer als der gespeicherte maximale Intensitätswert und wesentlich geringer als die Kombination des Wertes der maximalen Videointensität und eines maximalen Werts von Steuerlicht, das auf das Videobild gerichtet und von diesem Videobild reflektiert wird; wobei der maximale Videointensitätswert der maximale Intensitätspegelwert von nur jenem Teil des von der Fläche reflektierten Lichts ist, der kennzeichnend für ein projiziertes Videobild mit Wellenlängen in nur einem schmalen Bandbereich ist; wobei der maximale Steuerlichtwert die Kombination ist des minimalen Intensitätspegelwerts von nur jenem Teil des von der Fläche reflektierten Lichts ist, der kennzeichnend ist für das projizierte Videobild mit Wellenlängen in nur dem schmalen Bandbereich, und des maximalen Steuerlichtintensitätswerts mit Wellenlängen in nur dem erwähnten schmalen Bandbereich, in dem das Steuerlicht von dem zuletzt erwähnten Teil des projizierten Videobildes reflektiert wird; und Erzeugen (58C) eines Steuersignals, wann auch immer der Wert des Feststellungssignals größer ist als der Referenzpegelwert, wobei das Steuersignal kennzeichnend ist für zumindest eine festgestellte Videobildkoordinatenstelle, um dazu beizutragen, die Anzeige zu steuern.

22. Das Verfahren nach Anspruch 19, ferner **gekennzeichnet durch:**
Verwenden von optischen Fühlmitteln (34C); optisches Fühlen (34C) eines projizierten Bildes (24C), wobei dieses Bild (24C) einen zugeordneten Beobachtungsbereich (25C) an der Fläche (22C) aufweist, um elektrische Steuersignale zum Steuern des Anzeigesystems zu erzeugen; Verwenden einer Lichtquelle (40C, 44C) zum Erzeugen eines Ausrichtungsbildes (46C); Projizieren des Ausrichtungsbildes (46C) auf den Beobachtungsbereich (25C), um die Einstellung der optischen Fühlmittel (34C) in eine ausgerichtete Position zu erleichtern; Aktivieren der Lichtquelle (40C, 44C), um das Ausrichtungsbild (46C) im wesentlichen in Richtung zu dem Beobachtungsbereich (22C) zu projizieren, so daß die Fühlmittel (34C) und die Lichtquelle (46C) einstellbar bewegt werden können, bis das Ausrichtungsbild im wesentlichen an einem zentralen Teil des Beobachtungsbereichs (22C) positioniert ist; wodurch die optischen Fühlmittel (34C) mit dem Beobachtungsbereich (22C) genau ausgerichtet sind, um das gesamte projizierte Bild (24C) optisch zu fühlen.

**Revendications**

1. Procédé (150B, 501B) pour émuler optiquement un dispositif d'entrée à souris (10B) d'ordinateur pour modifier une image vidéo primaire (24B) réfléchie par une surface d'observation (22B), l'image primaire (24B) étant définie par une pluralité d'images de pixels disposées selon un réseau matriciel, chaque image de pixel étant disposée en un emplacement de coordonnées spécifiques x, y à l'intérieur du réseau, le procédé utilisant un dispositif (26B) produisant une lumière auxiliaire servant à produire une séquence d'information de lumière auxiliaire (27B), ladite séquence d'informations de lumière auxiliaire étant indicative d'une commande de double cliquage de souris sous la forme de spots séquencés d'une lumière de commande auxiliaire (27B) réfléchie par la surface d'observation (22B), le procédé étant caractérisé par:

la détection 158B, 160B, 162B d'un spot de la lumière de commande auxiliaire (27B) réfléchie par la surface d'observation (22); la détermination initiale (15B, 112B, 164B) du fait que le spot détecté de la lumière de commande auxiliaire (27B) est ou non éventuellement un spot initial séquencé dans ladite commande de double cliquage de souris; la mémorisation (154B, 187B) de valeurs de coordonnées X, Y d'un appareil de prise de vues du spot détecté de l'élément de commande auxiliaire s'il existe un spot de séquence initiale dans ladite commande de double cliquage de souris, lesdites valeurs de coordonnées X, Y de l'appareil de prise de vues correspondant à au moins un emplacement de coordonnées x, y, dans l'ordinateur de l'une des images de pixels dans le réseau matriciel; la conversion (191B) des valeurs de coordonnées X, Y, dans l'appareil de prise de vues, mémorisées du spot détecté de la lumière de commande auxiliaire (27B) en les valeurs de coordonnées x, y correspondantes de sorte qu'elles peuvent être transmises (193B) en tant que parties de ladite commande de double cliquage de souris; le réglage (172B, 176B, 180B) d'une minuterie d'ACTIVATION au moment où le spot de la lumière de commande auxiliaire (27B) est détecté à l'intérieur du réseau matriciel d'images de pixels définissant l'image primaire (24B), ladite minuterie d'activation étant réglée sur un intervalle de temps déterminé T pour faciliter l'émulation optique de la commande de double cliquage du dispositif d'entrée à souris d'ordinateur; la détermination (180B) du fait que le spot de lumière détecté s'est éteint avant que ledit intervalle de temps prédéterminé T se soit écoulé; le réglage (168B, 170B) d'une minuterie d'arrêt lorsque le spot détecté de lumière s'est éteint, ladite minuterie d'arrêt étant réglée sur un intervalle de temps prédéterminé t; la détection (158B, 160B, 162B) d'un autre spot d'une lumière de commande auxiliaire (27B) réfléchie par la surface d'observation (22B); la détermination (186B) du fait que l'autre spot détecté de la lumière de commande auxiliaire est disposé ou non en au moins m emplacements de: coordonnées de l'emplacement de coordonnée X mémorisé et à l'intérieur d'au moins n emplacements de coordonnées de l'emplacement de coordonnée Y mémorisé; le réglage de ladite minuterie d'activation à nouveau lorsque l'autre spot de la lumière de commande auxiliaire (27B) est détecté, ladite minuterie d'activation étant réglée sur un intervalle de temps prédéterminé T pour faciliter l'émulation optique de la commande de double cliquage du dispositif d'entrée à souris d'ordinateur; la détermination du fait que l'autre spot détecté de la lumière de commande auxiliaire (27B) s'éteint avant que ledit intervalle de temps prédéterminé (T) se soit écoulé; la mémorisation de valeurs de coordonnées X, Y dans l'appareil de prise de vues, de l'autre spot détecté de la lumière de commande auxiliaire, s'il s'agit du spot séquencé suivant dans ladite commande de double cliquage de la souris, lesdites valeurs de coordonnées X, Y dans l'appareil de prise de vues étant déterminées comme situées à l'intérieur de m (29B) emplacements de coordonnées de l'emplacement de coordonnée X mémorisé précédemment et à l'intérieur de n (29B) emplacements de coordonnées de l'emplacement de coordonnée Y mémorisée précédemment; la conversion (191B) des valeurs de coordonnées X, Y, dans l'appareil de prise de vues, actuellement mémorisées de l'autre spot détecté de la lumière de commande auxiliaire en les valeurs de coordonnées x, y correspondantes de sorte qu'elles peuvent être transmises (193B) en tant que partie de ladite commande de double cliquage de la souris si l'autre spot détecté de la lumière de commande auxiliaire (27B) s'est éteint avant que l'intervalle de temps prédéterminé T se soit écoulé et si l'autre spot de lumière était disposé à l'intérieur d'au moins m (25B) emplacements de coordonnées de l'emplacement de coordonnée X mémorisé et à l'intérieur d'au moins n (29B) emplacements de coordonnées de l'emplacement de coordonnée Y mémorisé; auquel cas lorsqu'une séquence de spots de lumière auxiliaire (27B) sont détectés comme étant indicatifs d'une commande de double cliquage, la transmission de ladite commande de double cliquage de souris est déclenchée.

2. Dispositif d'entrée optique (9B,11B) pour émuler optiquement un dispositif d'entrée de souris (10B) d'ordinateur pour modifier une image vidéo primaire réfléchie par une surface d'observation (22B) en réponse à une lumière de commande auxiliaire (27B) indicative d'informations de lumière auxiliaire (26B) sous la forme de spots séquencés de lumière (27B) pour définir une commande de double cliquage de souris, l'image primaire (24B) étant définie par une pluralité d'images de pixels disposés dans un réseau matriciel, chaque image de pixel étant disposée en un emplacement spécifique de coordonnées x, y de l'ordinateur à l'intérieur du réseau, le système (9B, 11B) possédant des moyens formant appareil de prise de vues (34B) pour détecter les spots de lumière de commande auxiliaire (27B) par la surface d'observation (22B), le système étant caractérisé par :

des moyens (34B,28B,150B,500B,42B,164B) pour déterminer initialement si un spot détecté de lumière de commande auxiliaire (27B) réfléchie par la surface d'observation (22B) est éventuellement un spot initial séquencé dans ladite commande de double cliquage de souris; des moyens (42B,187B) pour mémoriser des informations de coordonnées, si le spot détecté est un spot initial séquencé dans ladite commande de double cliquage de souris, ladite information mémorisée étant indicative d'un emplacement de coordonnées spécifique déterminé X, Y de l'appareil de prise de vues (34B) pour le spot détecté de la lumière de commande auxiliaire (27B), ledit emplacement de coordonnées X, Y de l'appareil de prise de vues correspondant au moins à l'emplacement de coordonnées x, y, dans l'ordinateur, de l'une des images de pixels dans le réseau matriciel; des moyens de modification (42B,191B) pour convertir l'emplacement de coordonnées X, Y mémorisé de l'appareil de prise de vues en l'emplacement de coordonnées x, y correspondant de sorte que l'emplacement de coordonnées, dans l'ordinateur, du spot détecté peut être transmis en tant que partie de ladite commande de double cliquage de souris; des moyens formant horloge (64B) pour contribuer à maintenir l'intervalle de cadencement entre des spots séquencés de la lumière (27B) de manière à faciliter une émulation optique de la souris d'ordinateur, lesdits moyens d'horloge (64B) incluant une horloge (64B,78B) de spot allumé et une horloge (64B,156B) de spot éteint; des moyens formant minuterie d'état activé (64B,178B) pour régler ladite horloge d'activation sur un intervalle de temps prédéterminé lorsque le spot détecté de la lumière de commande auxiliaire (27B) est détecté dans le réseau matriciel d'images de pixels définissant l'image primaire (24B), ladite horloge d'activation (64B,178B) étant réglée sur ledit intervalle de temps T pour contribuer à faciliter l'émulation optique du double cliquage commun de la souris d'ordinateur dans le dispositif, des moyens (42B,34B,40B) aptes à répondre auxdits moyens formant minuterie d'activation pour déterminer si le spot de lumière détecté (27B) s'est éteint avant que ledit intervalle de temps prédéterminé T se soit écoulé; des moyens formant minuterie d'arrêt (64B,156B) pour régler ladite horloge d'arrêt sur un intervalle de temps prédéterminé t lorsque le spot détecté de lumière (27B) s'est éteint; des moyens (64B) pour déterminer si un autre spot détecté de la lumière de commande auxiliaire (27B) réfléchie par la surface d'observation (22B) est détecté après que ledit intervalle de temps t prédéterminé s'est écoulé, et est disposé à l'intérieur d'au moins m (29B) emplacements de coordonnées de l'emplacement de coordonnée X mémorisé et à l'intérieur d'au moins. n (29B) emplacements de coordonnées de l'emplacement de coordonnée Y mémorisé; lesdits moyens formant minuterie d'activation (64B,78B) réglant ladite horloge d'activation (64B,178B) sur un autre intervalle de temps prédéterminé T lorsque l'autre spot de la lumière de commande auxiliaire est détecté dans le réseau matriciel d'images de pixels définissant l'image primaire (24B); lesdits moyens (42B,34B,40B) aptes à répondre auxdits moyens formant minuterie d'activation en déterminant si l'autre spot détecté de lumière s'est éteint ou non avant que ledit autre intervalle de temps T soit écoulé; lesdits moyens (42B) pour mémoriser des informations de coordonnées mémorisant d'autres emplacements de coordonnées suivant X et Y de l'appareil de prise de vues si les autres spots détectés sont le spot séquentiel suivant dans ladite commande de double cliquage de souris, lesdits autres emplacements de coordonnées X et Y si les autres spots détectés sont le spot séquencé suivant dans ladite commande de double cliquage de souris, ledit autre emplacement de coordonnées suivant X et Y de l'appareil de prise de vue étant déterminé comme étant à l'intérieur de m (29B) emplacements de coordonnées de l'emplacement de coordonnée X mémorisé précédemment et à l'intérieur de n (29B) emplacements de coordonnées de l'emplacement de coordonnée Y mémorisé antérieurement; lesdits moyens de modification (42,191B) servant à convertir l'emplacement de coordonnées X, Y actuellement mémorisées dans l'appareil de prise de vues, de l'autre spot détecté dans la lumière de commande auxiliaire en les coordonnées d'ordinateur correspondantes x, y de sorte que l'emplacement de coordonnée, dans l'ordinateur, de l'autre spot détecté peut être transmis en tant que partie de ladite commande de double cliquage de souris si l'autre spot détecté de la lumière de commande auxiliaire s'est éteint avant que ledit autre intervalle de temps prédéterminé T se soit écoulé et si l'autre spot de lumière a été disposé à l'intérieur d'au moins m (29B) emplacements de coordonnées de l'emplacement de coordonnée x mémorisé et à l'intérieur d'au moins m (29B) emplacements de coordonnées de l'emplacement de coordonnée Y mémorisé, ce qui a pour effet que lorsque la séquence de spots de lumière auxiliaire (27B) est détectée, une commande de double cliquage de souris est transmise.

**3.** Système d'entrée optique selon la revendication 2, caractérisé en outre en-ce que T est égal à environ 0,75 seconde et t est égal à environ 0,75 seconde.

**4.** Dispositif d'entrée optique selon la revendecation 2, caractérisé en outre en ce que des moyens de coordonnées relatives servant à déterminer si ledit spot de l'image de commande auxiliaire et ledit autre spot de l'image de commande auxiliaire sont tous deux apparus dans une zone donnée (29B) de la surface d'observation (22B).

**5.** Dispositif d'entrée optique selon la revendication 2, caractérisé en outre par :
des moyens formant connecteur (45B) pour connecter une pluralité d'unités d'entrée (26B,28B,10B) ayant des vitesses nettement différentes de communication à l'ordinateur central (12B), ledit ordinateur central (12B) possédant au moins deux vitesses de communication distinctes pour recevoir les informations depuis lesdites unités d'entrée; des moyens de commutation (28B,51B,52B), couplés auxdits moyens formant connecteur pour l'établissement sélectif d'un trajet de communication désigné entre l'ordinateur central (12B) et une de ladite pluralité d'unités d'entrée (26B,28B,10B); des moyens formant processeurs (42B) pour produire un signal de sélection pour amener lesdits moyens de commutation (28B, 51B, 52B) à établir un trajet de communication de données entre ledit ordinateur central (12B) et une seule de ladite pluralité d'unités d'entrée (26B, 28, 19B); et des moyens à algorithme (300B) disposés en partie dans les processeurs (42B) et en partie dans ledit ordinateur central (12B) pour amener ledit ordinateur central (12B) à recevoir des données à une certaine cadence parmi ces cadences de communication.

**6.** Procédé selon la revendication 1, caractérisé en outre par : un procédé (100A, 200A, 150A, 300A, 500A) pour commander une image vidéo projetée (24A) avec une lumière de commande auxiliaire (27A) projetée sur une surface d'observation réfléchissant l'image vidéo projetée (24A), caractérisé par :
la production d'un signal vidéo d'étalonnage brillant (35A) indicatif de la combinaison de l'image vidéo projetée (24A) et de la lumière ambiante pour faciliter la discrimination précise de l'image vidéo projetée (24A) par rapport à la lumière ambiante réfléchie par la surface d'observation (22A), ledit signal vidéo (35A) possédant une valeur minimale et une valeur maximale; la détermination (figures 7A-9A) de la valeur minimale dudit signal vidéo d'étalonnage brillant au-dessus dudit niveau donné de lumière ambiante (43A) pour faciliter l'élimination d'une partie dudit signal vidéo indicatif de la lumière ambiante; la mémorisation (42A) de la valeur minimale déterminée pour faciliter la modification dudit signal vidéo au-dessus dudit niveau donné de la lumière ambiante pour faciliter ensuite la réponse à la lumière de commande auxiliaire (27A) projetée sur la surface d'observation (22A); ajuster (42A, figure 9A) la valeur dudit signal vidéo d'étalonnage brillant depuis ladite valeur maximale jusqu'à une valeur inférieure, ladite valeur inférieure étant égale à la valeur maximale moins la valeur minimale mémorisée pour la production d'un signal vidéo modifié (35AA) indicatif uniquement de l'image vidéo projetée, ledit signal vidéo modifié possédant une valeur minimale et une valeur maximale; et l'ajustement (42A, figures 11A-12A) de la valeur d'un niveau de signal de référence (48A) devant être supérieur à ladite valeur inférieure pour distinguer un signal vidéo (69A) indicatif d'une image de lumière de commande auxiliaire (27A) provenant d'un signal vidéo indicatif de la combinaison d'une image vidéo projetée (24A) et d'une lumière ambiante pour faciliter une discrimination précise de la lumière de commande auxiliaire projetée (27A) à partir de la lumière d'image vidéo projetée (24A) réfléchie par la surface d'observation (22A); ce qui a pour effet que la lumière de commande auxiliaire (27A) peut commander l'image d'affichage projetée (24A) lorsqu'elle est projetée sur la surface d'observation (22A)

**7.** Dispositif d'entrée optique selon la revendication 2, comprenant en outre : un système (9A, 109A, 209A, 309A) pour étalonner un système d'entrée optique d'ordinateur (10A,110A,210A,310A) pour faciliter la modification d'une image vidéo (24A) produite par des moyens d'ordinateur et affichée par lesdits moyens d'affichage (12A) et projetée sur une surface d'observation (22A) par des moyens de projection (13A), caractérisé par :
des moyens de détection de lumière (34A) possédant un champ de vision (25A) qui est nettement supérieur à ladite image vidéo (24A) réfléchie par la surface d'observation (22A) et est montée pour se déplacer par rapport à la surface d'observation et aux moyens de projection (20A) de telle sorte que ledit champ de vision (25A) est à même de capter la totalité de l'image vidéo (24) réfléchie par la surface d'observation (22A) pour produire un signal d'information de lumière réfléchie (35A) indicatif des niveaux de luminance des images lumineuses réfléchies par la surface d'observation (22A); des moyens (28A) de traitement de signaux couplés à l'ordinateur (12A) et auxdits moyens de détection de lumière (34A) pour convertir ledit signal d'information de lumière réfléchie (35A) en une information de coordonnées d'ordinateur pour modifier l'image vidéo (24A) produite par les moyens formant ordinateur (12A); des moyens d'étalonnage de signaux (9A,39A, 109A,139A,239A,339A) pour ajuster de façon automatique l'amplitude du signal d'information de lumière et dudit signal d'information de lumière réfléchie (35A) pour différentes conditions d'éclairement ambiant pour permettre auxdits moyens (28A) de traitement de signaux de traiter de façon précise ledit signal (35A) de manière qu'il soit converti de façon fiable en une information de coordonnées d'ordinateur pour modifier l'image vidéo (24A) produite par les moyens d'ordinateur (12A); lesdits moyens d'étalonnage de signal (9A, 29A, 109A, 209a, 239A, 339A) servant à faciliter la comparaison de signaux indicatifs d'une pluralité d'images lumineuses possédant une pluralité de niveaux différents de luminance, qui sont réfléchis par la surface d'observation (22A), et des moyens formant microprocesseurs (42A,142A,242A,342A) pour commander lesdits moyens de discrimination (40A,140A,240A,340A) pour permettre la comparaison entre des images lumineuses indicatives de ladite image vidéo (24A) réfléchie par la surface d'observation (22A) et les images lumineuses indicatives de spots (26A), produits de l'extérieur, de la lumière de commande (27A) réfléchie par la surface d'observation (22A); les images lumineuses réfléchies indicatives de ladite image vidéo (24A) possédant des niveaux de luminance différents entre un niveau de luminance maximum et un niveau de luminance minimum.

**8.** Système selon la revendication 7, caractérisé en outre en ce qu'il comporte des moyens (42A) pour produire un signal vidéo d'étalonnage brillant (35A) indicatif de la combinaison de l'image vidéo projetée (24A) et de la lumière ambiante pour faciliter une discrimination précise de l'image vidéo projetée (24A) par rapport à la lumière ambiante réfléchie par la surface d'observation (22A), ledit signal vidéo (35a) possédant une valeur minimale et une valeur maximale; des moyens (42A, figures 7A-9A) pour déterminer la valeur minimale dudit signal vidéo d'étalonnage brillant (35A) au-dessus d'un niveau donné de lumière ambiante pour faciliter l'élimination d'une partie dudit signal vidéo indicatif de la lumière ambiante; des moyens (42A) pour mémoriser la valeur minimale déterminée pour faciliter la modification desdits signaux vidéo (35A) au-dessus dudit niveau donné de lumière ambiante pour faciliter ensuite la réponse aux spots de la lumière de commande (27A) projetée sur la surface d'observation (22A); des moyens (42A, figures 7A-9A) pour ajuster la valeur dudit signal vidéo d'étalonnage brillant depuis ladite valeur maximale jusqu'à une valeur inférieure, ladite valeur inférieure étant égale à la valeur maximale moins la valeur minimale mémorisée pour produire un signal vidéo modifié (35AA) indicatif de l'image vidéo projetée (24A) seule, ledit signal vidéo modifié (35AA) possédant une autre valeur minimale et une autre valeur maximale; et des moyens pour ajuster la valeur d'un signal de niveau de référence (48A) pour qu'il soit supérieur à ladite valeur inférieure afin de distinguer un signal vidéo indicatif d'une image de lumière de commande auxiliaire (27A) d'un signal vidéo indicatif de la combinaison de l'image vidéo projetée et de la lumière ambiante afin de faciliter la discrimination précise de la lumière de commande auxiliaire projetée (27A) par rapport à la lumière de l'image vidéo projetée (24A) réfléchie par la surface d'observation (22A); ce qui a pour effet que la lumière de commande auxiliaire (27A) peut commander l'image d'affichage projetée (24A), lorsqu'elle est projetée sur la surface d'observation (22A).

**9.** Système selon la revendication 7, caractérisé en outre par des moyens (29A,75A,76A,81A,139A,176A,239A, 276A,281A,339A) utilisant un signal, pour accroître l'amplitude du signal d'information de lumière réfléchie (35A) pour faciliter la discrimination parmi des signaux indicatifs de différentes images lumineuses réfléchies par la surface d'observation (22A); les images de lumière réfléchie indicatives de ladite image vidéo (24A) ayant des niveaux de luminance différents qui s'étagent entre un niveau de luminance maximum et un niveau de luminance minimum; et les images de lumière réfléchie indicatives de ladite lumière de commande (27A) possédant au moins deux niveaux de luminance différents (89A,89A) pour faciliter l'orientation de la lumière de commande (27A) en direction d'emplacements désirés dans l'image vidéo sans production dudit signal d'information de lumière réfléchie.

**10.** Système selon la revendication 9, caractérisé en outre en ce que les moyens de projection (20A) possèdent des propriétés optiques permettant la projection de l'image vidéo (24A) suivant un trajet optique particulier sur la surface d'observation (22A) pour être réfléchie par cette dernière; et ladite surface d'observation (22A) est disposée dans une pièce dans laquelle il existe une lumière ambiante; lesdites propriétés optiques des moyens de projection (20A) en combinaison avec la lumière ambiante et la distance à laquelle la surface d'observation (22A) est située par rapport aux moyens de projection (20A) amenant les images lumineuses réfléchies par la surface d'observation (22A) à posséder des niveaux de luminance maximum et minimum relatifs; lesdits moyens formant microprocesseur (42A) incluent des moyens (48A) pour produire un signal de niveau de référence et des moyens (43A,143A, 243A,343A) de production de niveaux de noir, pour faciliter plus encore la discrimination entre des signaux indicatifs de la différence d'images lumineuses réfléchies par la surface d'observation (22A); et lesdits moyens de discrimination (40A,140A,240A,340A) incluent des moyens comparateurs aptes à répondre audit signal de niveau de référence (48A) pour permettre la comparaison précise des différentes images lumineuses réfléchies par la surface d'observation (22A) par rapport à des conditions de lumière ambiante et aux propriétés optiques des moyens de projection (20A).

**11.** Système selon la revendication 10, caractérisé en outre en ce que lesdits au moins deux niveaux de luminance de différence incluent un niveau de luminance de positionnement, qui n'est pas traité comme étant indicatif d'un signal de commande pour modifier l'image vidéo, et un niveau de luminance de traitement, qui est traité comme étant indicatif d'un signal de commande pour modifier l'image vidéo.

**12.** Système selon la revendication 8, caractérisé en outre par des moyens pour produire une image de positionnement auxiliaire de faible intensité destinée à être projetée sur la surface d'observation pour faciliter la localisation, par un utilisateur, d'une partie désirée de l'image vidéo réfléchie par la surface d'observation; des moyens pour produire ladite image de lumière auxiliaire étant une image de commande auxiliaire de forte intensité destinée à être projetée sur la surface d'observation essentiellement au même emplacement que celui sur lequel ladite image de localisation a été projetée pour permettre au système d'entrée optique de détecter l'image de commande à des fins d'étalonnage; et des moyens de discrimination pour établir une distinction entre ledit signal indicatif de ladite image de commande, dudit signal de niveau de référence pour la commande d'affichage.

**13.** Système selon la revendication 12, caractérisé en outre par des moyens servant à amener l'image vidéo projetée à changer entre une image très brillante et une image très sombre pour faciliter la détermination des valeurs maximale et minimale dudit signal vidéo modifié par rapport à l'image projetée; et des moyens pour déterminer la valeur maximale dudit signal vidéo modifié pour faciliter la détermination d'une valeur dudit signal de niveau de référence suffisamment supérieure à la valeur d'un signal vidéo modifié indicatif de la combinaison de l'image de localisation de faible intensité et de l'image très brillante pour empêcher le système d'entrée optique de produire une information de commande auxiliaire en réponse au système détectant l'image de localisation sur la surface d'observation.

**14.** Système selon la revendication 13, caractérisé en outre par des moyens pour définir des valeurs limites nettes attendues de l'image vidéo projetées à des fins d'étalonnage; lesdites valeurs limites attendues étant indicatives d'une gamme de valeurs de hauteur et de largeur maximales et minimales d'images projetées possédant une intensité suffisante pour être détectée par le système d'entrée optique; des moyens pour déterminer les valeurs de largeur et de hauteur de l'image vidéo projetée détectée par le système d'entrée optique; des moyens pour comparer les valeurs de largeur et de hauteur déterminées de l'image vidéo projetée auxdites valeurs limites attendues pour déterminer si le système d'entrée optique est aligné physiquement avec la surface d'observation pour détecter l'ensemble de l'image vidéo projetée à partir de la surface d'observation; et ledit système d'entrée étant aligné lorsque les valeurs de largeurs et de hauteurs déterminées se situent dans la gamme respectivement des valeurs de largeurs et de hauteurs maximales et minimales attendues.

**15.** Dispositif d'entrée optique selon la revendication 2, comprenant en outre un agencement de projection d'images (10C,12C) incluant des moyens de projection (20A) pour diriger une image projetée (24C) sur une surface d'observation disante (22C), des moyens de détection de lumière (34C) pour détecter toutes les longueurs d'onde de lumière dans le spectre visible y compris l'image projetée réfléchie et la lumière ambiante, et un dispositif optique (16C) pour produire une image vidéo et un système (14C) pour commander le dispositif optique (16C) pour produire une image vidéo, l'agencement étant caractérisé par :

des moyens (26C) pour produire une image optique (27C) ayant une longueur d'onde optique prédéterminée et un niveau d'intensité donné pour modifier l'image projetée (24C); des moyens interposés (36C) entre la surface d'observation distante (22C) et les moyens de détection de lumière (34C) pour transmettre une lumière visible dans une bande étroite prédéterminée de longueurs d'onde optiques incluant uniquement l'image projetée réfléchie, la lumière ambiante et ladite image de commande optique; des moyens (30C,50C) de production de signaux aptes à répondre aux moyens de détection de lumière (34C) pour produire un signal électrique indicatif de la lumière visible possédant ladite bande étroite de longueurs d'onde; des moyens (50C,54C,56C,70AC,80AC) de modification de signaux aptes à répondre auxdits moyens de production de signaux pour déterminer un niveau de référence du niveau de noir pour contribuer à la production d'un signal électrique modifié indicatif de la lumière visible possédant ladite bande étroite de longueur d'onde et un niveau d'intensité maximum essentiellement égal à la combinaison du niveau d'intensité le plus faible de l'image projetée réfléchie par la surface d'observation, et le niveau d'intensité maximum de l'image de commande réfléchie par la surface d'observation (22C); des moyens (76C,D,56C) de production d'un niveau de référence apte à répondre audit signal électrique modifié pour déterminer un niveau de référence maximum de l'image vidéo, et un niveau de référence maximum de l'image de commande et pour établir un niveau de référence entre ledit niveau de référence maximum de l'image vidéo et ledit niveau de référence maximum de l'image de commande; des moyens de commande (14C,58C) aptes à répondre audit signal électrique pour produire un signal de commande indicatif d'une modification désirée de l'image projetée (24C), que le signal électrique soit supérieur ou non audit niveau de référence, ledit signal électrique étant en outre indicatif de la lumière visible dans ladite bande étroite de longueurs d'onde et possédant un niveau d'intensité maximum qui est au moins supérieur au niveau d'intensité maximum de l'image protégée réfléchie par la surface d'observation; et des moyens pour modifier l'image projetée en réponse audit signal de commande.

16. Dispositif selon la revendication 15, caractérisé en outre par :

des moyens d'atténuation optique (36C) pour transmettre uniquement ladite bande étroite de longueurs d'onde optiques pour faciliter la détection de ladite image de commande optique par lesdits moyens de détection optique (34C) de sorte que lesdits moyens de détection (34C) peuvent détecter une lumière reçue dans ladite bande étroite; lesdits moyens de détection de lumière (34C) produisant un signal électrique de sortie indicatif de la lumière possédant uniquement des longueurs d'onde situées essentiellement dans la bande étroite de longueurs d'onde optiques; des moyens différentiels (56C) aptes à répondre audit signal de sortie pour déterminer une valeur d'intensité différentielle de la lumière détectée par lesdits moyens de détection optique (34C); et des moyens de discrimination (56C, figures 6C-9C) pour détecter le moment où ladite valeur d'intensité différentielle dépasse une valeur de seuil positive et aussitôt après tombe au-dessous d'une valeur de seuil négative pour établir une discrimination par rapport à la lumière de l'image projetée réfléchie et d'une lumière extérieure de sorte que seules des images de commande de lumière auxiliaire peuvent être détectées.

17. Dispositif selon la revendication 16, caractérisé en outre en ce que ladite image d'alignement est une image de commande auxiliaire (27C).

18. Dispositif selon la revendication 16, caractérisé en outre par :

des moyens de montage connectés auxdits moyens de détection de lumière (34C) pour supporter ces moyens de manière qu'ils soient déplaçables de manière à permettre leur ajustement en position par rapport à une zone d'observation (25C) sur la surface d'observation (22C) de telle sorte que lesdits moyens de détection de lumière (34C) peuvent être alignés avec la zone d'observation (22C); une source de lumière (40C,44C) montée sur lesdits moyens de détection de lumière (34C) pour projeter une image d'alignement (46C) sur la zone d'observation (25C) de manière à faciliter l'ajustement desdits moyens de détection de lumière (34C) dans une position alignée; des moyens formant commutateur électrique (42C) couplés à ladite source de lumière (40C,44C) pour l'activer de manière à projeter l'image d'alignement (46C) d'une manière générale en direction de la zone d'observation (25C) de telle sorte que lesdits moyens de détection (34C) et ladite source de lumière (40C,44C) peuvent être déplacés d'une manière ajustable moyennant l'utilisation desdits moyens de montage jusqu'à ce que l'image d'alignement (46C) soit positionnée d'une manière générale sur une partie centrale de la zone d'observation (25C); lesdits moyens de détection de lumière (34C) étant correctement alignés avec la zone d'observation (25C) de manière à détecter optiquement l'ensemble de l'image projetée (24C).

19. Procédé selon la revendication 1, caractérisé en outre par : un procédé (70AC,80AC) d'utilisation d'un dispositif de commande optique auxiliaire (10C,26C) pour commander un système d'affichage à cristal liquide pour la projection d'une image (24C) sur une surface (22C), caractérisé par :

la réception (34C, 70AC, 80C) d'une lumière arrivante indicative d'une image projetée réfléchie, d'une image de commande auxiliaire réfléchie (24C) possédant une bande étroite de longueurs d'onde optique et une lumière extérieure incluant une lumière réfléchie et une lumière ambiante directe ayant des intensités différentes et des longueurs d'onde optiques différentes; l'envoi de l'image de commande de lumière auxiliaire (27C) possédant une bande étroite de longueurs d'onde sur la surface (22C) et l'image projetée (24C) de cette surface de manière à faciliter la discrimination de l'image de commande (27C) vis-à-vis de toutes les autres lumières; le filtrage optique (36C) pour la lumière arrivante, qui est reçu de manière à traverser uniquement ladite bande étroite de longueurs d'onde optique pour faciliter la détection de ladite image de commande auxiliaire (27C); la production (30C,50C) d'un signal de sortie électrique indicatif de la lumière possédant uniquement des longueurs d'onde situées essentiellement dans la bande étroite de longueurs d'onde optique; la détection (50C) du moment où une valeur d'intensité dépasse une valeur de seuil positive et essentiellement immédiatement ensuite diminue pour tomber au-dessous d'une valeur de seuil négative pour établir une discrimination vis-à-vis de la lumière d'image projetée réfléchie d'une lumière extérieure de sorte que seules les images de commande de lumière auxiliaire (27C) peuvent être détectées.

20. Procédé selon la revendication 19, caractérisé en outre par :

la détermination d'un niveau de référence de niveau de noir pour faciliter la production d'un signal électrique modifié indicatif de la lumière reçue possédant ladite bande étroite de longueurs d'onde et un niveau d'intensité maximum sensiblement égal à la combinaison du niveau d'intensité minimum de l'image projetée réfléchie par la surface et du niveau d'intensité maximum de l'image de commande réfléchie par la surface; la détermination d'un niveau de référence maximum de l'image vidéo et d'un niveau de référence maximal de l'image de commande; l'établissement d'un niveau de référence entre ledit niveau de référence maximum de l'image vidéo et ledit niveau de référence maximal de l'image de commande; la production (58C) d'un signal de commande indicatif d'une modification désirée de l'image projetée chaque fois que le signal électrique est supérieur audit niveau de référence, ledit signal électrique étant en outre indicatif d'une lumière visible dans ladite bande étroite de longueurs d'onde et possédant un niveau d'intensité maximum qui est au moins supérieur au niveau d'intensité maximum des images projetées réfléchies par la surface d'observation; et la modification de l'image projetée (24C) en réponse audit signal de commande.

21. Procédé selon la revendication 19, comprenant en outre un procédé d'étalonnage pour le système d'affichage à cristal liquide, caractérisé par :

l'utilisation du système d'affichage pour projeter une image vidéo d'étalonnage sur la surface; la détection d'une bande étroite prédéterminée de longueurs d'onde optique de la lumière réfléchie par la surface; la détermination de la valeur de l'intensité vidéo maximale des longueurs d'onde réfléchies de la lumière; la mémorisation de la valeur d'intensité maximale de cette lumière; l'établissement d'une valeur de niveau de référence à un niveau nettement supérieur à la seconde valeur d'intensité maximale mémorisée et nettement inférieur à la combinaison de la valeur de l'intensité vidéo maximale et d'une valeur maximale de la lumière de commande dirigée sur cette surface et réfléchie par l'image vidéo; ladite valeur d'intensité maximale vidéo étant la valeur de niveau maximum d'intensité uniquement de la partie de la lumière réfléchie par la surface, indicative d'une image vidéo projetée possédant des longueurs d'onde situées uniquement dans une gamme formée d'une bande étroite; ladite valeur de lumière de commande maximale étant la combinaison de la valeur de niveau d'intensité minimum uniquement de la partie de la lumière réfléchie par la surface, qui est indicative de ladite image vidéo projetée possédant des longueurs d'onde situées uniquement dans la gamme formée par la bande étroite, et la valeur d'intensité de lumière de commande maximale ayant des longueurs d'onde situées uniquement dans ladite gamme formée par la bande étroite, la lumière de commande étant réfléchie par la partie mentionnée en dernier lieu de ladite image vidéo projetée; et la production (58C) d'un signal de commande chaque fois que la valeur dudit signal de détection est supérieure à ladite valeur du niveau de référence, ledit signal de commande indicatif d'au moins un emplacement de coordonnée détecté de l'image vidéo servant à faciliter la commande du dispositif d'affichage.

22. Procédé selon la revendication 19, caractérisé en outre par :

l'utilisation de moyens de détection optique (34C); la détection optique (34C) d'une image projetée (24C), ladite image (24C) possédant des zones d'observation associées (25C) sur la surface (22C) pour la production de signaux de commande électrique pour la commande du système d'affichage; l'utilisation d'une source de lumière (40C,44C) pour la production d'une image d'alignement (46C); la projection de ladite image d'alignement (46C) sur la surface d'observation (25C) pour faciliter l'ajustement desdits moyens de détection optique (34C) sur une position alignée; l'activation de ladite source de lumière (40C,44C) pour projeter l'image d'alignement (46C) d'une manière générale en direction de la surface d'observation (22C) de telle sorte que lesdits moyens de détection (34C) et ladite source de lumière (46C) peuvent être déplacés d'une manière ajustable jusqu'à ce que l'image d'alignement soit positionnée d'une manière générale dans une partie centrale de la zone d'observation (22C); lesdits moyens de détection optique (34C) étant correctement alignés avec la zone d'observation (22C) pour détecter optiquement l'ensemble de l'image projetée (24C).

**Fig. 1A**

EP 0 625 276 B1

EP 0 625 276 B1

# Fig. 2A

52

## Fig. 3A

_39A_

_35A_

VIDEO IN

_35BA_

_75A_ DC RESTORATION AND NOTCH FILTER

_43A_ _43AA_
BLACK LEVEL

GAIN SELECT _47A_

_77A_ GAIN STAGE X50

_47A_

_78A_ GAIN STAGE X2

_79A_ GAIN STAGE X2

_76A_ GAIN STAGE X2

_80A_

ANALOG MULTIPLEX

_81A_

VIDEO OUT

_81AA_ _35AA_

## Fig. 4A

GAIN SELECT (DIGITAL) _135A_

_140A_

_142A_

_110A_

_109A_

VIDEO IN

BLACK LEVEL

_181A_ VARIABLE FEEDBACK

_178A_

_179A_

OP AMP

_182A_

_176A_

_135AA_ VIDEO OUT

_139A_

## Fig. 5A

GAIN SELECT (ANALOG) _235A_

_240A_

_242A_

_210A_

_209A_

VIDEO IN

BLACK LEVEL _243A_

_281A_ VOLTAGE CONTROLLED IMPEDANCE

_278A_

_279A_

OP AMP

_276A_

_282A_

_235AA_ VIDEO OUT

_239A_

## Fig. 6A

GAIN SELECT (ANALOG) _347_

_340A_

_342A_

_310A_

_309A_

_335A_

_364A_

_362A_

VIDEO IN

BLACK LEVEL _343A_

_363A_ VOLTAGE CONTROLLED FEEDBACK

FIXED FEEDBACK FOR HIGH GAIN

_352A_ _354A_

_355A_ _353A_

_35A_

OP AMP

_356A_

_351A_

_335AA_ VIDEO OUT

_339A_

53

**Fig. 7A**

VOLTS

VIDEO SIGNAL *35A*

BACKGROUND
AMBIENT NOISE

N

TIME

**Fig. 8A**

VOLTS

*35AA*

TIME

BLACK LEVEL REF *43A*

**Fig. 9A**

VOLTS

*35AA*

BLACK LEVEL REF *43A*

TIME

Fig. 10A

Fig. 11A

Fig. 12A

**Fig. 13A**

FORCE ALL
LIGHTS ON — *102A*

*100A*

SET GAIN OF VIDEO
TO MINIMUM AND
EXPOSURE TO MIN — *104A*

SET WIDEST FOUND
VIDEO LINE TO
ZERO WIDTH — *106A*

SET REFERENCE
LEVEL CLOSE
TO ZERO VOLTS — *108A*

BASED ON GAIN
SET STARTING
BLACK LEVEL — *110A*

DELAY AND THEN
START CAMERA SCAN — *112A*

SET RETURN POINT
FROM "CALL" TO "A" — *113A*

CALL
BLACK LEVEL
SET ROUTINE — *114A*

A — *116A*

SET REFERENCE
LEVEL NEAR MAXIMUM — *118A*

TO
B

# Fig. 14 A

**B**

*120A*

NO ← SCAN COMPLETE ?

YES

*122A*

YES ← ANY LIGHT FOUND AT CURRENT REF LEVEL?

NO

*124A*

LOWER REFERENCE LEVEL BY LARGE INCREMENT

*126A*

REF LEVEL BELOW MINIMUM PREDETERMINED VALUE? → YES → TO H

NO

*128A*

START CAMERA SCAN

TO B

*130A*

INCREASE REF LEVEL BY ONE LARGE INCREMENT

*132A*

START CAMERA SCAN ← C

TO D

**Fig. 15A**

**Fig. 16A**

E

FLASH SCREEN BLACK
AND BACK TO NORMAL — *148A*

*200A*

START CAMERA SCAN ← F

*202A*

NO ← SCAN
COMPLETE? — *204A*

YES

NO ← SPOT
FOUND? — *206A*

YES — *210A*

IS
SPOT WITHIN
MIDDLE OF CAMERA — YES → TO G
VIEWING AREA
?

NO

TURN ON OR OFF APPROPRIATE
LIGHT INDICATING
MOVEMENT DIRECTION — *212A*

PRESET TIME TO
"IN ALIGNMENT" — *214A*

TO F

ALL LIGHTS ON — *208A*

TO F

## Fig. 17A

G

HAS "IN-ALIGNMENT" TIMER FINISHED ? — 216A

NO → TO F

YES

FORCE DISPLAY TO DARK SCREEN — 218A

MAKE CHIRP SOUND — 220A

START CAMERA SCAN — 222A

SCAN COMPLETE? — 224A

NO

YES

SPOT STILL ON ? — 226A

YES

NO

TO AA

**Fig. 18A**

*150A*

( H )

SET FLAG INDICATING
EXPOSURE FOR
ALIGNMENT IS UNKNOWN — *302A*

TELL DISPLAY TO
CLEAR SCREEN — *304A*

SET CAMERA
EXPOSURE TIME
TO MINIMUM — *306A*

FORCE ALL LIGHTS ON ← ( I )
*308A*

SET GAIN OF
VIDEO TO MAXIMUM — *310A*

SET WIDEST FOUND
VIDEO LINE TO ZERO WIDTH ← ( J )
*312A*

SET REFERENCE LEVEL
CLOSE TO ZERO VOLTS — *314A*

BASED ON GAIN
SET STARTING
BLACK LEVEL — *316A*

DELAY AND THEN
START CAMERA SCAN — *318A*

( TO K )

## Fig. 19A

```
        ( K )

  SET RETURN POINT          ( L )
  FROM "CALL" TO "M"
                              320A

      CALL
   BLACK LEVEL
   SET ROUTINE
                   322A

      ( M )        324A

        IS
NO   THE EXPOSURE      326A
    FOR ALIGNMENT
      KNOWN?
        YES
                   328A
  LOWER THE BLACK LEVEL
    A FIXED AMOUNT       ( N )
    BASED ON GAIN

  SET AND OUTPUT
  REFERENCE LEVEL
  NEAR MAXIMUM        330A

  DELAY AND START
  CAMERA SCAN         332A

      TO
       O
```

# Fig. 20 A

O

SCAN COMPLETE? — *334A*
NO / YES

EXPOSURE ALREADY KNOWN ? — *336A*
YES / NO

IS VIDEO ABOVE REF LEVEL (COMPARATOR LIMIT)? — *338A*
YES / NO

LONGER EXPOSURE AVAILABLE? — *342A*
NO → TO T
YES

SET NEXT LONGER EXPOSURE — *344A*
→ TO J

SET FLAG INDICATING ALIGNMENT EXPOSURE IS KNOWN — *340A*
→ TO N

TO P

**Fig. 21A**

(P)

IS
VIDEO ABOVE
REF LEVEL
(CLIPPED)? — 350A

NO

YES

JUST
SCANNED WITH
LOWEST GAIN? — 352A

YES → (TO T)

NO

CHANGE TO NEXT LOWER
GAIN OF VIDEO PATH — 354A

(TO J)

AT
MAXIMUM
GAIN? — 360A

YES → (TO T)

NO

SET REF LEVEL FOR
MINIMUM HAYSTACK HEIGHT
FOR ALIGNING — 362A

START CAMERA SCAN ← (Q)

364A

(TO R)

**Fig. 22 A**

(R)

NO ← SCAN COMPLETE ? — 366A

YES

HAYSTACK OF LIGHT TOO LOW? — 368A
NO → (TO T)

YES

INCREASE TO NEXT HIGHER GAIN — 370A

SET WIDEST FOUND VIDEO LINE TO ZERO WIDTH — 371A

SET REFERENCE LEVEL CLOSE TO ZERO — 372A

BASED ON GAIN SET STARTING BLACK LEVEL — 373A

DELAY AND START CAMERA SCAN — 374A

SET RETURN POINT FROM "CALL" TO S — 375A

CALL BLACK LEVEL SET ROUTINE — 376A

65

**Fig. 23A**

S ── 377A

BASED ON GAIN DROP
THE BLACK LEVEL
A FIXED AMOUNT ── 378A

SET REF LEVEL OF
MIDPOINT OF STEP
= ZERO

T

SET SAVED STEP SIZE
= ZERO ── 380A

SET REF LEVEL FOR
BOTTOM OF STEP
= ZERO

SET REFERENCE LEVEL
NEAR ZERO VOLTS ── 382A

DELAY AND START
CAMERA SCAN ── 384A

DETERMINE EXTREMES
OF LIGHT
TOP, BOTTOM, LEFT, RIGHT ── 400A

NO ← SCAN
COMPLETE
? ── 386A

YES

ANY
LIGHT FOUND
AT REF LEVEL
? ── 388A

NO → TO W

YES

ARE
ALL 4 EDGES
ABOUT THE SAME AS
PREVIOUS
SCAN? ── 402A

YES → TO V

NO ── 403A

COMPUTE STEP SIZE

U

# Fig. 24A

U

JUST FINISHED A STEP IN LIGHT ? — 404A

NO

IS SCREEN SIZE FOR THE STEP OF LIGHT WITHIN MAX AND MIN — 406A

NO

IS THIS STEP THE SAME SIZE AS A SAVED STEP ? — 408A

YES

IS THIS STEP > A SAVED STEP ? — 410A

NO

YES

SAVE SIZE OF STEP AND REF LEVEL OF MIDPOINT OF STEP — 412A

SAVE CURRENT REF LEVEL AS POSSIBLE BOTTOM OF A STEP — 414A

416A

INCREASE REFERENCE LEVEL — V

REACHED TOP OF COMPARATOR RANGE? — 418A

NO — TO Q

YES

TO W

67

# Fig. 25A

# Fig. 26A

Y

IS CENTER OF LIGHT WITHIN SMALL RECTANGLE IN MIDDLE OF CAMERA? — 433A

YES

NO

TURN ON LIGHT(S) TO INDICATE DIRECTION OF MOVEMENT — 434A

PRESET TIMER UNTIL "IN-ALIGNMENT" — 435A

TURN OFF ALL LGHTS — 436A

NO ← HAS "IN-ALIGNMENT" TIMER FINISHED ? → YES → TO AA — 437A

Z → TURN ON ALL FOUR LIGHTS — 440A

DELAY SO LIGHTS WILL NOT FLASH TOO FAST — 441A

TO X

**Fig. 27A**

*300A*

(AA)

FORCE SCREEN TO WHITE — *442A*

FORCE ALL FOUR LIGHTS OFF — *443A*

SET CAMERA EXPOSURE TIME TO NORMAL (MIN) — *444A*

SET GAIN OF VIDEO TO MAXIMUM — *445A*

(FROM 459A) →

SET WIDEST FOUND VIDEO LINE TO ZERO WIDTH — *446A*

SET REFERENCE LEVEL CLOSE TO ZERO VOLTS — *447A*

BASED ON GAIN SET STARTING BLACK LEVEL — *448A*

DELAY AND THEN START CAMERA SCAN — *449A*

MAKE A CHIRP SOUND TO INDICATE "IN-ALIGNMENT" — *450A*

(TO BB)

70

## Fig. 28A

BB

SET RETURN FROM
"CALL" TO "CC" — *451A*

CALL
BLACK LEVEL
SET ROUTINE — *452A*

CC — *453A*

SET REF LEVEL
FOR MAXIMUM VIDEO
FOR SPOT — *454A*

START CAMERA SCAN — *455A*

SCAN
COMPLETE
? — *456A*   NO

YES

IS
HAYSTACK OF
LIGHT TOO HIGH
? — *457A*   NO   TO EE

YES

IS
LOWER GAIN
AVAILABLE
? — *458A*   NO   TO DD

YES

OUTPUT LOWER GAIN — *459A*

TO BB

71

# Fig. 29A

```
                    (DD)
                     │
                     ▼
        ┌─────────────────────────┐
        │    SET REF LEVEL        │──── 460A
        │    TO MAXIMUM           │
        └─────────────────────────┘
                     │
                     ▼
        ┌─────────────────────────┐      ┌────┐
        │   START CAMERA SCAN     │◄─────│ EE │
        └─────────────────────────┘      └────┘
                     │                  461A
                     ▼
                  ╱─────────╲
        NO       ╱   SCAN     ╲
        ◄───────│  COMPLETE    │──── 462A
        │        ╲     ?      ╱
        │         ╲─────────╱
        │              │ YES
        │              ▼
        │          ╱──────────╲
        │  YES    ╱    TOP      ╲
        ◄────────│ OF HAYSTACK   │──── 463A
        │         ╲ OF LIGHT FOUND╱
        │          ╲     ?      ╱
        │           ╲──────────╱
        │               │ NO
        │               ▼
        │      ┌─────────────────────┐
        │      │   LOWER REF LEVEL   │──── 464A
        │      └─────────────────────┘
        │               │
        │               ▼
        │           ╱──────────╲
        │          ╱    REF      ╲      NO      ┌────┐
        │         │  LEVEL AT     │───────────►│ TO │
        │          ╲  MINIMUM    ╱              │ EE │
        │           ╲    ?     ╱                └────┘
        │            ╲────────╱            465A
        │               │ YES
        │               ▼
        │      ┌─────────────────────┐
        └─────►│  FORCE DISPLAY TO   │──── 466A
               │    DARK SCREEN      │
               └─────────────────────┘
                        │
                        ▼
               ┌─────────────────────┐
               │  SAVE REF LEVEL FOR │──── 467A
               │ TOP OF HAYSTACK FOR │
               │   A WHITE SCREEN    │
               └─────────────────────┘
                        │
                        ▼
                     ┌────┐
                     │ TO │
                     │ FF │
                     └────┘
```

**Fig. 30A**

FF

START CAMERA SCAN — *468A*

SCAN COMPLETE ? — *469A*
NO
YES

TOP OF HAYSTACK FOR A DARK SCREEN FOUND? — *470A*
YES
NO

LOWER REF LEVEL — *471A*

REF LEVEL AT MINIMUM? — *472A*
NO → TO FF
YES

FORCE DISPLAY TO NORMAL — *473A*

IS DISPLAY TYPE WITHIN TABLE ? — *474A*
NO
YES

FROM TABLE RETRIEVE FACTOR I AND FACTOR 2 — *475A*

COMMUNICATION WITH DISPLAY TO RETRIEVE FACTOR I AND FACTOR 2 — *476A*

COMPUTE REF LEVEL VOLTAGE — *477A*

TO GG

# Fig. 31A

Flowchart:

GG

478A — REF LEVEL TOO HIGH?

NO →

YES ↓

479A — FORCE DISPLAY TO A WHITE SCREEN

↓

480A — LOWER GAIN AVAILABLE ?

NO →

YES ↓

481A — OUTPUT LOWER GAIN

↓

TO BB

482A — FORCE REF LEVEL FOR SPOT AT MAXIMUM

↓

483A — SET REFERENCE LEVEL TO COMPUTED VALUE

484A — SOUND CHIRP, SHORT BEEP, CHIRP, SHORT BEEP

↓

485A — GO CALIBRATE FOUR CORNERS OF SCREEN

# Fig. 32A

*500A*

502A — (I)

NO ← **SCAN COMPLETE?** — 504A

YES

NO ← **IS WIDEST LINE THIS SCAN>SAVED WIDEST LINE?** — 506A

508A

YES

**SAVE THIS NEW WIDER LINE AND CURRENT BLACK LEVEL**

512A

NO ← **IS CURRENT WIDEST LINE<SAVED LINE-K?**

513A

YES — (2)

**OUTPUT SAVED BLACK LEVEL FOR WIDEST LINE**

**RETURN TO DESIRED POINT** — 517A

**START SCAN** — 515A

**DROP BLACK LEVEL BY A CONSTANT BASED ON GAIN** — 514A

YES ← **IS BLACK LEVEL BELOW MINIMUM?** — 516A

518A

NO

**OUTPUT BLACK LEVEL** ← (4)

**DELAY AND START SCAN**

520A — (TO 1)

**IS SAVED WIDEST BLACK LINE>O ?** — YES

522A

NO → (TO 2)

524A

NO ← **IS CONSTANT TO DROP BLACK LEVEL BY<2?**

YES

**FORCE BLACK LEVEL OUTPUT TO MINIMUM** — (TO 2)

526A

**DROP CONSTANT÷2 SET BLACK LEVEL BACK TO MAX.**

528A — (TO 4)

75

## Fig. 33A

VOLTS

MIN. REF
LEVEL VOLTAGE
(b + c)

*98A*

A722 DISPLAY

A822 DISPLAY

*99A*

CONTRAST (b-d)

## Fig. 34A

VOLTS

COMPUTED REF. VOLTAGE
$y=b+c$

$c=b-d$

$y-d$

*68A* *60A* *69A*

*6IA*

b

d

TIME

y

## Fig. 35A

*90A*

*93A*

*95A*

CONTROL
AND
DRIVING
CIRCUIT

*87A*

*89A*

*85A*

*94A* *86A*

*26A*

Fig. 1B

EP 0 625 276 B1

# Fig. 2B

**Fig. 4B**

START *152B*

*154B*
SET SAVED SPOT
ON POSITION
TO NONE

SET SPOT ON/OFF
FLAG OFF, CLEAR SPOT TIMER

*156B*

START SCAN

*158B*

SCAN COMPLETE ? *160B*
NO
YES

SPOT DETECTED ? *162B*
YES — GO TO I
NO

WAS SPOT ON/OFF FLAG OFF? *164B*
NO — GO TO 2
YES

OFF TIME+I

GO TO 3 *166B*

I

WAS SPOT ON/OFF FLAG ON? *172B*
YES
NO

CLEAR "ON" TIMER *174B*

ON TIME+I *176B*

SET SPOT ON/OFF FLAG ON *178B*

ON TIME>.75 SEC. ? *180B*
NO
YES

SET MOVE FLAG TO ALLOW MOVEMENT NEAR SAVED SPOT ON POSITION *182B*

IS MOVE FLAG SET? *184B*
YES
NO

STORE CURRENT SPOT POSITION TO SAVED POSITION *189B*

IS SAVED POSITION NEAR POSITION CURRENT? *186B*
YES

GO TO B

GO TO D

GO TO C

**Fig. 3B**

*150B*

| Fig. 4B | Fig. 5B |
|---------|---------|

Fig. 5B

**Fig. 7B**

**Fig. 6B**

# Fig. 8B

**Fig. 9B**

START — 501B

SET SAVED POSITION=NONE
SET FLAG DISABLING BELOW
SCREEN DOUBLE CLICK — 502B

START
CAMERA SCAN — 504B

B

SCAN
COMPLETE
? — 506B

SPOT
OF LIGHT
FOUND? — 508B

TO
B

IS
SPOT BELOW
PROJECTED
IMAGE? — 510B

SAVE POSITION — 520B

IS
BELOW SCREEN
DOUBLE CLICK
ENABLED? — 512B

TO
B

SET FLAG ENABLING
BELOW SCREEN
DOUBLE CLICK — 522B

SET FLAG DISABLING
BELOW SCREEN
DOUBLE CLICK — 514B

TRANSMIT
NEW POSITION — 524B

TRANSMIT AT SAVED
POSITION BUTTON
DOWN, UP, DOWN, UP — 516B

TO
B

TO
B

500B

83

EP 0 625 276 B1

# Fig. 10B

START — 302B

CALIBRATED ? — 303B
NO
YES

2

AUXILIARY LIGHT IMAGE ? — 304B
NO
YES

HAS DMUX AND SMUX BEEN ASSERTED ? — 305B
NO → ASSERT DMUX AND SMUX — 307B
YES

IS AUX. LIGHT MOVED OR NEW? — 306B
NO → GO TO I
YES

WAIT FOR DATA AVAILABLE ? — 370B
NO
YES

SEND AUX. INFORMATION TO HOST COMPUTER — 372B

GO TO 2

I

INFO TRANSMITTED ? — 374B
NO
YES

NEGATE DMUX AND SMUX — 376B

CALL INTERRUPT SUBROUTINE

CALL INTERRUPT SUBROUTINE — 309B

300B

84

OPTICAL AUXILARY INPUT PORT

CYCLOPS Port

MOUSE Port

Host Computer

FIG 11B

EP 0 625 276 B1

Fig. 1C

**Fig. 2C**

**Fig. 3C**

# Fig. 4C

```
        ┌─────────────────┐
        │   LINE_CT = 0   │
        │   LINE = N      │──── 70C
        └─────────────────┘
                 │
                 ▼
    71C ──◇ VSYNC ? ──NO──┐
           │ YES          │
           ▼              │
    72C ──◇ HSYNC ? ──NO──┤
           │ YES          │
           ▼              │
    ┌──────────────────────┐
    │ LINE_CT ← LINE_CT + 1 │──── 73C
    └──────────────────────┘
                 │
                 ▼
   NO──◇ LINE_CT = N ? ──── 74C
           │ YES
           ▼
    ┌──────────────────┐
    │  GET PIXEL DATA  │──── 75C
    └──────────────────┘
                 │
                 ▼
    ┌──────────────────┐
    │PROCESS LINE DATA │──── 76C
    └──────────────────┘

70AC
```

**Fig. 5C**

(FROM 75
FIG. 4C)

GET PIXEL DATA
START

75C

SAMPLE_CT = 0
Y = 0
PTR = BUFF

80C

HORIZ
DISPLAY
SIGNAL?

81C

NO

YES

X = ADC SAMPLE

82C

$D = Y - X$

83C

$(PTR) \leftarrow D$
$PTR \leftarrow PTR + 1$

84C

$Y \leftarrow X$

85C

$SAMPLE\_CT \leftarrow SAMPLE\_CT + 1$

86C

SAMPLE_CT
= MAX
?

87C

NO

YES

80AC

DONE
GO TO 76C

## Fig. 6 C

## Fig. 7C